# EUROPEAN PATENT APPLICATION

(11) **EP 1 718 024 A1**
(43) Date of publication of application: **02.11.2006**
(21) Application number: 06013365.9
(22) Date of filing: 28.09.2001
(51) Int. Cl.: H04L 29/06, H04Q 7/38

(54) **Handover method and routing node for a packet network**

(30) Priority: 27.04.2001 JP 2001133330; 08.06.2001 JP 2001174698
(62) Divisional of application: 01122678.4
(71) Applicant: Fujitsu Ltd., Kawasaki-shi, Kanagawa 211-8588 (JP)
(72) Inventor: Ono, Hideaki, Kawasaki-shi Kanagawa 211-8588 (JP); Kato, Tsuguo, Kawasaki-shi Kanagawa 211-8588 (JP); Takechi, Ryuichi, Kawasaki-shi Kanagawa 211-8588 (JP); Nakatsugawa, Keiichi, Kawasaki-shi Kanagawa 211-8588 (JP); Tamai, Akiko, Kawasaki-shi Kanagawa 211-8588 (JP); Oka, Kazuyuki Fujitsu Communication Sys. Ltd., Yokohama-shi Kanagawa 222-0033 (JP)
(74) Representative: HOFFMANN EITLE

(57) **Abstract**

A handover method for a packet network, which includes a mobile terminal (MN) and a plurality of routing nodes, for changing a packet transfer route to the mobile terminal upon movement of the mobile terminal, wherein a particular node (HA) from among the routing nodes manages a plurality of kinds of terminal position information involved in the movement of the mobile terminal, and the particular node identifies a packet type of a received packet destined for the mobile terminal, selects one of the plurality of kinds of terminal position information in response to the identified packet type, and routes the received packet based on the selected terminal position information.

## Description

### BACKGROUND OF THE INVENTION

### 1) Field of the Invention

This invention relates to a packet transfer method for a hierarchical packet network, a hierarchical packet communication system, and a gate node, an edge node and a mobile terminal for use with the hierarchical packet communication system as well as a handover method and a routing node for a packet network, and more particularly to a technique suitable for use with a packet network which complies with the MIPv6 (Mobile Internet Protocol version 6) or the like.

### 2) Description of the Related Art

In recent years, the "MIPv6" has been proposed as a system for managing the position of a mobile terminal (which may be hereinafter referred to merely as "terminal") such as a portable telephone set on the Internet Protocol (IP) in the IETF (Internet Engineering Task Force).

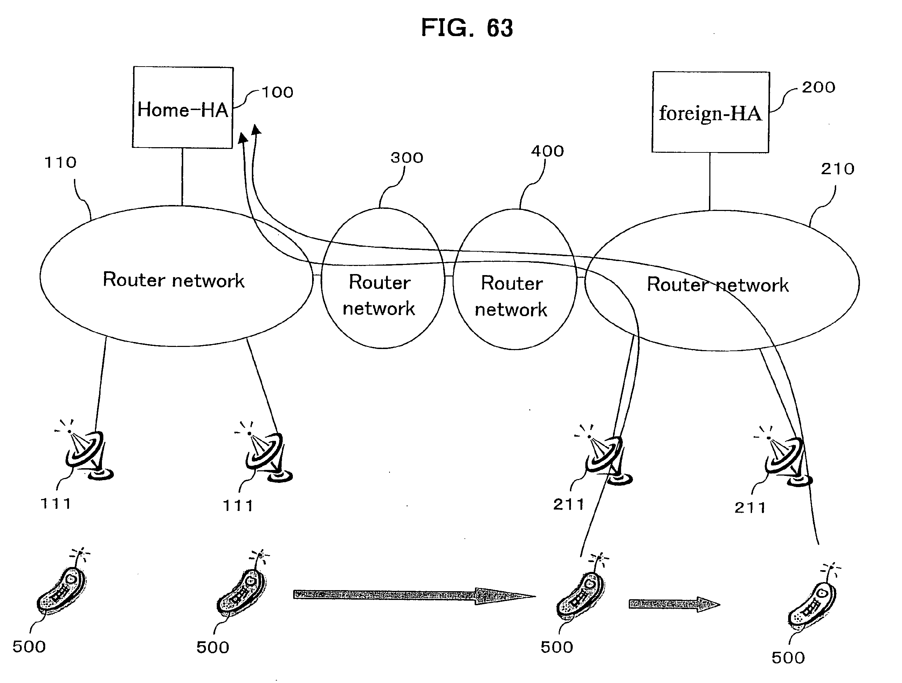

An example of a packet communication system which complies with the "MIPv6" is shown in FIG. 63. Referring to FIG. 63, in the system shown, a home agent (HA) node 100 which is managed by an ISP (Internet Service Provider) or the like (hereinafter referred to merely as "provider") which administrates a router network (packet network) 110 manages the current position of a mobile terminal (which may be hereinafter referred to as "home terminal" or "subscriber terminal") 500 of a subscriber of a packet transfer service provided by the provider.

Similarly, another HA node 200 [HA node of a foreign network 210 as viewed from the HA node 100 side] managed by a provider different from the provider of the HA node 100 (router network 110) manages the current position of a subscriber terminal in the foreign network 210. It is to be noted that reference numerals 300 and 400 denote repeating router networks interconnecting the router networks 110 and 210.

The current position management of the subscriber terminal 500 described above is particularly carried out such that, when the subscriber terminal 500 exists in the subscriber router network (home network) 110, information called COA (Care of Address) and representative of in the resident zone of which node the subscriber terminal 500 itself is currently positioned (in short, a node of the destination of connection of the subscriber terminal 500) based on an IP address of the nearest access node 111 (resident node; last hop router of a packet having a function as a radio base station), which can be accessed from the current position of the subscriber terminal 500, included in information [a router advertisement message] advertised (reported) from the access node 111, and the information is reported to the HA node 100.

On the other hand, when the subscriber terminal 500 is present in the non-subscriber router network (movement destination network) 210 (i.e., during "roaming") as a result of movement thereof, the subscriber terminal 500 produces a COA based on an IP address of the nearest access node 211 of the foreign network 210 included in an RA received from the access node 211 and reports the COA to the HA node 100 of the home network 110 through the router networks 210, 300 and 400.

In short, the subscriber terminal 500 produces a new COA and carries out updating registration of the current position into the HA node 100 of the home network 110 every time the IP address included in a received RA changes and the nearest access node 111 or 211 changes as a result of movement of the subscriber terminal 500.

Consequently, even when the subscriber terminal 500 is positioned in the non-subscriber network 210 (during "roaming"), the HA node 100 can deliver a packet destined for the subscriber terminal 500 correctly to the subscriber terminal 500 by successively encapsulating packets destined for the subscriber terminal 500 (adding a header whose destination address is the COA to the packets destined for the subscriber terminal 500) and transferring the packet to the current position updated and registered then. As a result, normal mobile communication can be achieved.

It is to be noted that position registration into an HA node 200 by a subscriber terminal of the foreign network 210 is carried out in accordance with a procedure similar to that described above.

With such a position registration procedure as described above, however, since a terminal must normally perform position registration into an HA node 100 or 200 every time the nearest access node changes as a result of movement of the terminal, a packet transfer delay occurs in accordance with the distance between the current position and the HA node 100 (or 200). Therefore, the position registration procedure is not suitable for high speed handover. Further, the position registration procedure gives rise to an increase in traffic amount in the router networks 210, 300, 400 and 110 from the access node 211 (or 111) to the HA node 100 (200).

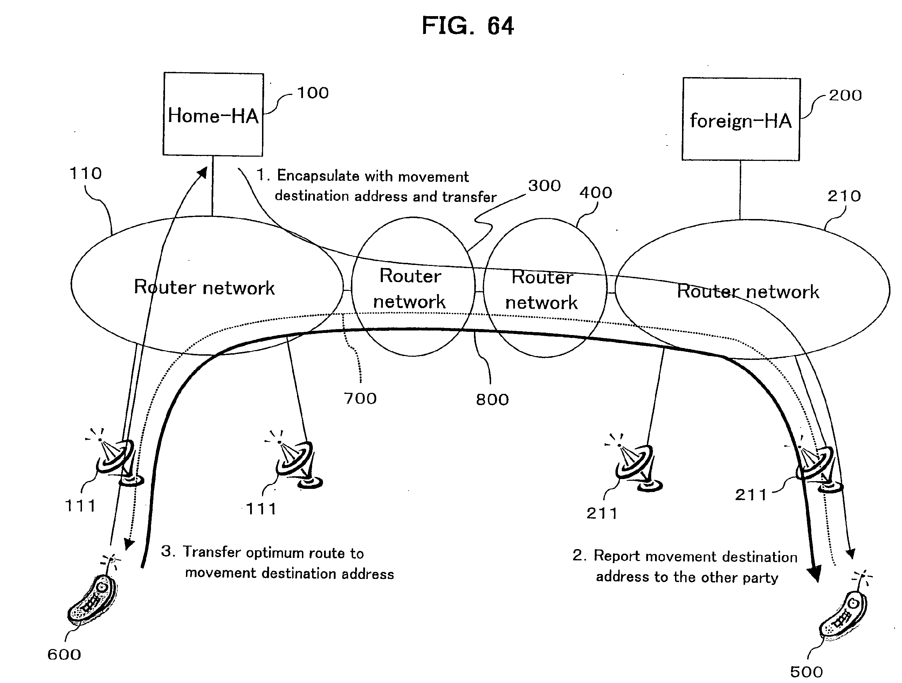

It is to be noted that, after communication between a subscriber terminal (hereinafter referred to as subscriber terminal) 500 during roaming and the other party terminal 600 (which may be a mobile terminal or a stationary terminal) in the system described above is started, for example, as seen in FIG. 64, the roaming terminal 500 reports a current COA to the other party terminal 600 (refer to a broken line arrow mark 700) similarly as in position registration into the HA node 100 to achieve "route optimization". In short, the other party terminal 600 receives the current COA directly from the subscriber terminal 500 and can therefore transmit a packet directly to the COA without passing the HA node 100 (refer to a solid line arrow mark 800).

Also in this instance, however, if the subscriber terminal 500 moves and the nearest access node 211 changes, then since the subscriber terminal 500 must report a new COA to the other party terminal 600 every time, the handover quality is influenced by a packet transfer delay depending upon the distance to the other party terminal 600. Therefore, the position registration procedure is not suitable for high speed handover after all.

In this manner, in such a normal "MIPv6" network (packet communication system) as shown in FIG. 63, when the roaming terminal 500 moves in the router network 210 of the roaming destination, position registration into the HA node 100 occurs every time the subscriber terminal 500 moves (more accurately, every node the nearest access node changes), and communication quality deterioration upon handover occurs. In order to moderate the problem just described, also a system [Hierarchical MIPv6] wherein router networks are formed hierarchically such that, upon movement within the same hierarchical layer, position registration into an HA node is not required has been proposed in recent years.

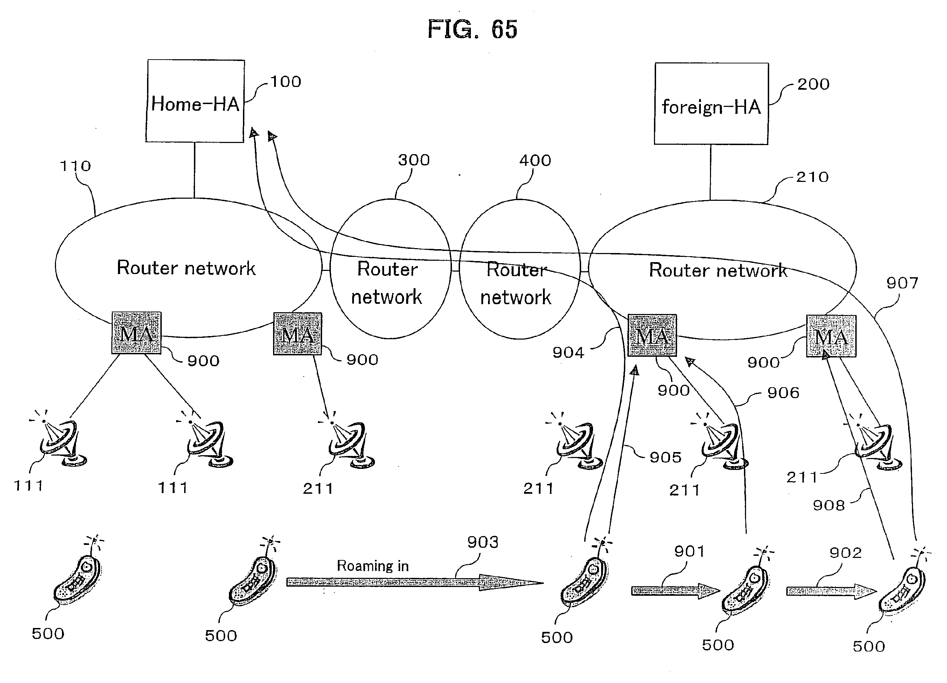

An example of a packet communication system which complies with the hierarchical MIPv6 (hereinafter referred to as "HMIPv6") is shown in FIG. 65. Referring to FIG. 65, a gate node (MA; Mobility Agent) 900 provides a gate function to a mobile terminal 500. As seen in FIG. 65, each of such MAs 900 accommodates one or more access nodes to achieve a hierarchy in a unit of an MA 900 of the router network 110 or 210.

Then, if a subscriber terminal 500 whose home network is the router network 110 moves (roams) from the home network 110 to (into) the router network 210 of the roaming destination (refer to an arrow mark 903), then the terminal 500 receives a router advertisement (RA) message (which may be hereinafter referred to simply as "router advertisement") from the nearest MA 900 and produces two addresses including a local IP address (called "PCOA") which is used under the MA 900 and another IP address (called "VCOA") which can reach the MA 900 from the HA node 100.

Thereafter, the terminal 500 reports the "VCOA" to the HA node 100 to register the current position (refer to an arrow mark 904) and reports the "PCOA" to the MA 900 to register the current position also into the MA 900 (refer to an arrow mark 905). Thereafter, when the terminal 500 moves under the MA 900 (refer to an arrow mark 901), it performs position registration only into the MA 900 (refer to an arrow mark 906) but does not perform position registration into the HA node 100. However, if the subscriber terminal 500 moves to a district of a different MA 900 (refer to an arrow mark 902), then it performs position registration into both of the MA 900 of the destination of the movement and the HA node 100 (refer to arrow marks 907 and 908). It is to be noted that, also when the terminal 500 is positioned within the home network 110, if it moves crossing different MAs, then it performs position registration into both of the MA 900 of the destination of the embodiment and the HA node 100 every time.

In short, in the packet communication system which complies with the "HMIPv6" (such a system is hereinafter referred to as hierarchical packet communication system), when the terminal 500 moves within the same MA 900, it does not change over the registration destination (MA 900) of the current position of the terminal 500 itself. Accordingly, the packet communication system can achieve higher speed handover than that of the normal system described hereinabove with reference to FIGS. 63 and 64.

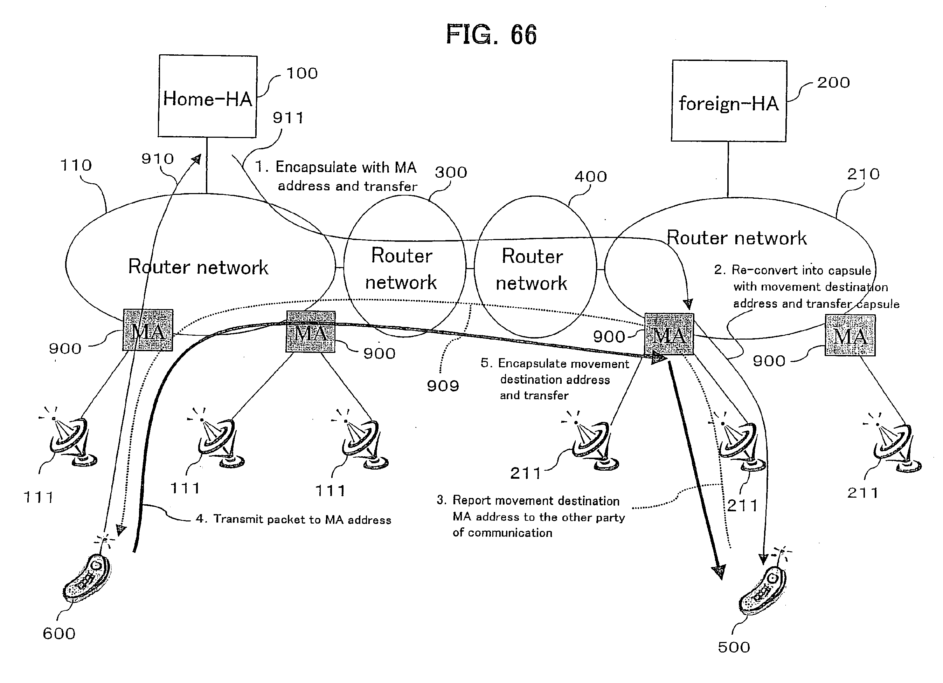

It is to be noted that, also in the hierarchical packet communication system, where such "route optimization" as described above is performed, only it is necessary for the roaming terminal 500 to report a current "VCOA" to the other party terminal 600 after it starts communication with the other party terminal 600 as illustrated in FIG. 66 (refer to a broken line arrow mark 909).

In particular, a packet transmitted from the other party terminal 600 first to the terminal 500 is received once by an HA node 100 (refer to an arrow mark 910) and encapsulated with a "VCOA" (MA address) and routed to the MA 900 by the HA node 100, and then the packet is encapsulated with a "PCOA" (movement destination address) by the MA 900 and routed to the pertaining access node 211 to start communication between the other party terminal 600 and the roaming terminal 500. Thereafter, the roaming terminal 500 reports the "VCOA" (address with which the packet can reach the MA 900) to the other party terminal 600 to allow the other party terminal 600 to transmit the packet to the "VCOA" . Consequently, the packet can reach the MA 900.

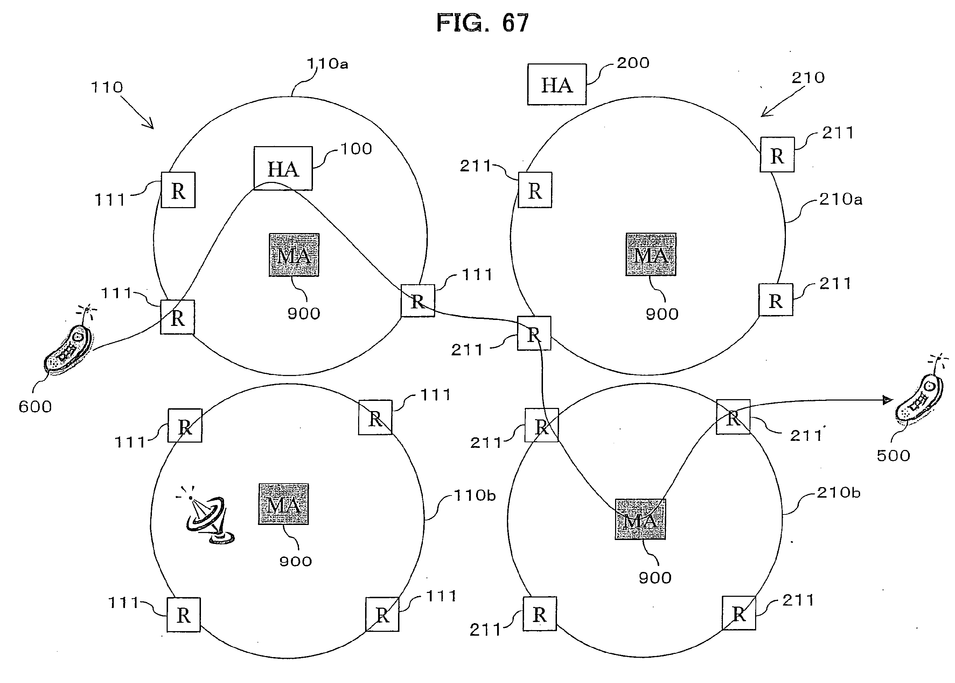

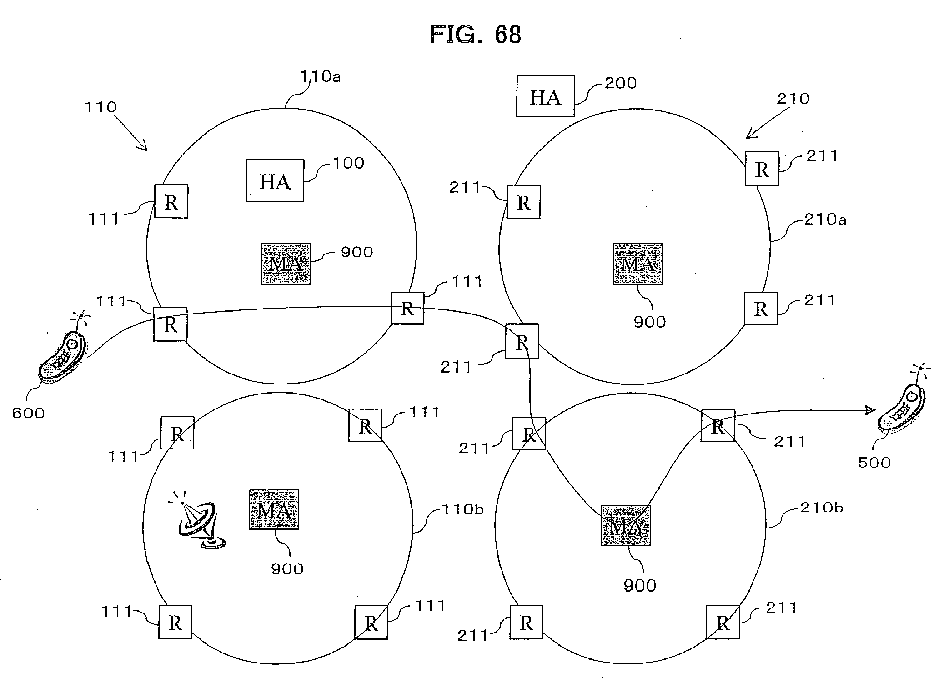

Also in this instance, however, if the MA 900 changes (the "VCOA" changes) as a result of movement of the roaming terminal 500, then the roaming terminal 500 must report the new "VCOA" to the other party terminal 600 again every time. It is to be noted that an example of a packet transfer route from the other party terminal 600 to the roaming terminal 500 before the "route optimization" is shown in FIG. 67 while an example of a packet transfer route from the other party terminal 600 to the roaming terminal 500 after the "route optimization" is shown in FIG. 68. It is to be noted that, in FIGS. 67 and 68, reference characters 110a and 110b (210a and 210b) denote hierarchical networks controlled by the MAs 900, and it is shown that a home network 110 (movement destination network 210) is formed from the hierarchical networks 110a and 110b (210a and 210b).

As can be recognized from FIGS. 67 and 68, in the hierarchical packet communication system, the route to the MA 900 in which the subscriber terminal 500 has a position registration (has reported its "PCOA") is optimized so as to always have the minimum distance by reporting the "VCOA" to the HA node 100 (in other words, in the "route optimization" in the hierarchical packet communication system, the route inevitably passes at least one MA 900).

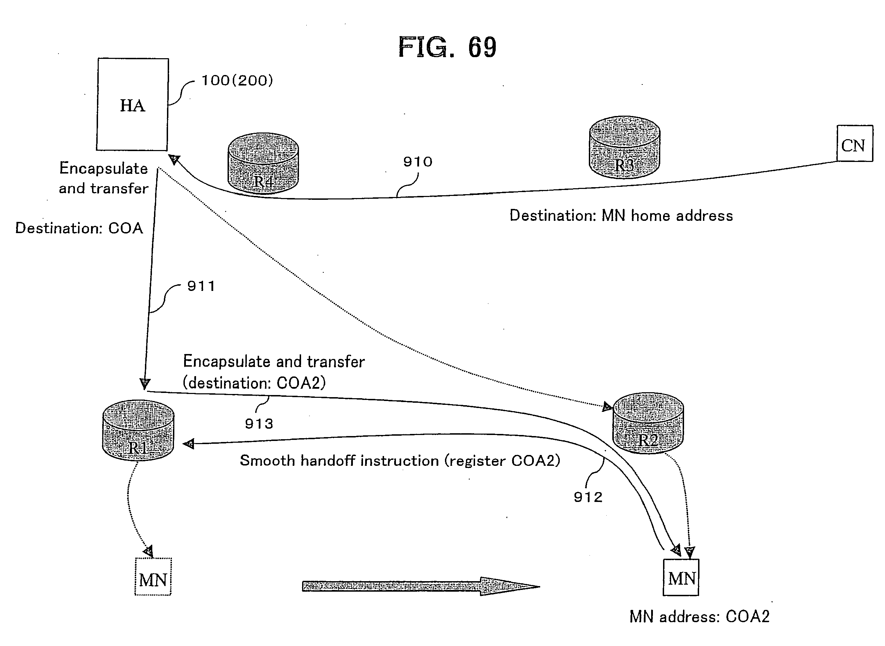

One of conventional handover methods for a "Mobile-IP" network is a method called "smooth handover". The smooth handover is realized by issuing, for example, as schematically illustrated in FIG. 69, when a new "COA2" is produced because a terminal 500 moves and the connection destination router of the terminal 500 changes from a router "R1" to another router "R2" while "COA1" is registered in the HA 100 (200), a request to transfer a packet to the new "COA2" (register "COA2") (this is called smooth handoff instruction; refer to an arrow mark 912) not to the HA 100 (200) but to the connection destination router "R2" prior to the movement.

In particular, referring to FIG. 69, if the router "R1" which has received the "smooth handoff instruction" (into which "COA2" has been registered by the terminal 500) receives a packet having been transmitted from the other party terminal (CN; Corresponding Node) 600 and transferred in an encapsulated form destined for the "COA1" by the HA 100 (200) (refer to arrowmarks 910 and 911), then it further encapsulates the received packet so as to be destined for the "COA2" and transfers the packet.

Consequently, the packet arriving at the old route (router "R1") during communication of the terminal 500 is transferred to the new "COA2" in accordance with the "smooth handoff instruction" (refer to an arrow mark 913), and the terminal 500 can smoothly continue the communication with the other party terminal 600. It is to be noted that, after the COA of the HA 100 (200) is updated, encapsulation of a received packet so as to be destined for the latest COA is performed by the HA 100 (200), and the packet arrives at the terminal 500 through the new connection destination router "R2" from the HA 100 (200).

With the hierarchical packet communication systems described above with reference to FIGS. 65 to 68, however, although the handover time is reduced, the route optimization which can be achieved with the normal packet communication system cannot be achieved because the hierarchical packet communication system involves the limitation to a route in that a packet must pass the MA 900 being currently used (in which the terminal has a position registration) without fail. In other words, in the hierarchical packet communication system, the "route optimization" is performed only up to the MA 900. Therefore, packets arrive in a concentrated manner at a particular MA 900, and a high processing load is applied to the MA 900.

Further, also in the hierarchical packet communication system, when a terminal 500 moves crossing two MAs 900, it must perform position registration into an HA node 100 of the router network 110, and therefore, time is required for handover similarly as in a normal (nonhierarchical) packet communication system. Therefore, the hierarchical packet communication system is not suitable for high speed handover.

Furthermore, in the handover technique described above, the same operation is performed for any type of packet. Generally, the characteristic for which a packet requires a network is different depending upon what host application data are carried by the packet. For example, where a voice packet is handed over, the delay must be suppressed small in order to maintain a high quality, but some packet loss can be permitted. On the other hand, where a data packet is handed over, packet loss gives rise to a re-sending process of host application data and has a significant influence on the communication quality, but some transfer delay is permitted.

Although the requirement for a network is different depending upon the packet type (for example, a voice packet, a data packet or the like) in this manner, in conventional handover schemes, usually one technique is applied fixedly to a network, and different handover methods for different conditions have not been applied to the same network. As a result, only a handover technique tuned only for voice or for data communication can be adopted, and requirements for both of them cannot be satisfied flexibly.

### SUMMARY OF THE INVENTION

It is an object of the present invention to provide a hierarchical packet communication system which allows both of high speed handover and route optimization which is free from limitation in terms of a packet transfer route.

It is another object of the present invention to provide a hierarchical packet communication system wherein a handover technique can be changed in response to a type of a received packet to achieve handover optimum to the type of the received packet.

In order to attain the objects described above, according to an aspect of the present invention, there is provided a packet transfer method for a hierarchical packet network which includes a plurality of edge nodes capable of communicating with a mobile terminal to transmit or receive a packet to or from the mobile terminal and a gate node capable of managing current position information of the mobile terminal and routing a packet destined for the mobile terminal based on the current position information to a resident edge node from among the edge nodes with which the mobile terminal can communicate from a current position thereof, wherein the gate node reports the current position information of the mobile terminal managed by the gate node as cache information to a communicating edge node from among the edge nodes which routes a packet destined for the mobile terminal to the gate node, and the communicating edge node performs routing of a packet destined for the mobile terminal to the resident edge node based on the cache information in place of the gate node.

Each of the edge nodes may transmit report information at least including gate node identification information of the gate node in which the edge node is accommodated and network identification information of the hierarchical packet network to the mobile terminal, and, even if the gate node identification information included in the report information exhibits a change upon movement of the mobile terminal itself, the mobile terminal may maintain a destination of registration of the current position information of the mobile terminal itself at the gate node if the network identification information does not exhibit a change upon the movement of the mobile terminal itself.

According to another aspect of the present invention, there is provided a hierarchical packet communication system, comprising a plurality of edge nodes capable of communicating with a mobile terminal to transmit or receive a packet to or from the mobile terminal, and a gate node capable of managing current position information of the mobile terminal and routing, based on the current position information, a packet destined for the mobile terminal to a resident edge node from among the edge nodes with which the mobile terminal can communicate from a current position thereof, the mobile terminal including current position registration means for reporting position information based on identification information of the resident edge node as the current position information of the mobile terminal to the gate node to register the position information into the particular gate node, each of the gate nodes including terminal position management means for managing the current position information reported by the current position registration means of the mobile terminal, and cache information reporting means for reporting the current position information managed by the terminal position management means as cache information to a communicating edge node from among the edge nodes which routes a packet destined for the mobile terminal to the gate node, each of the edge nodes including cache means for holding the cache information reported by the cache information reporting means of the gate node, and routing means for carrying out routing of a packet destined for the mobile terminal to the resident edge node based on the cache information held in the cache means in place of the gate node.

According to a further aspect of the present invention, there is provided a gate node which cooperates with a plurality of edge nodes capable of communicating with a mobile terminal to transmit or receive a packet to or from the mobile terminal to form a hierarchical packet communication system and is capable of managing current position information of the mobile terminal and routing, based on the current position information, a packet destined for the mobile terminal to a resident edge node from among the edge nodes with which the mobile terminal can communicate from a current position thereof, comprising terminal position management means for managing position information reported as the current position information of the mobile terminal from the mobile terminal and based on identification information of the resident edge node, and cache information reporting means for reporting the current position information managed by the terminal position management means as cache information to that one of the edge nodes which routes a packet destined for the mobile terminal to the gate node.

According to a still further aspect of the present invention, there is provided an edge node which cooperates with another edge node or nodes and a gate node to form a hierarchical packet communication system, each of the edge nodes being capable of communicating with a mobile terminal to transmit or receive a packet to or from the mobile terminal, the gate node being capable of managing current position information of the mobile terminal and routing, based on the current position information, a packet destined for the mobile terminal to a resident edge node from among the edge nodes with which the mobile terminal can communicate from a current position thereof, comprising cache means for receiving and holding the position information managed by the gate node and based on identification of the resident edge node as cache information, and routing means for carrying out routing of a packet destined for the mobile terminal to the resident edge node based on the cache information held in the cache means in place of the gate node.

According to a yet further aspect of the present invention, there is provided a mobile terminal for use with a hierarchical packet communication system which includes a plurality of edge nodes capable of communicating with the mobile terminal to transmit or receive a packet to or from the mobile terminal and gate nodes each capable of managing current position information of the mobile terminal and routing, based on the current position information, a packet destined for the mobile terminal to a resident edge node from among the edge nodes with which the mobile terminal can communicate from a current position thereof, comprising report information reception means for receiving report information at least including gate node identification information of that one of the gate nodes in which the resident edge node is accommodated and network identification information of the hierarchical packet network from the resident edge node, and current position registration means for maintaining, even if the gate node identification information included in the report information received by the report information reception means exhibits a change upon movement of the mobile terminal, a registration destination of the current position information of the mobile terminal at a particular one of the gate nodes if the network identification information does not exhibit a change upon the movement of the mobile terminal.

According to a yet further aspect of the present invention, there is provided a handover method for a packet network, which includes a mobile terminal and a plurality of routing nodes, for changing a packet transfer route to the mobile terminal upon movement of the mobile terminal, wherein a particular node from among the routing nodes manages a plurality of kinds of terminal position information involved in the movement of the mobile terminal, and the particular node identifies a packet type of a received packet destined for the mobile terminal, selects one of the plurality of kinds of terminal position information in response to the identified packet type, and routes the received packet based on the selected terminal position information.

The particular node may manage current position information of the mobile terminal and position information upon starting of communication of the mobile terminal as the plurality of kinds of terminal position information, and select the current position information of the mobile terminal as the terminal position information if the identified packet type is a packet type which has a characteristic that packet loss is permitted, but select the position information upon starting of communication of the mobile terminal as the terminal position information if the identified packet type is another packet type which has another characteristic that packet transfer delay is permitted.

According to a yet further aspect of the present invention, there is provided a handover method for a hierarchical packet network which includes a plurality of routing nodes capable of communicating with a mobile terminal to transmit or receive a packet to or from the mobile terminal and a gate node capable of managing current position information of the mobile terminal and routing, based on the current position information, a packet destined for the mobile terminal to a resident node from among the routing nodes with which the mobile terminal can communicate from a current position thereof, wherein the gate node reports the current position information of the mobile terminal managed by the gate node as cache information to a communicating node from among the routing nodes which routes a packet destined for the mobile terminal to the gate node, and the communicating node identifies a packet type of a received packet destined for the mobile terminal, and if a result of the identification reveals that the received packet is of a packet type which has a characteristic that packet loss is permitted, then the communicating node routes the received packet to the resident node based on the cache information reported from the gate node in place of the gate node.

According to an additional aspect of the present invention, there is provided a routing node which cooperates with another routing node or nodes and a gate node to form a hierarchical packet network, each of the routing nodes being capable of communicating with a mobile terminal to transmit or receive a packet to or from the mobile terminal, the gate node being capable of managing current position information of the mobile terminal and routing, based on the current position information, a packet destined for the mobile terminal to a resident node from among the routing nodes with which the mobile terminal can communicate from a current position thereof, comprising cache means for receiving the current position information of the mobile terminal managed by the gate node as cache information from the gate node and holding the cache information, packet type identification means for identifying a packet type of a received packet destined for the mobile terminal, and routing means for routing, if a result of the identification by the packet type identification means reveals that the packet type is a packet type which has a characteristic that packet loss is permitted, the received packet to the resident node based on the cache information of the cache means in place of the gate node.

Accordingly, with the present invention, the following advantages can be anticipated.
(1) Since an edge node receives current position information (cache information) of a mobile terminal managed by a gate node and performs routing of a packet destined for the mobile terminal based on the current position information in place of the gate node, the packet destined for the mobile terminal can be transferred directly to a resident edge node without the intervention of the gate node, and high speed handover and route optimization which is free from a limitation to a transfer route can be anticipated. Particularly, in this instance, since packets are not concentrated upon a particular gate node, the processing load to the gate node can be distributed to edge nodes and therefore can be moderated.
(2) Further, even if gate node identification information included in report information from the resident edge node changes upon movement of the mobile terminal, if network identification information does not exhibit a change, then the mobile terminal recognizes that it itself remains positioned within the same hierarchical packet network and can maintain the reporting destination of current position information of the mobile terminal itself at a particular gate node. Therefore, such a situation that changeover of the gate node of the position registration destination occurs frequently as the mobile terminal moves as in the prior art can be prevented. Consequently, the high speed handover performance can be further improved.
(3) Even if the gate node of the destination of position information by the mobile terminal is maintained at the same gate node irrespective of movement of the mobile terminal as described above, since necessary cache information is successively provided to a communicating edge node in response to updating registration of the current position of the mobile terminal into the gate node to maintain synchronism between the mobile terminal and the communicating edge node, the communicating edge node can change the packet transfer route appropriately and rapidly to a route to a new resident edge node which does not pass the gate node. Accordingly, high speed handover can be achieved while further suppressing the processing load to the gate node.
(4) It is to be noted that, since the edge node which receives a packet destined for the mobile terminal can request, when it does not have the cache information described above, the gate node for necessary cache information, any edge node can perform packet routing in place of the gate node. Consequently, packets are not concentrated upon a particular edge node. Accordingly, in this instance, the loads to both of the edge nodes and the gate node can be reduced.
(5) In this instance, when the gate node receives the request for cache information, it provides the cache information the edge node of the source of the request. Consequently, unnecessary transfer of cache information can be prevented, and an increase of the traffic amount within the network can be suppressed.
(6) Further, the gate node may hold identification information of the communicating edge node described above. In this instance, since a node whose cache information should be updated can be grasped, updating of the cache information of the communicating edge node when a report of current position information of the mobile terminal is received can be performed without an error. Accordingly, the reliability of packet routing, that is, the communication quality, can be improved.
(7) Furthermore, where the gate node is capable of holding identification information of a plurality of communicating edge nodes, it is possible to set such that routing for a single mobile terminal by the gate node can be performed alternately by a plurality of communicating edge nodes, the processing load to the gate load can be reduced significantly.
(8) Further, the communicating edge node can refreshes the term of the cache information described above every time a packet destined for the mobile terminal is received. In this instance, such a situation that the term of the cache information expires during communication and normal communication cannot thereafter be maintained can be prevented. Accordingly,, the reliability of packet routing, that is, the communication quality, can be further improved.
(9) Furthermore, when the communication comes to an end and the term of the cache information expires, the communicating edge node described above can request the gate node from which the cache information has been received to delete the identification information of the communicating edge node itself, and the gate node receiving the request can delete the pertaining node identification information held therein. Therefore, unnecessary information is not kept stored for an unnecessarily long period in any of the edge node and the gate node. Consequently, the edge node and the gate node can be miniaturized with the memory capacities thereof reduced.
(10) It is to be noted that, when the mobile terminal moves within the same network, it does not change the gate node of the position registration destination (the gate node to be used) as a rule. However, if a fixed (additional) condition is satisfied even upon movement of the mobile terminal within the same network, then the gate node of the position registration destination may be changed. Thus, for example, in such a case that the distance between the mobile terminal and the gate node becomes very long as a result of movement of the mobile terminal, the gate node of the position registration destination can be changed to the nearest gate node. Consequently, the high speed performance of handover can be improved.
(11) For example, the mobile station supervises whether or not the gate node identification information included in the above-described report information exhibits a change every time a fixed period elapses. Then, if the gate node identification information exhibits a change when the fixed period elapses, then the mobile section performs the change of the gate node described above. Consequently, the position registration frequency of the mobile station is reduced when compared with an alternative case wherein position registration is performed every time the nearest gate node changes upon movement of the mobile station. Further, optimization of the gate node of the position registration destination, that is, optimization of the handover timing, can be achieved.
(12) As an alternative, the mobile terminal may perform the change of the gate node described above when the gate node identification information exhibits a change while the mobile terminal is not communicating as the additional condition described above. In this instance, since the change of the gate node is performed without fail only when the mobile terminal is not communicating, deterioration of the communication quality which arises from such change of the gate node of the position registration destination during communication does not occur. Accordingly, optimization of the handover time can be achieved while preventing deterioration of the communication quality by handover.
(13) As another alternative, the mobile terminal may perform the change of the gate node described above when the gate node identification information included in the report information described above exhibits a change while the communication traffic amount is equal to or smaller than a predetermined amount as the additional condition described above. In this instance, since the change of the gate node is performed without fail only when the communication traffic amount is equal to or smaller than the predetermined amount, optimization of the handover time can be achieved while suppressing the influence upon communication (pressure on the communication band and so forth) to the minimum.
(14) As a further alternative, the mobile terminal may perform the change of the gate node described above when the gate node identification information exhibits a change while the data traffic type during communication is a particular data traffic type as the additional condition described above. For example, since some communication deterioration is permitted depending upon the data traffic type, where the communication being performed by the terminal is of the type just described, even if the changeover of the gate node is performed, the handover time can be optimized only with communication quality deterioration within a permissible range.
(15) As a still further alternative , the mobile terminal may supervise the used state of applications to be used for communication and perform the change of the gate node described above when the gate node identification information exhibits a change while none of the applications is used as the additional condition described above. In this instance, since the change of the gate node is performed without fail only when the applications of the terminal are not used, that is, only when the terminal itself has a sufficient processing capacity, optimization of the handover time can be achieved while suppressing the communication quality deterioration during communication to the minimum.
(16) Further, since a particular node manages a plurality of kinds of position information involved in movement of a mobile terminal, identifies the type (packet type) of a received packet destined for the mobile terminal, selects one of the kinds of position information in accordance with the identified packet type and routes the received packet based on the selected position information, the handover method to be used can be changed in accordance with the type of the received packet. Consequently, optimum communication qualities suitable for a plurality of different communication services can be provided flexibly, and the communication service quality to the mobile terminal can be improved significantly.
(17) Here, for example, if the received packet is a packet which permits some packet transfer delay (for example, a voice packet), then the particular node can perform handover with the packet transfer delay suppressed to the minimum by selecting the current position information of the mobile terminal. On the other hand, if the received packet is another packet which permits some packet loss (for example, a data packet), then the particular node can perform handover with the packet loss suppressed to the minimum by selecting the position information upon starting of communication. Consequently, an optimum handover method suitable for a voice communication service, a data communication service or the like to be utilized by the user of the mobile terminal can be provided.
(18) It is to be noted that, in the particular node, information relating to a lifetime of the position information upon starting of communication may be stored, and every time a packet destined for the mobile terminal is received, the information relating to the lifetime may be refreshed. This can prevent such a situation that the position information upon starting of communication becomes invalidated while the communication wherein packet loss is permitted continues. Consequently, the reliability of the communication is improved.
(19) Further, the particular node may delete the position information upon starting of communication described above when the lifetime described above expires. This can suppress the storage capacity necessary for storage of the position information upon starting of communication to the minimum and achieve miniaturization of the particular node.
(20) Furthermore, the mobile terminal preferably issues, while it successively receives a packet which permits some packet transfer delay (for example, a data packet), a smooth handoff instruction to the routing node (called anchor point) to which the mobile terminal was connected during communication. This can extend the communication path (packet transfer route) from the routing node which receives the smooth handoff instruction to the routing node to which the mobile terminal is currently connected. Consequently, the packet loss arising from handover can be suppressed to the minimum.
(21) Further, the particular node described above may manage the position information upon starting of communication for each of a plurality of received packets at least whose transmission source address is different among them. This allows an optimum anchor point to be set for each of transmission source addresses of received packets (that is, for each of originating persons of the packets), and consequently, the communication service quality to the mobile terminal can be further improved.
(22) It is to be noted that the identification of the packet type by the particular node described above may be performed based on the value set in the type-of-service (tos) field included in the header of the received packet. This can realize very simple and convenient realization of identification of the packet type, and consequently, also miniaturization of the particular node can be anticipated.
(23) Here, if the routing node which receives a packet flowing into the packet network and destined for the mobile terminal sets information corresponding to the type of the packet as packet type identification information to the packet, then the particular node can perform the identification of the packet type based on the packet type identification information set in the received packet. Consequently, it is not necessary for the mobile terminal side to set information for packet type identification to a transmission packet by itself.
(24) Further, the particular node can acquire subscriber data including handover condition data regarding a user of the mobile terminal from a subscriber data management node which manages such subscriber data, and control the selection of the terminal position information based on the acquired handover condition data. Consequently, a handover condition can be set for each user of a mobile terminal, and finer change of the handover method can be anticipated.
(25) It is to be noted that the particular node described above may be a home agent node which manages the position information of the mobile terminal whose home network is the packet network described above or may be a gate node (hierarchical node) for configuring the packet network as a hierarchical network. In either case, changeover of an optimum handover method suitable for a packet type (communication service) can be realized.
(26) Further, also in a hierarchical packet network wherein an edge node (communicating node) receives cache information from a gate node and performs routing of a received packet destined for a mobile terminal to a resident node in place of the gate node, when the received packet is a packet (for example, a voice packet) which permits some packet loss, if the communicating node routes the received packet to the resident node based on the cache information in place of the gate node, then route optimization is performed upon handover of a voice packet or the like. Consequently, the packet transfer delay is further reduced and the communication quality upon handover can be maintained high.
(27) It is to be noted that, where the received packet is another packet (for example, a data packet) which permits some packet transfer delay, the communicating node described above routes the received packet to the gate node. Consequently, handover by smooth handoff at an anchor point can be realized, and the packet loss upon handover can be suppressed to the minimum.

The above and other objects, features and advantages of the present invention will become apparent from the following description and the appended claims, taken in conjunction with the accompanying drawings in which like parts or elements denoted by like reference symbols.

### BRIEF DESCRIPTION OF THE DRAWINGS

FIG. 1 is a block diagram showing a configuration of a hierarchical packet communication system according to a first embodiment of the present invention;
FIG. 2 is a block diagram showing a configuration of a VHA/THA/EN shown in FIG. 1;
FIG. 3 is a block diagram showing a detailed configuration of a mobile message processing section shown in FIG. 2;
FIG. 4(A) is a diagrammatic view illustrating an example of information contents of a binding cache table of the VHA/THA shown in FIG. 1;
FIG. 4(B) is a similar view but illustrates an example of information contents of a binding cache table of the EN shown in FIG. 1;
FIG. 5 is a block diagram showing a configuration of a mobile terminal (MN) shown in FIG. 1;
FIG. 6 is a block diagram showing a detailed configuration of a mobile message processing section of the MN shown in FIG. 5;
FIG. 7 is a diagrammatic view illustrating a packet format which complies with the "HMIPv6";
FIG. 8 is a diagrammatic view illustrating a format of a standard header shown in FIG. 7;
FIG. 9 is a diagrammatic view illustrating a packet format of a home position registration message according to the first embodiment;
FIG. 10 is a similar view but illustrating a packet format of a home position registration response message according to the first embodiment;
FIG. 11 is a similar view but illustrating a packet format of a resident position registration message according to the first embodiment;
FIG. 12 is a similar view but illustrating a packet format of a position (cache) update message according to the first embodiment;
FIG. 13 is a similar view but illustrating a packet format of a position (cache) update response message according to the first embodiment;
FIG. 14 is a similar view but illustrating a packet format of a cache request message according to the first embodiment;
FIG. 15 is a similar view but illustrating a packet format of a cache report message according to the first embodiment;
FIG. 16 is a similar view but illustrating a packet format of a cache deletion request message according to the first embodiment;
FIG. 17 is a diagrammatic view illustrating a packet format of a router advertisement message according to the first embodiment;
FIG. 18 is a diagrammatic view illustrating operation (position registration process) of the hierarchical packet communication system shown in FIG. 1;
FIG. 19 is a diagrammatic view illustrating operation (communication between a home terminal and a roaming terminal) of the hierarchical packet communication system shown in FIG. 1;
FIG. 20 is a similar view but illustrating a packet transfer route after the route optimization by the hierarchical packet communication system illustrated in FIG. 19;
FIG. 21 is a similar view but illustrating operation of the hierarchical packet communication system when the roaming terminal shown in FIG. 19 further moves;
FIG. 22 is a flow chart illustrating operation of the EN shown in FIG. 1;
FIG. 23 is a flow chart illustrating operation of the VHA/THA shown in FIG. 1;
FIG. 24 is a flow chart illustrating operation of a control message processing section of the VHA/THA shown in FIG.2;
FIGS. 25 and 26 are flow charts illustrating different operation of the EN shown in FIG. 1;
FIG. 27 is a flow chart illustrating operation of the mobile message processing section shown in FIGS. 5 and 6;
FIG. 28 is a flow chart illustrating operation of a timer processing section of the VHA/THA/EN shown in FIG. 2;
FIG. 29 is a flow chart illustrating operation of a router processing section of the VHA/THA/EN shown in FIG. 2;
FIG. 30 is a diagrammatic view illustrating a modification (position registration destination THA changing over operation) to the first embodiment;
FIG. 31 is a time chart illustrating position registration destination THA changeover operation by the first modification to the first embodiment;
FIG. 32 is a flow chart illustrating an operation algorithm (THA address check algorithm) of the router advertisement message processing section shown in FIG. 6 for implementing the THA changeover operation illustrated in FIG. 31;
FIG. 33 is a flow chart illustrating an operation algorithm (flag setting algorithm) of the router advertisement message processing section shown in FIG. 6 for implementing the THA changeover operation illustrated in FIG. 31;
FIG. 34 is a time chart illustrating position registration destination THA changeover operation according to a second modification to the first embodiment;
FIG. 35 is a flow chart illustrating a flag setting algorithm according to the second modification to the first embodiment;
FIG. 36 is a time chart illustrating position registration destination THA changeover operation according to a third modification to the first embodiment;
FIG. 37 is a flow chart illustrating a flag setting algorithm according to the third modification to the first embodiment;
FIG. 38 is a time chart illustrating position registration destination THA changeover operation according to a fourth modification to the first embodiment;
FIG. 39 is a flow chart illustrating a flag setting algorithm according to the fourth modification to the first embodiment;
FIG. 40 is a time chart illustrating position registration destination THA changeover operation according to a fifth modification to the first embodiment;
FIG. 41 is a flow chart illustrating a flag setting algorithm according to the fifth modification to the first embodiment;
FIG. 42 is a block diagram showing a configuration of a packet network according to a second embodiment of the present invention;
FIG. 43 is a block diagram showing a configuration of an HA and a router shown in FIG. 42;
FIG. 44 (A) is a diagrammatic view illustrating an address of an MN address in the packet network shown in FIG. 42;
FIG. 44(B) is a diagrammatic view illustrating an example of registration contents of a binding cache table illustrated in FIG. 43 which are based on the MN address illustrated in FIG. 44(A);
FIG. 45 is a diagrammatic view illustrating an example of a format of a voice (VOIP) packet according to the second embodiment;
FIG. 46 is a similar view but illustrating an example of a format of an ftp data packet according to the second embodiment;
FIG. 47 a diagrammatic view illustrating a handover method (for a voice packet) in the packet network shown in FIG. 42;
FIG. 48 is a similar view but illustrating another handover method (for a data packet) in the packet network shown in FIG. 42;
FIG. 49(A) is a diagrammatic view illustrating a packet transfer route by the handover method (for a voice packet) illustrated in FIG. 47;
FIG. 49(B) is a diagrammatic view illustrating a packet transfer route by the handover method (for a data packet) illustrated in FIG. 48;
FIGS. 50 and 51 are flow charts illustrating operation of the HA shown in FIGS. 42 and 43;
FIGS. 52(A) and 52(B) are diagrammatic views illustrating a configuration of a binding cache table and an example of registered contents of the binding cache table according to a first modification to the second embodiment;
FIG. 53(A) is a diagrammatic view illustrating a packet transfer rate for a voice packet by a handover method according to the first modification to the second embodiment;
FIG. 53 (B) is a similar view but illustrating a packet transfer route for a data packet by the handover method according to the first modification to the second embodiment;
FIGS. 54 and 55 are flow charts illustrating operation of an HA according to the first modification to the second embodiment;
FIG. 56 is a diagrammatic view illustrating an example of registration contents of a binding cache table according to a second modification to the second embodiment;
FIG. 57 is a flow chart illustrating operation of an edge node according to the second modification to the second embodiment;
FIG. 58(A) is a diagrammatic view illustrating a packet transfer route for a voice packet by a handover method according to the second modification to the second embodiment;
FIG. 58(B) is a similar view but illustrating a packet transfer route for a data packet by the handover method according to the second modification to the second embodiment;
FIGS. 59(A) and 59(B) are diagrammatic views illustrating a configuration of a binding cache table and an example of registered contents of the binding cache table according to a third modification to the second embodiment;
FIG. 60 is a diagrammatic view illustrating another example of registration contents of the binding cache table according to the third modification to the second embodiment;
FIG. 61 is a block diagram showing an example of a hierarchical Mobile-IP network and illustrating a handover method (handover by an HA) according to a fourth modification to the second embodiment;
FIG. 62 is a block diagram showing the example of the hierarchical Mobile-IP network but illustrating another handover method (handover by an HA) according to a fourth modification to the second embodiment;
FIG. 63 is a diagrammatic view showing an example of a packet communication system which complies with the "MIPv6" ;
FIG. 64 is a similar view but illustrating "route optimization" by the system shown in FIG. 63;
FIG. 65 is a diagrammatic view showing an example of a packet communication system which complies with the hierarchical Mobile-IPv6 (HMIPv6);
FIG. 66 is a similar view but illustrating "route optimization" by the system shown in FIG. 65;
FIG. 67 is a similar view but showing an example of a packet transfer route before the "route optimization" by the system shown in FIG. 65;
FIG. 68 is a similar view but showing an example of the packet transfer route after the "route optimization" by the system shown in FIG. 65; and
FIG. 69 is a diagrammatic view illustrating conventional smooth handoff.

### DESCRIPTION OF THE PREFERRED EMBODIMENTS

### A. First Embodiment

### A1. Outline of the System Configuration

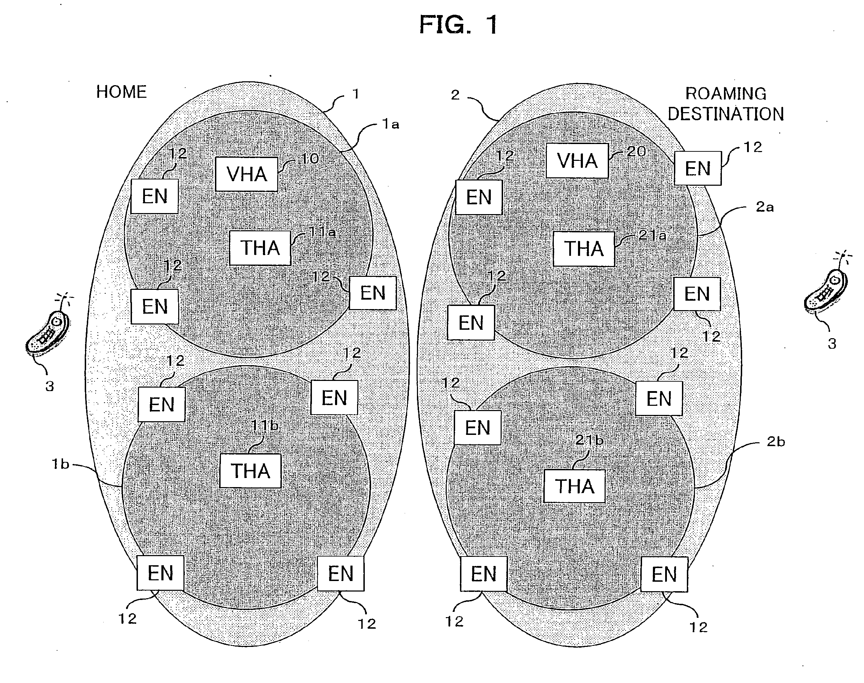

FIG. 1 is a block diagram showing a configuration of a hierarchical packet communication system according to a first embodiment of the present invention. Referring to FIG. 1, the hierarchical packet communication system shown complies with the "MIPv6" and includes a pair of packet networks (which may each be referred to also as carrier network) 1 and 2 provided by different carriers (communication undertakers such as ISPs) from each other. The carrier network 1 (2) includes at least one VHA (Virtual Home Agent) node 10 (20), THA (Temporary Home Agent) nodes 11a and 11b provided at least by one for each of subcarrier (subpacket) networks 1a and 1b (2a and 2b) which form the carrier network 1 (2), and a plurality of edge nodes (ENs) 12 which form the hierarchical networks 1a and 1b (2a and 2b). It is to be noted that a "carrier network" is identified as a "domain". In the following description, a carrier network to which the present invention is applied is sometimes referred to as "M3 ready network" or "M3v6 (Multi-Media Mobile Network based on IPv6) network".

The VHA node 10 (20) manages current position information [a COA (VCOA, PCOA)] of a mobile terminal (MN; Mobile Node) 3 (hereinafter referred to sometimes as "home terminal 3" or merely as "terminal 3") of a subscriber existing in the carrier network (home network) 1 (2) of the VHA node 10 (20) itself as part of information called binding cache. Further, the VHA node 10 (20) searches for a "COA" corresponding to a destination address (DA) indicated by an arriving (received) packet destined for the terminal 3 based on the "cache", encapsulates the packet with the "COA" and transfers (routes) the packet.

The "VCOA"/"PCOA" mentioned hereinabove is produced by combining a network prefix part (higher order 64 bits) of a THA address/EN address with an interface ID of the terminal 3 as hereinafter described. Accordingly, the "VCOA" represents an address with which the packet can reach the THA 11a or 11b (21a or 21b), and the "PCOA" represents an address with which the packet can reach the EN 12.

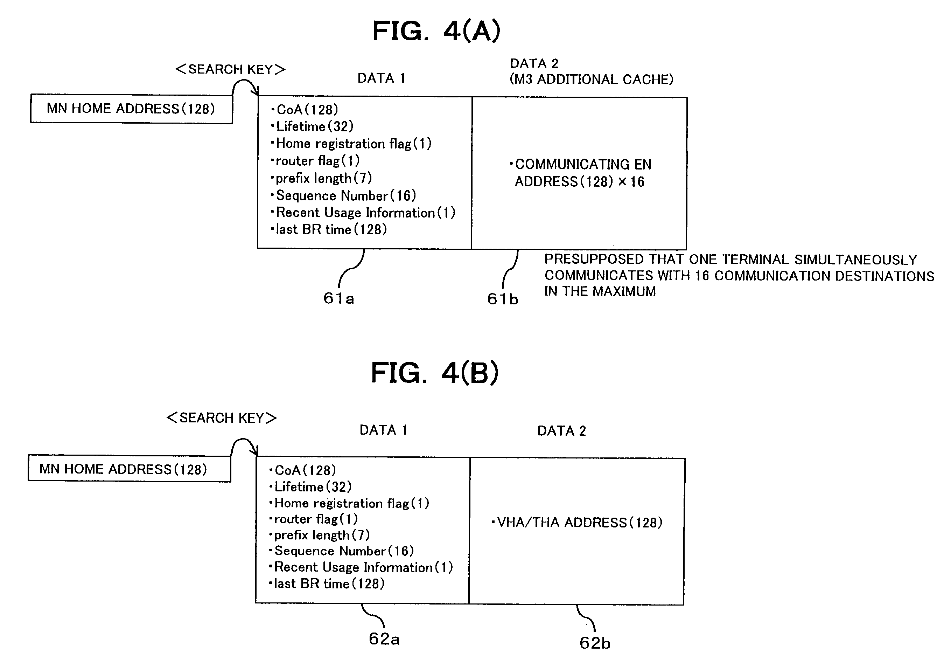

The "cache" mentioned hereinabove is produced and updated on the "MIPv6" base through position registration from the home terminal 3 [contents of the "cache" are hereinafter described with reference to FIG. 4(A)]. The position registration is carried out by transmission and reception of a home position registration message (packet) and a home position registration response message (packet) which are hereinafter described.

The VHA node 10 (20) (which may be sometimes referred to merely as "VHA 10 (20)") further has the following functions as functions unique to the present embodiment.
(1) A function of reporting (providing), if a report request[cache request(Binding Request-M3)message(packet)] for "binding cache" (which may be referred to as "cache information" or merely as "cache") is received, the "cache information" with a cache report message (packet) to the EN 12 of the source of the request.
(2) A function of managing the IP address (EN address; identification information) of the EN 12 as "communicating EN address" together with the "cache information".
(3) A function of updating the "cache" in response to such position registration as described above.
(4) A function of updating the "cache" reported to the communicating EN 12 in response to the updating of the "cache". This function is implemented by carrying out transmission and reception of a position (cache) update message (packet) and a position (cache) update response message (packet) with the communicating EN 12.

Each of the THA nodes 11a and 11b (21a and 21b) (each of the THA nodes 11a and 11b (21a and 21b) may sometimes be referred to merely as "THA 11 (21)" for the convenience of description) has a function (representative HA function) of temporarily managing current position information [a COA (PCOA)] of a mobile terminal 3 (which is hereinafter referred to as roaming terminal) whose home network is the carrier network 2 (1) different from the carrier network 1 (2) of the THA node 11a or 11b (21a or 21b) itself as part of cache information similar to that described hereinabove, searching for the "PCOA" corresponding to a destination address (DA) indicated by an arriving (received) packet destined for the terminal 3 based on the "cache", encapsulating the packet with the "PCOA" and transferring (routing) the packet.

It is to be noted that the "cache" in the THA 11 (21) is successively updated on the "MIPv6" base through position registration (registration of the "PCOA") from the roaming terminal 3. The position registration is carried out by transmission and reception of a resident position registration message (packet) and a resident position registration response message (packet) between the roaming terminal 3 and the THA 11 (21) which accommodates the nearest EN (which is hereinafter referred to as resident EN) 12 with which the terminal 3 can communicate from the current position of the terminal 3.

Accordingly, similarly to the VHA 10 (20) described hereinabove, the THA 11 (21) has a function of searching, if a packet arrives thereat, the "caches" managed by the THA 11 (21) itself for the "PCOA" of the destination terminal [roaming terminal] 3 indicated by the destination information of the packet, encapsulating the arriving packet with the searched out "PCOA" and transferring (routing) the packet. The THA 11 (21) further has the following functions.
(1) A function of reporting (providing), in response to a cache request message from an EN 12, the "cache" to the EN 12 with a cache report message.
(2) A function of managing the IP address of the EN 12 to which the "cache" is reported as "communicating EN address" together with the "cache".
(3) A function of updating the "cache" in response to the position registration.
(4) A function of updating the "cache" reported to the communicating EN 12 in response to the updating of the "cache". This function is implemented by carrying out transmission and reception of a position (cache) update message and a position (cache) update response message with the communicating EN 12 similarly as with the VHA node 10 (20).

The EN 12 described above has a function as a last hop router which communicates by radio with a terminal (resident terminal; including both of a home terminal and a roaming terminal) 3 present in the communication area of the EN 12 itself to transfer a packet routed from the host VHA node 10 (20) or THA 11 (21) and destined for the terminal 3 finally to the terminal 3. In the present embodiment, the EN 12 further has the following functions.
(1) A function of receiving and storing a report of a "cache" managed by a VHA 10 (20) or THA 11 (21).
(2) A function of searching, upon arrival of a packet, the "caches", encapsulating, upon cache hit, the arriving packet with the information (PCOA) and transferring the packet.
(3) A function of issuing, when the search mentioned above does not result in cache hit, a cache request message (packet) to the VHA 10 (20) or THA 11 (21).
(4) A function of managing the IP address [VHA/THA address (gate node identification information)] of the VHA 10 (20) or THA 11 (21) from which "cache" has been provided through a cache report message (packet) as a response to the cache request message described above together with the "cache" [the function is hereinafter described with reference to FIG. 4(B)]. This VHA/THA address is used as a destination when a deletion request [cache deletion request message (packet)] of a "cache" (communicating EN address) managed (stored) by the VHA 10 (20) or THA 11 (21) is issued as described in paragraph (8) below.
(5) A function (timer process) of processing (decrementing after each fixed interval of time) a "lifetime (Lifetime)" included in "cache information". It is to be noted that reduction of the "lifetime" to zero signifies expiration of the term of the "cache information".
(6) A function of deleting, when the term of "cache information" expires, the "cache information".
(7) A function of updating (extending) the "lifetime" upon arrival of a packet. This function prevents expiration of the term of "cache information" while communication is proceeding (in other words, the "cache information" is not deleted but maintained while communication is proceeding).
(8) A function of issuing, when communication comes to an end (when the lifetime expires), a cache deletion request message for the aforementioned "communicating EN address" stored in the VHA 10 (20) or THA 11 (21) which is the source of transfer of the "cache information".
(9) A function of transmitting a router advertisement (RA) message (hereinafter referred to simply as "router advertisement") toward a resident terminal 3 periodically or in response to a request received from a resident terminal 3. It is to be noted, however, that the "router advertisement" in the present embodiment includes an EN address, a THA address, and an address of the carrier network 1 (2) (an M3 network address; network identification information). The THA address is information equivalent to an MA address of the "HMIPv6".

It is to be noted that the "M3 network address" is used to discriminate whether the carrier network in which the terminal 3 is currently positioned is the packet network 1 (2) or the other carrier network 2 (1) (that is, the terminal 3 is roaming) or to discriminate, depending upon presence or absence of the "M3 network address", whether the network in which the terminal 3 is currently positioned is an "M3 ready network" or a non-"M3 ready network".

If the terminal 3 is an mobile IP terminal which can communicate with the resident EN 12 to transmit or receive a packet and is positioned in the home network 1 (2) in the present embodiment, then it registers the COA ("PCOA") into the VHA 10 (20) through a home position registration message, but registers, when it roams into the other network 2(1) which is an "M3 ready network", the COA into both of the THA 21a or 21b (11a or 11b) of the roaming destination and the VHA 10 (20) of the home network 1(2).

In this instance, the terminal 3 registers the "PCOA" into the THA 21a or 21b (11a or 11b) and registers the "VCOA" into the VHA 10 (20). Further, since the terminal 3 can discriminate the type of the network of the roaming destination based on address information included in the "router advertisement" mentioned hereinabove, it can change the position registration destination in accordance with the type of the network of the roaming destination.

For example, if the "router advertisement" does not include an M3 network address but includes an MA address, then the network is a normal "HMIPv6" network, and therefore, it registers the "PCOA" into the MA of the roaming destination and registers the "VCOA" into the VHA 10 (20) of the home network 1 (2). On the other hand, if the "router advertisement" includes neither an M3 network address nor an MA address, the network is a normal "MIPv6" network, and therefore, the terminal 3 registers the "VCOA" only into the VHA 10 (20). In other words, the terminal 3 in the present embodiment is ready for any of "MIPv6", "HMIPv6" and "M3v6" networks.

### A2. Details of Messages

The aforementioned messages used in the system of the present embodiment are listed in Table 1 below:

**TABLE 1**

| Message types | |
|---|---|
| Transmission direction | Message |
| MN→VHA | Home position registration(BU) |
| MN←VHA | Home position registration acknowledgement(BA) |
| MN→THA | Resident position registration(BU) |
| MN←THA | Resident position registration response(BA) |
| | Cache report(BU) |
| VHA/THA→EN | Position (cache) update(BU) |
| | Cache deletion response(BA) |
| | Cache request(BR-M3) |
| VHA/THA←EN | Position (cache) update response(BA) |
| | Cache deletion request(BU) |

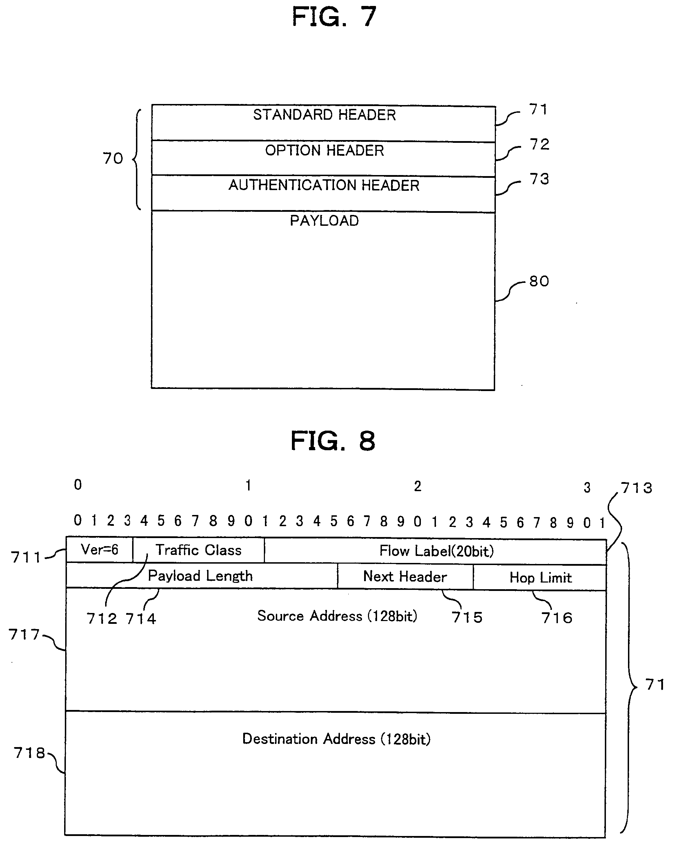

In the following, details of the messages are described. It is to be noted that, in the following description, any of the messages is generally referred to as "mobile message". The mobile messages are expansions of control messages which comply with the "MIPv6" and all basically have such a format of a packet (whichmay be hereinafter referred to also as "MIPv6" packet) which complies with the "MIPv6" as illustrated in FIG. 7.

Referring to FIG. 7, an "MIPv6" packet is composed of an IP header 70 including a standard header 71, an option header 72 and an authentication header 73, and an IP payload 80, and a "mobile message" is formed from those portions of the "MIPv6" packet other than the IP payload 80. Then, each of the messages (packets) specified as above is indicated (identified) depending upon the set contents of the IP header 70 (particularly the option header 72).

It is to be noted that the standard header 71 has prepared therein fields 711 to 713 in which "version information" (4 bits), a "traffic class" (8 bits), a "flow label" (20 bits), a "payload length" (16 bits), a "next header" (8 bits), a "hop limit number" (8 bits), a "source address (SA)" (128 bits), and a "destination address (DA)" (128 bits) are to be placed as illustrated in FIG. 8.

In the following, the packet formats of the mobile messages mentioned hereinabove are described.

### (1) Home position registration/position registration response messages

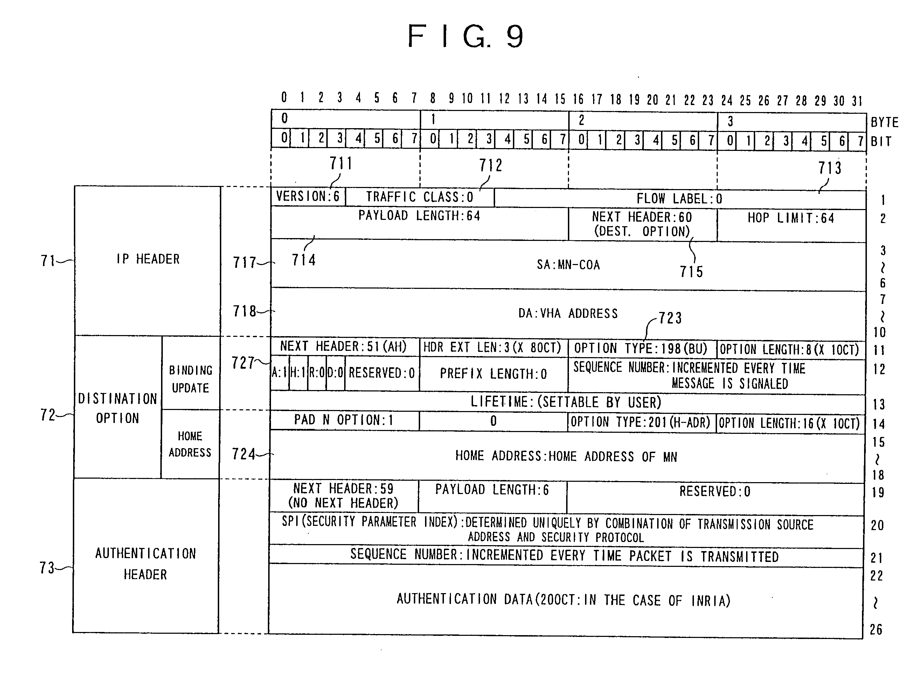

FIG. 9 illustrates the packet format (a portion corresponding to the IP header 70) of the home position registration message. As can be seen from FIG. 9, for position registration into the home network 1 (2) of the terminal 3 [for position registration into the VHA 10 (20)], a binding update option and a home address option defined as a destination option for the option header 72 of the "MIPv6" are used. In Table 2 below, binding update option (position registration) parameters are listed, and in Table 3 below, home address option parameters are listed.

**TABLE 2**

| Binding Update Option (Position Registration) parameters | | | |
|---|---|---|---|
| Parameter name | Bit(s) | Parameter value | Remarks |
| Option Type | 8 | 198=0xC6 | |
| Option Length | 8 | 8 + Sub-Options length | |
| Acknowledge(A) | 1 | 1 (Binding Acknowledgement request present) | |
| Home Registration (H) | 1 | MN→VHA : 1 | |
| Router (R) | 1 | In M3v6, since home link is virtual link, the parameter is not used for VHA (normally 0). For roaming terminal except M3v6, the parameter relies upon home network. | |
| Duplicate Address Detection (D) | 1 | In M3v6, since home link is virtual link, the parameter is not used for VHA (normally 0). For roaming terminal except M3v6, the parameter relies upon home network. | |
| Reserved | 4 | Not used (0). | |
| Prefix Length | 8 | Prefix length of virtual sub-network of VHA. In M3v6, since home link is virtual link, the parameter is not used for VHA (normally 0). For roaming terminal except M3v6, the parameter relies upon home network. | |
| Sequence Number | 16 | Used with sequence number incremented by +1 basically upon every Binding | |
| Lifetime | 32 | Lifetime of Binding Cache. Unit: second. | |
| Sub - Options | | Sub-Options defined by Mobile IPv6 | |
| | | • Unique Identifier Sub - Option | |
| | | • Alternate Care of Address Sub-Option is not used | |

**TABLE 3**

| Home Address Option Parameters | | | |
|---|---|---|---|
| Option (message) name | Bit(s) | Outline | Remarks |
| Option Type | 8 | 201=0xC9 | |
| Option Length | 8 | 16+Sub-Options length | |
| Home Address | 128 | Network address (home address) of MN that transmits packet | |
| Sub-Options | | No definition | |

As seen in FIG. 9, in the home position registration message, the COA (MN-COA) of the terminal 3 is placed in an SA field 717, and the address (VHA) address of the VHA 10 (20) is placed in a DA field 718. Consequently, the home position registration message arrives at the VHA 10 (20), and the COA placed in the "SA field" is registered into the "cache information" so that position registration (updating) of the terminal 3 is performed. It is to be noted that it is indicated (here, "198") in an option type field 723 that the present message is a "binding update message".

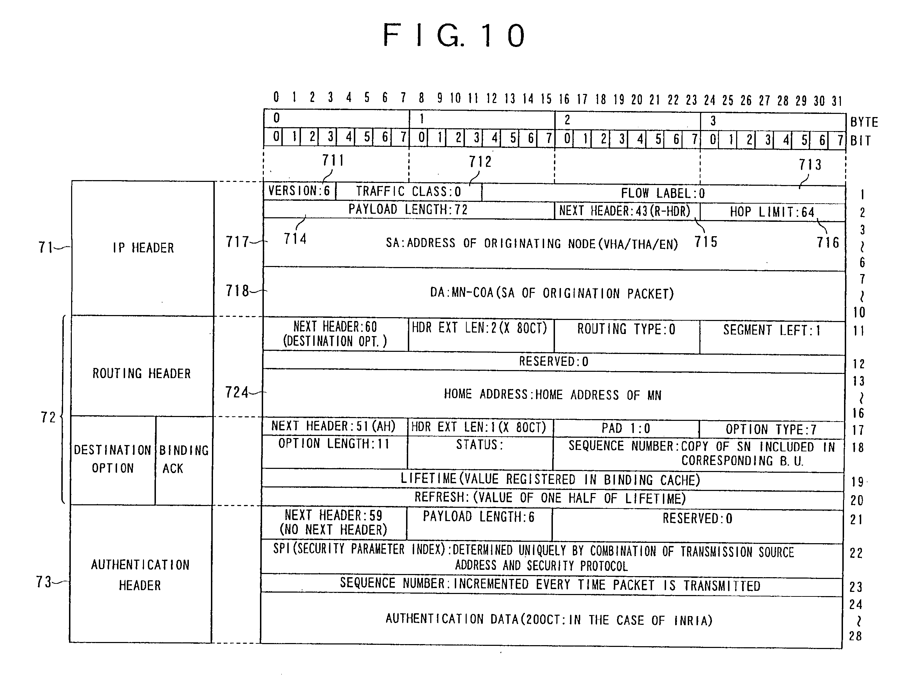

On the other hand, for a home position registration response to the terminal 3 from the VHA 10 (20) which receives the home position registration message, a packet format illustrated in FIG. 10 is used. In particular, for a home position registration response, a binding acknowledgement option defined as a destination option of the "MIPv6" is used. In Table 4 below, binding acknowledgement option parameters in this instance are listed.

**TABLE 4**

| Binding Acknowledgement Option Parameters | | | |
|---|---|---|---|
| Parameter name | Bit(s) | Outline | Remarks |
| Option type | 8 | 7 | |
| Option Length | 8 | 11 | |
| | | Return the following coding values | |
| | | - 0: Binding Update accepted | |
| | | -128: Reason unspecified | |
| | | -130: Administratively prohibited | |
| | | -131: Insufficient resources | |
| | | -132: Home registration not supported | |
| Prefix Length | 8 | -133: Not home subnet | |
| | | -136: Incorrect interface identifier length | |
| | | -137: Not home agent for this mobile node | |
| | | -138: Duplicate Address Detection failed Status | |
| | | Latest value of Status field is recited in "Assigned Numbers" (RFC1700) | |
| Sequence Number | 16 | Copy and return sequence field included in correspondmg Binding Update | |
| Lifetime | 32 | Unit: second. System preset value. | |
| Refresh | 32 | Recommended interval (unit: second) for Binding Update transmission of MN | |
| Sub-Options | | Not defined | |

Referring to FIG. 10, in the home position registration acknowledgement message, the address of an originating node [in this instance, the VHA 10 (20)] is placed in the SA field 717, and the MN-COA [SA of the received packet (that is, the home position registration message described hereinabove)] is placed in the DA field 718. Consequently, the present message is issued (returned) to the terminal 3, which has performed position registration into the VHA 10 (20), so that it is reported to the terminal 3 that the position registration has completed.

It is to be noted that whether or not the THA 11 (21) receiving the home position registration message should issue the position registration acknowledgement message is indicated in an A (Acknowledgement) bit field 727 of the binding update option (as seen from Table 2, "1" represents that issuance of the position registration acknowledgement message is required). Further, handling of Length fields for the IP header length, the header expansion length and so forth in FIGS. 9 and 10 is such as listed in Table 5 below.

**TABLE 5**

| Handling of Length Field | | | |
|---|---|---|---|
| Term | Item | Outline | Unit |
| 1 | Payload Length of IP header | Total Payload length except IP header | 1 octet |
| 2 | Hdr. Ext. Len. of routing header | Length of routing header except leading 8 octets | 8 octets |
| 3 | Hdr. Ext. Len. of destination option header | Length of destination option header except leading 8 octets | 8 octets |
| 4 | Option Length of options (Binding Update option, Source-Link-layer Address option, etc.) | Length of options except Option Type, Option length fields. Also entire sub-options (including Sub-Option Type, Sub-Option Length fields) are included | 1 octet |
| 5 | Option length of sub-options (Unique Identifier Sub-Option, Alternate care Type, of Address Sub-option, etc.) | Length of options except Option Option length fields | 1 octet |
| 6 | Hdr. Ext. Len. of authentication header | Length of authentication header except leading 8 octets | 4 octets |

### (2) Resident position registration/position registration response messages

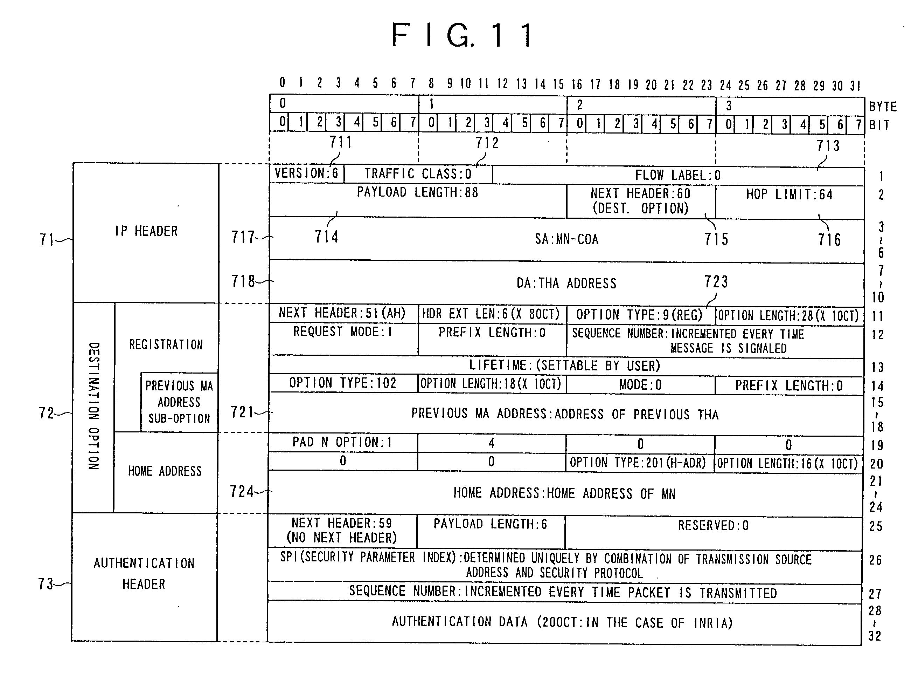

For position registration into the resident network 1a or 1b (2a or 2b) [position registration into the THA 11 (21)], a packet format illustrated in FIG. 11 is used. In particular, a registration option (Registration) equivalent to the binding update option defined as the destination option 72 of the "HMIPv6" and the home address option (refer to Table 3) are used. Registration option parameters are listed in Table 6 below, and previous MA address sub-option parameters and home agent address sub-option parameters appearing in Table 6 are listed Table 7 and Table 8, respectively.

**TABLE 6**

| Registration Option Parameters | | | |
|---|---|---|---|
| Parameter name | Bit(s) | Outline | Remarks |
| Option Type | 8 | 9 | |
| Option Length | 8 | Length of option, 8 + Sub-Option length | |
| Flag | 8 | uMlPv6 registration mode | |
| Malen | 8 | Length of prefix of mobility network | |
| seq number | 16 | Refer to Binding Update Option | |
| Lifetime | 32 | Refer to Binding Update Option | |
| Sub-Options | | Sub-Options below are defined in additional information regarding Registration Option | |
| | | • previous mobility agent address Sub-Option | |
| | | • Home Agent Address Sub-Option | |

**TABLE 7**

| Previous Mobility Agent Address Sub-Option Parameters | | | |
|---|---|---|---|
| Parameter name | Bit(s) | Outline | Remarks |
| Option type | 8 | Type of sub-option 102=0x66 | |
| Option Length | 8 | Length of sub-option 18=0x12 | |
| Padding | 16 | | |
| Previous MA Address | 128 | Previous address of MA | |

**TABLE 8**

| Home Agent Address Sub-Option Parameters | | | |
|---|---|---|---|
| Parameter name | Bit | Outline | Remarks |
| Option type | 8 | Type of sub-option 103=0x67 | |
| Option Length | 8 | Length of sub-option 18=0x12 | |
| Padding | 16 | | |
| HA address | 128 | Address of HA | |

As seen in FIG. 11, also in the resident position registration (Registration) message, basically similarly as in the home position registration message described hereinabove, the COA (MN-COA) of the terminal 3 is placed in the SA field 717 and the address (THA address) of the THA 11 (21) is placed in the DA field 718. Thus, the resident position registration message arrives at the THA 11 (21), and the COA placed in the SA field 717 is registered into the "cache information" of the THA 11 (21) to effect position registration (updating) of the terminal 3.

It is to be noted that it is indicated in the option type field 723 (here, "9") that the present message is a "Registration" message. Further, the address of the THA 11 (21) in which the terminal 3 has had a position registration before it moves is placed in a previous MA address field 721 of the previous MA address sub-option so that the THA 11 (21) can refer to the address set in the previous MA address field 721 to recognize from the resident zone of which THA 11 (21) the terminal 3 has moved.

It is to be noted that, also in FIG. 11, handling of the Length fields for the IP header length, the header extension length and so forth is similar to that of Table 5 described hereinabove.

On the other hand, for a position registration response from the THA 11 (21) to the terminal 3, the binding acknowledgement option described hereinabove (refer to Table 4) is used. In short, a packet format similar to that shown in FIG. 10 is used. Thus, the address of an originating node [in this instance, the THA 11 (21)] is placed in the SA field 717 and the MN-COA (address set in the SA field 717 of the received packet) is placed in the DA field 718 . Consequently, the present message is issued (returned) to the terminal 3 which has performed position registration into the THA 11 (21) to report that the position registration is completed.

### (3) Position (cache) update/response messages

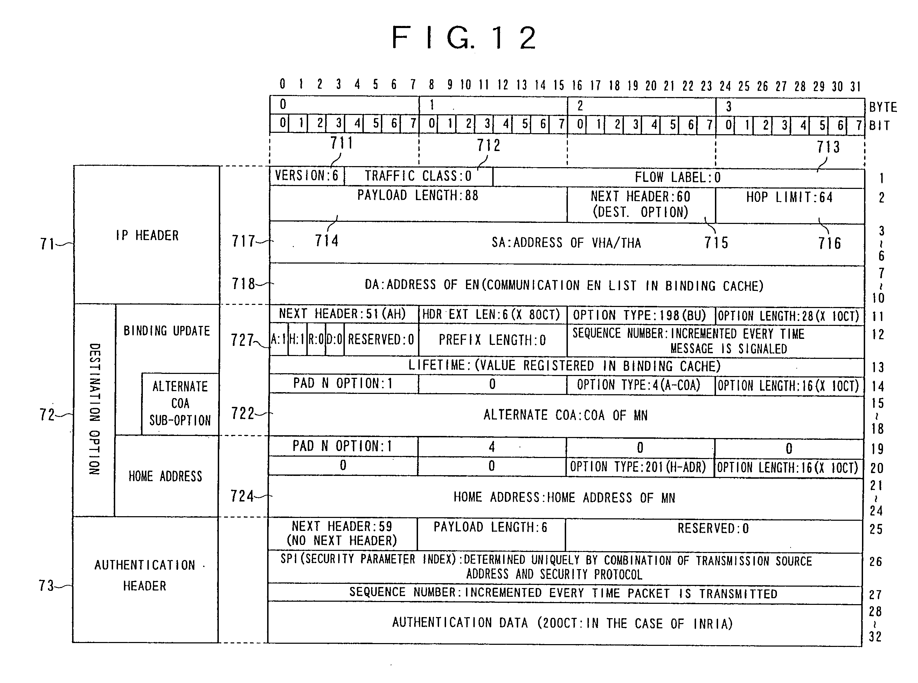

For position updating (cache updating) from the VHA 10 (20) or THA 11 (21) to the EN 12, a packet format (portion corresponding to the IP header 70) illustrated in FIG. 12 is used. In particular, the binding update option and the home address option (refer to Table 3 above) are used. However, the COA of the terminal 3 of the updating object is reported using an alternate COA sub-option of the binding update option. An example of binding update option (position update) parameters is illustrated in Table 9 below, and an example of alternate COA sub-option parameters is illustrated in Table 10 below.

**TABLE 9**

| Binding Update Option (Position Update) Parameters | | | |
|---|---|---|---|
| Parameter name | Bit(s) | Parameter value | Remarks |
| Option Type | 8 | 198=0xC6 | |
| Option Length | 8 | 8 + Sub-Options length | |
| Acknowledge(A) | 1 | 1 (Binding Acknowledge ment request present) | |
| Home Registration (H) | 1 | VHA→EN : 0 | |
| Router (R) | 1 | 0 | |
| Duplicate Address Detection (D) | 1 | 0 | |
| Reserved | 4 | Not used (0). | |
| Prefix Length | 8 | VHA→EN : 0 | |
| Sequence Number | 16 | Used with sequence number incremented by +1 basically upon every Binding Update. | |
| Lifetime | 32 | Lifetime of Binding Cache. Unit: second. | |
| Sub-Options | | Sub-Options defined by Mobile IPv6 | |
| | | · Unique Identifier Sub-Option (Not used) | |
| | | · Alternate Care of Address Sub-Option | |

**TABLE 10**

| Alternate Care of Address Sub-Option Parameters | | | |
|---|---|---|---|
| Parameter name | Bit(s) | Outline | Remarks |
| Option type | 8 | 4 | |
| Option Length | 16 | Length of option except Option Type, Option Length fields | |
| Alternate Care of Address | 128 | Used when address other than Source Address is used as Care of Address. COA of MN is set. | |

It is to be noted that the present position update message is issued when it is necessary, because the "cache information" of the VHA 10 (20) or THA 11 (21) is updated as a result of such position registration from the terminal 3 into the VHA 10 (20) or THA 11 (21) described above, to have the updating reflected in the EN 12 with which the terminal 3 is communicating.

To this end, in the position update message, the address of the VHA 10 (20) or THA 11 (21) is placed in the SA field 717, and the address of the EN 12 (communicating EN address) is placed in the DA field 718 and besides the COA (MN-COA) of the terminal 3 of the position updating object is placed in an alternate COA field 722.

Consequently, the update information (MN-COA) is provided to the communicating EN 12 which requires updating of the "cache information" therein to update the "cache information" of the communicating EN 12, and therefore, the communicating EN 12 can continue the packet routing to the terminal 3 normally. It is to be noted that it can be identified depending upon the presence or absence of the alternate COA field 722 that the present message is a "position update message".

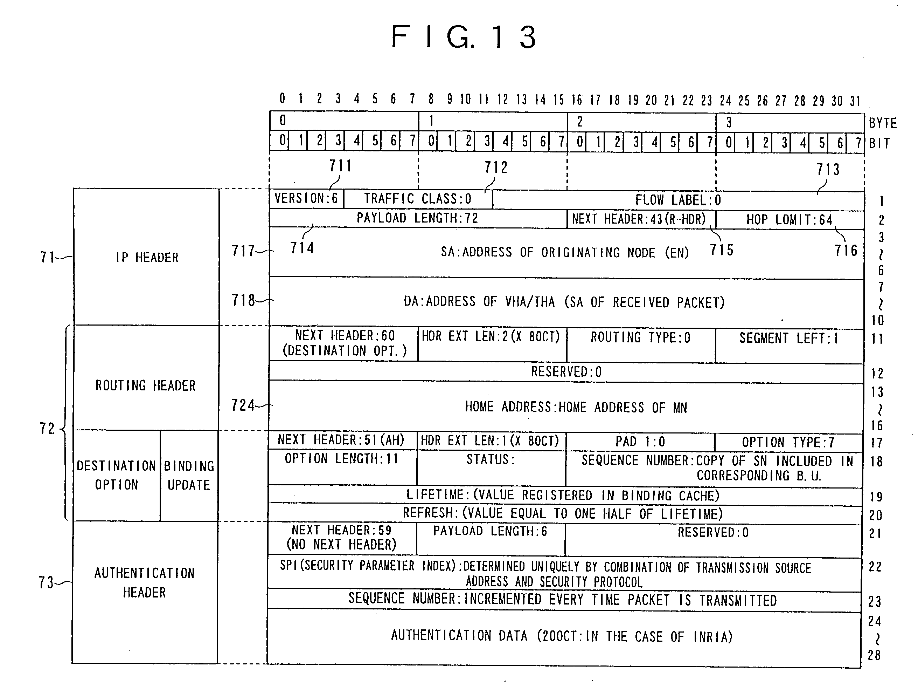

On the other hand, the communicating EN 12 returns a response (position update response message) to the position update message described above to the VHA 10 (20) or THA 11 (21) from which the position update message has been issued. For the position update response in this instance, a packet format (portion corresponding to the IP header 70) illustrated in FIG. 13 is used. In particular, also in the present message, the binding acknowledgement option (for its parameters, refer to Table 4 above) is used.

As seen in FIG. 13, in the position update response message, the address of an originating node (EN 12) is placed in the SA field 717 and the address set in the SA field 717 of the received packet (position update message) [that is, the address of the VHA 10 (20) or THA 11 (21) of the originating source of the position update message] is placed in the DA field 718. Consequently, the present message is issued (returned) to the VHA 10 (20) or THA 11 (21) to report that the position updating is completed.

It is to be noted that, also in this instance, whether or not the EN 12 having received the position update message should issue a response message to the position update message is indicated (it is indicated with "1" that such issuance is required) by the A (Acknowledgement) bit (refer to Table 2) of the binding update option. Further, also in FIGS. 12 and 13, handling of the Length fields for the IP header length, the header extension length and so forth is similar to that of Table 5 described hereinabove.

### (4) Cache request/report messages

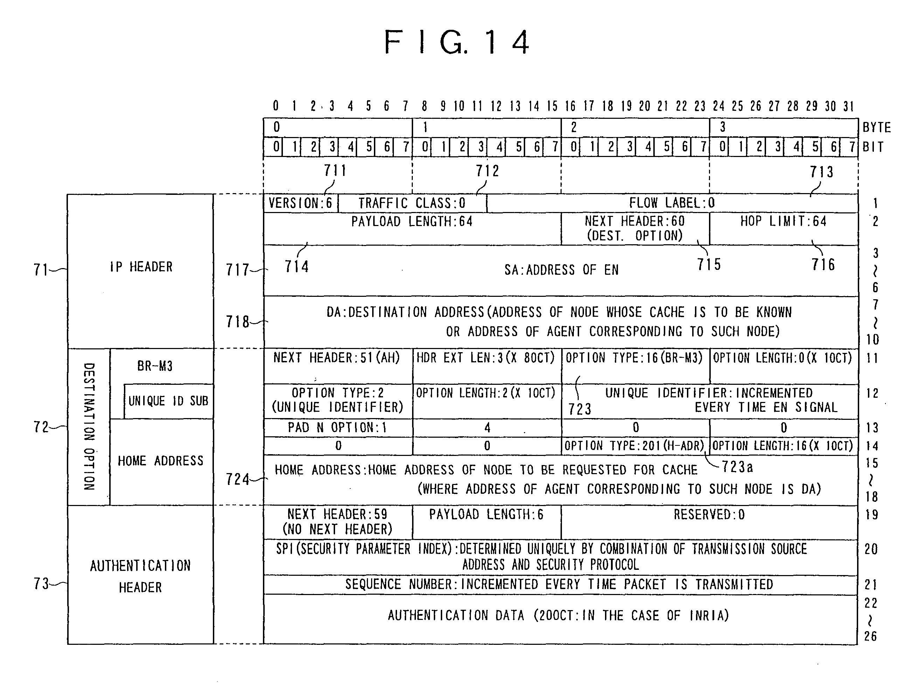

For a cache request (issued when a cache search which is hereinafter described does not result in cache hit) from the EN 12 to the VHA 10 (20) or THA 11 (21), a packet format (a portion corresponding to the IP header 70) illustrated in FIG. 14 is used. In particular, a binding request [Binding Request for M3 (BR-M3)] option defined newly as a destination option of the "MIPv6" is used.

It is to be noted that, where the address of the VHA 10 (20) or THA 11 (21) is known to the EN 12, the cache request message is issued with the VHA 10 (20) or THA 11 (21) set as the DA. In this instance, in order to indicate for which address the "cache" is requested, the home address option is used.

As another example, also a method wherein an address for which the "cache" is to be requested is designated directly in the DA. In this instance, it is possible to define such that the agent [VHA 10 (20)/THA 11 (21)] which has the "cache" discriminates from the destination option that the message is a BR-M3 message and discriminates the address for which the "cache" is to be requested from the DA.

An example of BR-M3 option parameters is given in Table 11 below, and an example of unique ID sub-option (Unique Identifier Sub-Option) parameters appearing in Table 11 is given in Table 12 below while an example of home address option (cache request) parameters is given in Table 13 below.

**TABLE 11**

| Binding Request for M3 (BR-M3) Option Parameters | | | |
|---|---|---|---|
| Parameter name | Bit(s) | Applications | Remarks |
| Option Type | 2 | 16=0x10 | |
| Option Length | 2 | Length of option except Option Type, Option Length fields. 0 + Sub-Options length (including also Sub-Option Type, Sub-Option Length fields) | |
| Sub-Options | 16 | Additional information regarding Binding Request option | |
| | | - Unique Identifier Sub-Option | |
| | | - Alternate Care of Address Sub-Option | |

**TABLE 12**

| Unique Identifier Sub-Option Parameters | | | |
|---|---|---|---|
| Parameter name | Bit(s) | Outline | Remarks |
| Option Type | 2 | 2 | |
| Option Length | 2 | Length of option except Option Type, Option Length fields | |
| Unique Identifier | 16 | Used to make Binding Request and Binding Update coincide with each other when former operation is received and latter option is signaled. | |

**TABLE 13**

| Home Address Option (Cache Request) Parameters | | | |
|---|---|---|---|
| Parameter name | Bit | Outline | Remarks |
| Option type | 8 | 201=0xC9 | |
| Option Length | 8 | 16 + Sub-Options length | |
| Home Addres | 128 | Accommodates address of cache object node when EN knows address of agent and requests agent for cache regarding node (other than agent). | |
| Sub-Options | | Not defined | |

As seen in FIG. 14, in the cache request message, a value (for example, "16") representing that the present message is a BR-M3 message is placed in the option type field 723 of the BR-M3 option, and the address of the EN 12 is placed in the SA field 717 while the address of the terminal 3 which wants to know the cache or the address of an agent (the VHA 10 (20) or THA 11 (21)) corresponding to the terminal 3 is placed in the DA field 718. Further, where the latter address is placed in the DA field 718, the home address of a node to be requested for the cache is placed in a home address field 724.

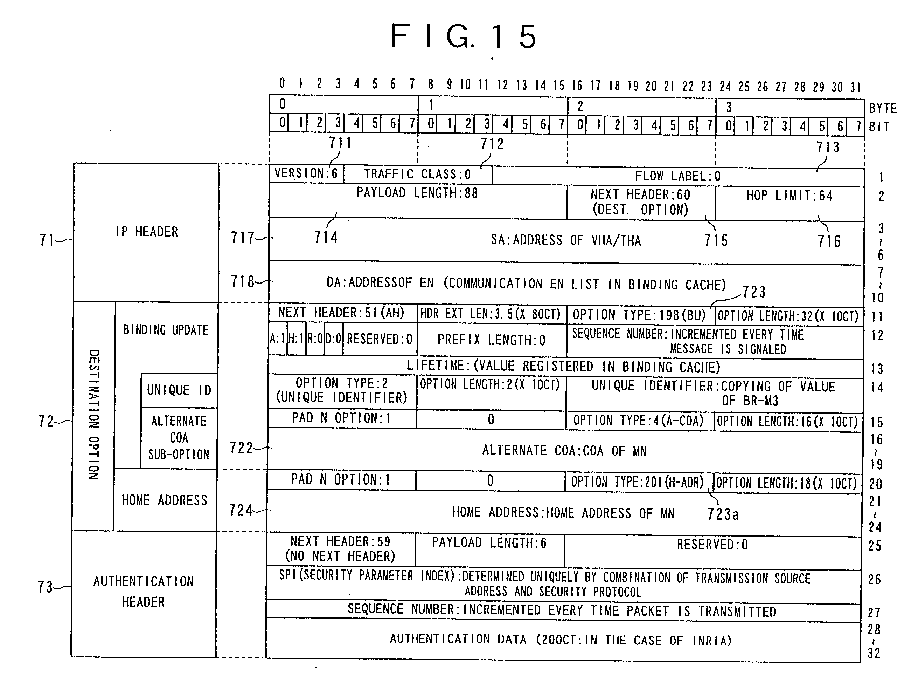

On the other hand, for a cache report to the EN 12, a packet format illustrated in FIG. 15 is used. In particular, the binding update option and the home address option are used. An example of binding update option parameters is illustrated in Table 14 below, and an example of unique ID sub-option parameters and an example of alternate COA sub-option parameters are illustrated in Table 15 and Table 16 below, respectively. It is to be noted that the alternate COA sub-option is used to specify a cache entry. Further, the home address option parameters are similar to those of Table 3 above.

**TABLE 14**

| Binding Update Option (Cache Report) Parameters | | | |
|---|---|---|---|
| Parameter name | Bit(s) | Parameter value | Remarks |
| Option Type | 8 | 198=0xC6 | |
| Option Length | 8 | 8 + Sub-Options Length | |
| Acknowledge(A) | 1 | 1 (Binding Acknowledgement request present) | |
| Home Registration (H) | 1 | EN→VHA : 1 | |
| Router (R) | 1 | In M3v6, since home link is virtual link, the bit is normally 0 | |
| Duplicate Address Detection (D) | 1 | 0 | |
| Reserved | 4 | Not used (0) | |
| Prefix Length | 8 | EN→VHA :Prefix length of virtual sub-network of VHA | |
| Sequence Number | 16 | Used with sequence number incremented by +1 basically upon every Binding Update. | |
| Lifetime | 32 | Lifetime of Binding Cache. Unit: second. | |
| Sub-Options | | Sub-Options defined by Mobile IPv6 | |
| | | · Unique Identifier Sub-Option (Not used) | |
| | | · Alternate Care of Address Sub-Option | |

**TABLE 15**

| Unique Identifier Sub-Option Parameters | | | |
|---|---|---|---|
| Parameter name | Bit(s) | Outline | Remarks |
| Option Type | 2 | 2 | |
| Option Length | 2 | Length of option except Option Type, Option Length fields. | |
| Unique Identifier | 16 | Used to make Binding Request and Binding Update coincide with each other | |

**TABLE 16**

| Alternate Care of Address Sub-Option Parameters | | | |
|---|---|---|---|
| Parameter name | Bit(s) | Outline | Remarks |
| Option Type | 8 | 4 | |
| Option Length | 16 | Length of option except Option Type, Option Length fields | |
| Alternate Care of Address | 128 | Used upon Binding Update when address other than Source Address of packet is used as Care of Address. | |

As seen in FIG. 15, in the cache report, the address of the VHA 10 (20) or THA 11 (21) which has received the cache request described hereinabove is placed in the SA field 717, and the address of the communicating EN 12 of the object of the cache report is placed in the DA field 718. Further, the COA of the terminal 3 is placed in the alternate COA field 722 of the alternate COA sub-option.

Consequently, the cache report arrives at the communicating EN 12 of the object, and the EN 12 stores the COA of the terminal 3 placed in the alternate COA as a cache of the EN 12 itself. It is to be noted that it can be identified from the binding update option that the present message is a "cache reporting message", and it can be recognized that, if the alternate COA option is used (if an option type field 723a indicates presence of an alternate COA, then any other than the SA is used as the COA. Accordingly, in order to produce a "cache", a value set in the home address field 724 is used as a search key, and a value (MN-COA) set in the alternate COA field 722 is used as the COA.

### (5) Cache deletion request/response message

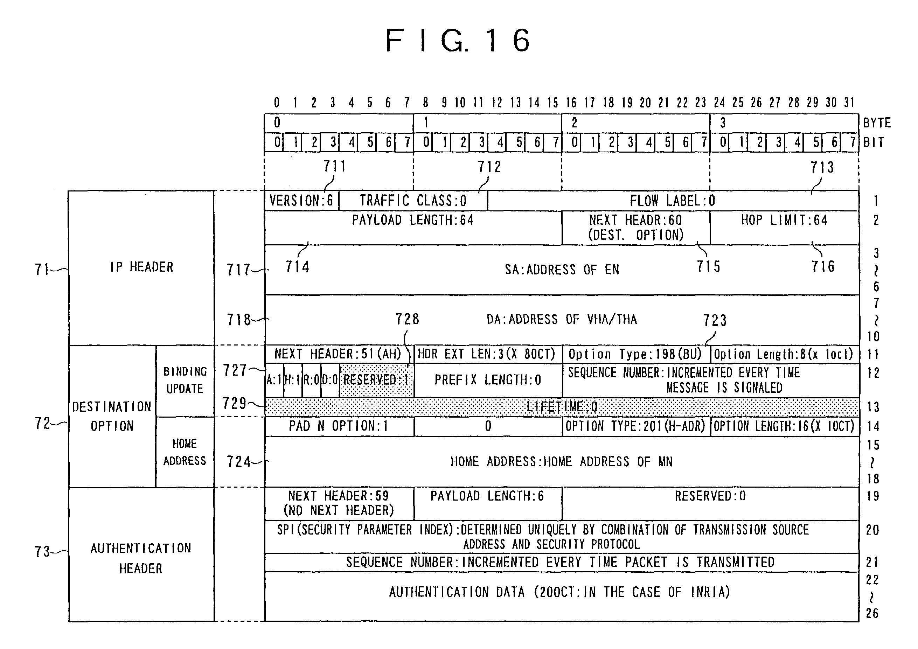

For a cache deletion request from the EN 12 to the VHA 10 (20) or THA 11 (21), a packet format illustrated in FIG. 16 is used. In particular, the binding update option described hereinabove is used. Further, in order to report the address of the terminal 3 of the object of the cache deletion, the home address option (for its parameters, refer to Table 3 given hereinabove). An example of binding update option (cache deletion request) parameters in this instance is illustrated in Table 17 below.

**TABLE 17**

| Binding Update Option (Cache Deletion Request) Parameters | | | |
|---|---|---|---|
| Parameter name | Bit(s) | Parameter value | Remarks |
| Option Type | 8 | 198=0xC6 | |
| Option Length | 8 | 8 + Sub-Options Length | |
| Acknowledge(A) | 1 | 1 (Binding Acknowledgement request present) | |
| Home Registration (H) | 1 | EN→VHA : 1 | |
| Router (R) | 1 | In M3v6, since home link is virtual link, the bit is normally 0 | |
| Duplicate Address Detection (D) | 1 | 0 | |
| Reserved | 4 | 0x01 | Newly defined |
| Prefix Length | 8 | EN→VHA : Prefix length of virtual sub-network of VHA | d.c. |
| Sequence Number | 16 | Used with sequence number incremented by +1 basically upon every Binding Update. | |
| Lifetime | 32 | 0(Lifetime of Binding Cache. Unit: second.) | |
| Sub-Options | | Sub-Options defined by Mobile IPv6 | |
| | | · Unique Identifier Sub-Option (Not used) | |
| | | · Alternate Care of Address Sub-Option (Not used) | |

As seen in FIG. 16, in the cache deletion request message, the address of the EN 12 is placed in the SA field 717, and the address of the VHA 10 (20) or THA 11 (21) is placed in the DA field 718. Further, the home address of the terminal 3 whose cache has been deleted by the EN 12 (the home address is used as a search key for specifying the deletion object cache in the VHA 10 (20) or THA 11 (21)) is placed in the home address field 724.

It is to be noted that the fact that the present message is a "cache deletion request message" is indicated by the fact that, as seen from Table 17 given hereinabove and FIG. 16, "1 (0x01)" is set in a reserved bit field 728 and "0" is set in a lifetime field 729.

Consequently, when the communicating EN 12 stops its communication and the pertaining cache is deleted, the cache deletion request message is issued to the VHA 10 (20) or THA 11 (21) which is the reporting source of the deleted cache, and the VHA 10 (20) or THA 11 (21) appropriately deletes the information which need not be kept stored any more.

The VHA 10 (20) or THA 11 (21) which receives the cache deletion request message returns a cache deletion request response message to the EN 12. For the cache deletion request response message, the binding acknowledgement option (for its parameters, refer to Table 4 given hereinabove) described hereinabove is used. In other words, for the present message , a packet format similar to that shown in FIG. 10 is used.

Then, the address set in the DA field 718 of the received packet (cache deletion request message) [in short, the address of the VHA 10 (20) or THA 11 (21)] is placed into the SA field 717, and the address set in the SA field 717 of the received packet (in short, the address of the communicating EN 12 which has issued the cache deletion request) is placed into the DA field 718. Consequently, the cache deletion performed as described above is reported back to the communicating EN 12. A3. Details of the Components of the System

In the following, configurations for implementing the VHA 10 (20), THA 11 (21), EN 12 and terminal (MN) 3 described hereinabove are described in detail. It is to be noted that, in the following description, for the convenience of description, the VHA 10 (20), THA 11 (21), EN 12 and MN 3 are sometimes referred to with their reference numerals omitted merely like VHA, THA, EN and MN. Further, where they are not particularly distinguished from one another, each of them is referred to generally as "node".

### A3.1 Details of the VHA, THA and EN

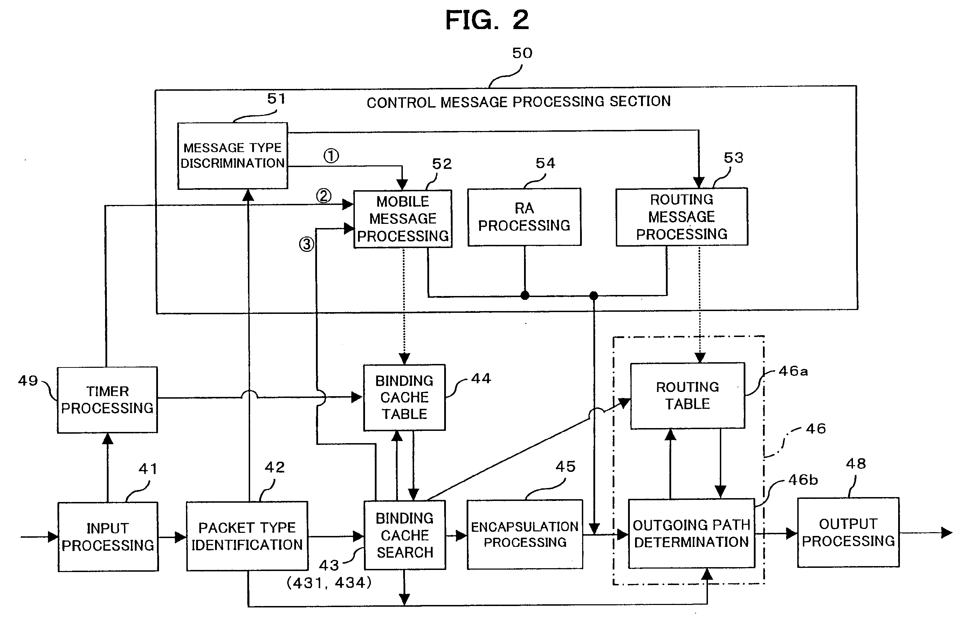

FIG. 2 is a block diagram showing a detailed configuration of essential part of the VHA 10 (20), THA 11 (21) and EN 12 described hereinabove. Referring to FIG. 2, the VHA 10 (20), THA 11 (21) and EN 12 have a common configuration and include, for example, an input processing section 41, a packet type identification section 42, a binding cache search section 43, a binding cache (Binding Cache) table 44, an encapsulation processing section 45, a router processing section 46 including a routing table 46a and an outgoing path determination section 46b, an output processing section 48, a timer processing section 49 and a control message processing section 50. It is to be noted that, in FIG. 2, reference numeral 431 denotes a traffic type identification section and 434 represents a bridge section. However, functions of the two sections are hereinafter described in connection with a second embodiment of the present invention.

The input processing section 41 performs processing of the IP layer or lower layers of an arriving or incoming (received) packet. For example, in an ethernet, the input processing section 41 has a function of fetching a packet to which an MAC (Media Access Control) address destined for the node itself is applied and checking the normality of a frame itself of the packet.

The packet type identification section 42 refers to the header part (particularly the DA field 718) of a normal packet received by the input processing section 41 to identify the type of the packet (principally among a control message, a multicast packet and the other packets). Here, the packet type identification section 42 delivers such various control messages as described hereinabove and a multicast packet to the control message processing section 50 and delivers the other packets to the binding cache search section 43.

The binding cache table (which may sometimes be hereinafter referred to merely as "cache table") 44 shown in FIG. 2 stores "caches" produced basically on the "MIPv6" base as data of the form of a table for each of home addresses (MN home addresses) of terminals 3, and is formed from a required storage device such as, for example, a RAM or a register. However, the stored contents of the binding cache table 44 are different between the VHA/THA and the EN.

In particular, the cache table 44 of the VHA/THA holds, for example, as illustrated in FIG. 4(A), cache data 61a of "COA" (128 bits), "Lifetime" (32 bits), "Home registration flag" (1 bit), "router flag" (1 bit), "prefix length" (7 bits), "Sequence Number" (16 bits), "Recent Usage Information" (1 bit) and "last BR time" (128 bits), and a plurality of (in the present example, 16 in the maximum) "communicating EN address" (128 bits x 16) data (extension data) 61b.

This signifies that a "cache" of one terminal 3 can be copied into a plurality of (16 in the maximum) ENs. In other words, a plurality of ENs which can perform routing in place of a VHA/THA can be set, and the processing load to the VHA/THA can be distributed to such ENs and therefore can be reduced significantly.

In contrast, the cache table 44 of the EN 12 holds, as seen in FIG. 4(B), aforementioned cache data 61a reported from a VHA or THA, and "VHA/THA address" (128 bits) data (extension data) 62b. It is to be noted that, as hereinafter described, the cache table 44 described above is produced (registered) by a mobile message processing section 52, and updating (subtraction) of the "Lifetime" from within the entry of the binding cache table 44 is performed by the timer processing section 49.

In particular, a portion of the VHA/THA which is formed from the cache table 44, timer processing section 49 and mobile message processing section 52 achieves a function as terminal position management means for managing a COA (current position information) reported and registered by a terminal 3 (current position registration means which is hereinafter described), and the binding cache table 44 of the VHA/THA achieves a function also as node identification information storage means for storing an EN address (identification information) of a communicating EN 12.

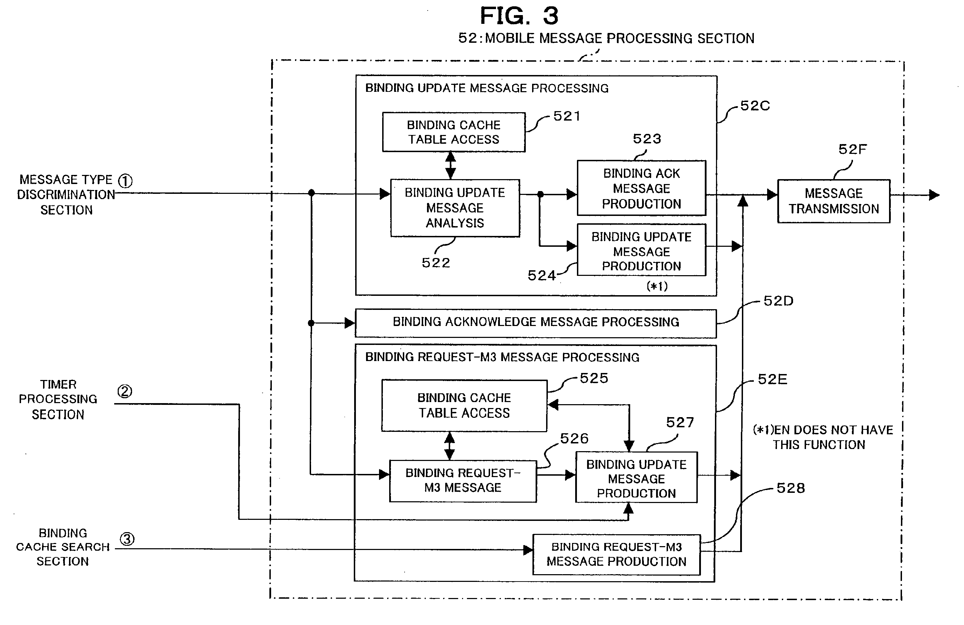

On the other hand, the binding cache table 44 on the EN side achieves a function as cache means for storing a "cache" reported through a cache reporting message produced and issued by a binding update message production section 524 (hereinafter described with reference to FIG. 3) of the VHA/THA/another EN which functions as cache information reporting means which is hereinafter described.

The binding cache search section (which may be hereinafter referred to merely as "cache search section") 43 uses the home address (128 bits) of the MN 3 included in the IP header 70 of an input packet as a search key to search the cache table 44 (data 61a or 62a) described hereinabove to acquire position information (the COA) and so forth of the MN 3 at present.

The encapsulation processing section 45 encapsulates the received packet based on the information of the COA and so forth obtained by the cache search of the binding cache search section 43. The outgoing path determination section 46b of the router processing section 46 uses the COA included in the encapsulated packet (such a packet is hereinafter referred to as tunnel packet) as a search key to search routing information stored in the routing table 46a to determine an outgoing path (output interface), a destination address in a lower layer and so forth in accordance with the COA.

In particular, the router processing section 46 in the EN functions as routing means for performing routing of a packet destined for a terminal 3 to a resident EN in place of a VHA/THA (gate node) based on cache information (which may be hereinafter referred to as cache entry or entries) stored in the cache table 44 serving as cache means.

The output processing section 48 outputs the received packet to the determined output port so as to transfer the packet to a next hop destination. For example, in an ethernet, the output processing section 48 applies a necessary frame check sequence code to an ethernet frame and signals the resulting packet (frame). Consequently, the received packet is transferred correctly from the VHA 10 (20) to a desired THA 11 (21) (in the case of a "VCOA" or from the THA 11 (21) to a desired EN 12 (in the case of "PCOA").

The timer processing section 49 has a function of updating the "Lifetime" included in the data 61a of the "cache" of the above-described cache table 44 in such a manner as described hereinabove, that is, a function of successively decrementing the "Lifetime" while no packet is received by the input processing section 41, but updating the "Lifetime" so as not to expire (not to be reduced to "0") while a packet is successively received. The timer processing section 49 further has a function of deleting the pertaining "cache information" when the "Lifetime" expires.

The control message processing section 50 performs a process corresponding to a control message identified as a control message by the packet type identification section 42 and inputted to the control message processing section 50. In the present embodiment, the control message processing section 50 includes, for example, as shown in FIG. 2, a message type discrimination section 51, a mobile message processing section 52, a routing message processing section 53 and a router advertisement (RA) message processing section 54. It is to be noted that the router advertisement message processing section 54 is a function unique to the EN 12 and may not be incorporated in the VHA 10 (20) or THA 11 (21).

The message type discrimination section 51 discriminates (identifies) the type of a received control message. In particular, the message type discrimination section 51 here discriminates such mobile messages as described hereinabove and the other routing messages from each other and distributes the mobile messages to the mobile message processing section 52, but distributes the routing messages to the routing message processing section 53.

The mobile message processing section 52 discriminates the type of a received mobile message and performs a process in accordance with the type. In the present embodiment, as such message types, principally (i) binding update messages (home/resident position registration messages, cache update message and cache deletion request message) which use the binding update (Binding Update) option, (ii) binding acknowledgement messages (home/resident position registration response messages, cache report message, cache deletion response message, cache update response message) which use the binding acknowledge (Binding Ack) option and (iii) the binding request (Binding Request-M3) message are available as described hereinabove.

Therefore, the mobile message processing section 52 includes, for example, as shown in FIG. 3, a binding update (Binding Update) message processing section 52C, a binding acknowledge (Binding Acknowledge) message processing section 52D, and a binding request (Binding Request-M3 message processing section 52E.

The binding update message processing section 52C performs a process in accordance with a binding update message inputted from the message type discrimination section 51 described hereinabove. In the present embodiment, the binding update message processing section 52C includes, for example, a binding cache table access section 521, a binding update message analysis section 522, a binding acknowledgement message production section 523, and a binding update message production section 524. It is to be noted, however, that the function of the binding update message production section 524 is incorporated only in the VHA 10 (20) or the THA 11 (21) but is not incorporated in the EN 12.

The binding cache table access section 521 (hereinafter referred to simply as "table access section 521") can access the binding cache table 44 using the MN home address as a search key to update or delete stored contents (a cache) of the binding cache table 44. The binding update message analysis section 522 analyzes contents of the binding update message inputted from the message type discrimination section 51.

In the VHA/THA, if a result of the analysis by the binding update message analysis section 522 reveals that the received binding update message is the home/resident position registration message from a terminal 3, then the COA reported with the message is written into a storage area (memory address) of the cache table 44 specified with the MN home address set in the same message to perform position registration by the table access section 521. Together with this, the binding update message production section 524 produces and issues a cache update message to the communicating EN 12.

In particular, the binding update message production

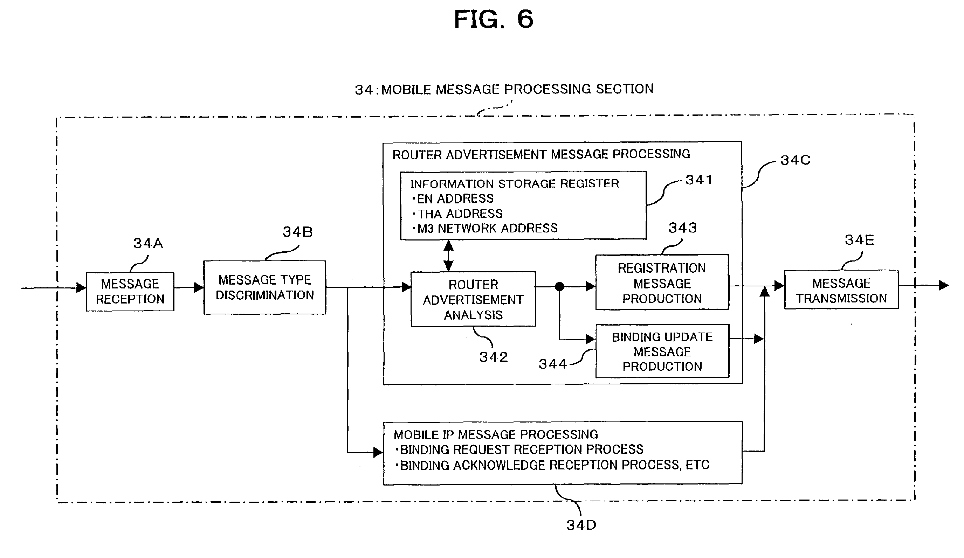

In particular, the binding update message production section 524 functions as cache information updating means for updating the "cache" of the communicating EN 12 based on the current position information (COA) reported newly from the terminal 3 by a position registration message production section 343 (hereinafter described with reference to FIG. 6) which functions as current position reporting means as the terminal 3 moves. Consequently, the router processing section 46 in the communicating EN 12 can route the packet destined for the terminal 3 correctly to the new movement destination (resident EN 12) in place of a THA/VHA based on the "cache" after updated.

On the other hand, if the received binding update message is a cache deletion request message from the communicating EN 12, then the table access section 521 uses the MN home address set in the message as a search key to delete the pertaining "cache" ("communicating EN address" data 61b), and the binding acknowledgement message production section 523 produces and issues a cache deletion response message destined for the communicating EN 12 described above.

In short, the table access section 521 functions as node identification information deletion means for deleting, when it receives a cache deletion request message produced and issued by a binding update message production section 527 of the EN 12, the "communicating EN address" data 62b stored in the cache table 44 of the node (VHA/THA) itself.

On the other hand, in the EN 12, if the result of the analysis by the binding update message analysis section 522 described above proves that the received binding update message is a cache update message from the VHA 10 (20) or THA 11 (21), then the COA reported with the message is written into a storage area of the cache table 44 specified with the MN home address set in the same message by the table access section 521 so as to establish synchronism with the cache managed by the VHA/THA. Together with this, a cache update response message destined for the VHA/THA is produced and issued by the binding acknowledgement message production section 523.

The binding acknowledge message processing section 52D shown in FIG. 3 performs a reception process of a binding acknowledgement message inputted from the message type discrimination section 51. Further, the binding acknowledge message processing section 52D analyzes contents of the received message and performs alteration of an internal parameter or the like if necessary.

The binding request message processing section 52E performs a process in accordance with a binding request message inputted thereto from the message type discrimination section 51. To this end, the binding request message processing section 52E in the present embodiment further includes a binding cache table access section 525, a binding request (BR-M3) message analysis section 526, a binding update message production section 527 and a binding request (BR-M3) message production section 528.

The binding cache table access section 525 (hereinafter referred to simply as "table access section 525") can use, similarly to that of the binding update message processing section 52C, the MN home address as a search key to access the cache table 44 to update stored contents (a cache) of the cache table 44. The binding request message analysis section 526 analyzes contents of a binding request message ([cache request (BR-M3) message] inputted thereto from the message type discrimination section 51.

Based on a result of the analysis by the binding request message analysis section 526, the table access section 525 uses the MN home address set in the message as a search key to search the cache table 44 to acquire the pertaining cache. Then, the binding update message production section 527 produces and issues a cache report message for reporting the cache to the node (VHA/THA/EN) of the source of the request.

In particular, the binding update message production section 527 functions as cache information reporting means for reporting, when a cache request (BR-M3) message from an EN (communicating EN) 12 which routes a packet destined for the terminal 3 is received, a cache (COA and so forth) managed by (stored in) the cache table 44 to the communicating EN 12.

It is to be noted that the binding update message production section 527 further has, in the EN 12, a function of issuing, when a "cache" whose "Lifetime" has expired is deleted by the timer processing section 49 (refer to FIG. 2) described hereinabove, a cache deletion request message for requesting the VHA/THA/EN, which has issued the cache report, for deletion of the pertaining "cache" ("communicating EN address" data 62b).

In other words, the binding update message production section 527 has a function as node identification information deletion requesting means for requesting, when communication of an EN 12 comes to an end and the term of the "cache" expires, the node (VHA/THA/EN) of the source of the cache report for deletion of the "communicating EN address" data 62b of the "cache".

The binding request message production section (cache information requesting means) 528 produces and issue a binding request message (cache request message) destined for a VHA/THA/another EN when the result of the search by the binding cache search section 43 described above reveals that the necessary "cache" is not stored in the cache table 44.

A message transmission section 52F transmits various messages produced by the binding acknowledgement message production section 523, binding update message production section 524 and binding update message production section 527 described above to the router processing section 46 (outgoing path determination section 46b; refer to FIG. 2). Consequently, various messages are individually transferred to next hop destination nodes through desired output interfaces.

The routing message processing section 53 shown in FIG. 2 performs a process (for example, updating of routing information necessitated by alteration of a network configuration or the like) regarding a routing message such as an RIP (Routing Information Protocol) or the like inputted thereto from the message type discrimination section 51 as a result of discrimination that the message is a control message other than the mobile messages. The RA message processing section 54, which is unique to the EN 12, issues a router advertisement to resident terminals 3. In the present embodiment, the router advertisement message processing section 54 produces and issues a "router advertisement" including an EN address, a THA address and an M3 network address as described hereinabove.

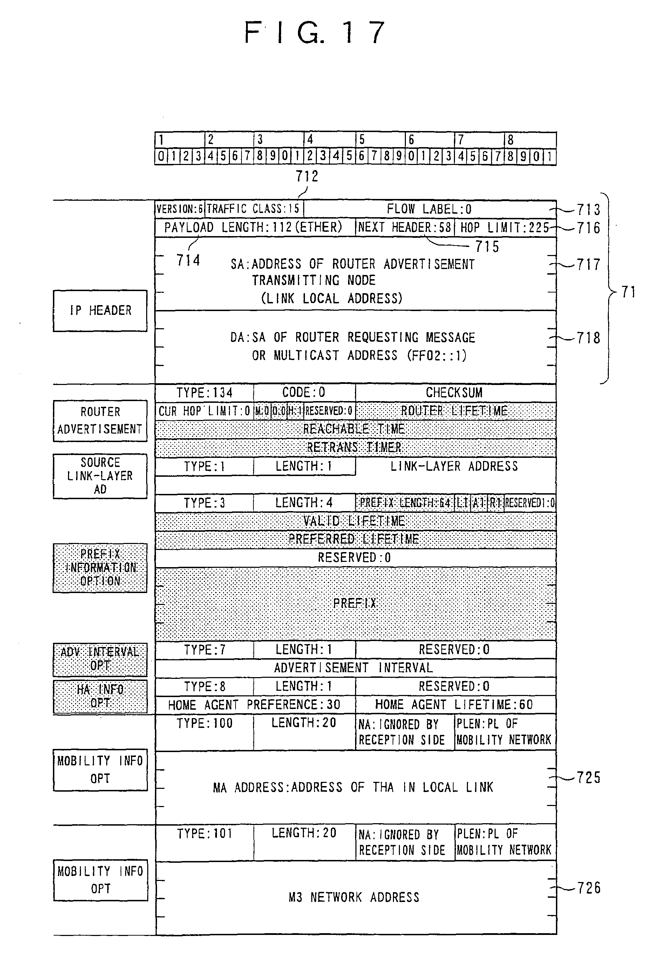

More particularly, the router advertisement message processing section 54 produces and issues a "router advertisement" wherein, for example, as seen in FIG. 17, an EN address (link local address of a router advertisement transmission node) is placed in the SA field 717; a THA address [the address of a THA 11 (21) which is in a local link (in other words, which accommodates the EN 12)] is placed in an MA address field 725 defined as a mobility option (Type: 100) ; and an M3 network address is placed in an M3 network address field 726 defined as another mobility option (Type; 101).

It is to be noted that the "link local address" signifies an address which is used only in a link under the router advertisement transmission node, and is used also in applications other than the "router advertisement". A3.2 Detailed Configuration of the Terminal (MN) 3

Now, a detailed configuration of the terminal 3 is described.

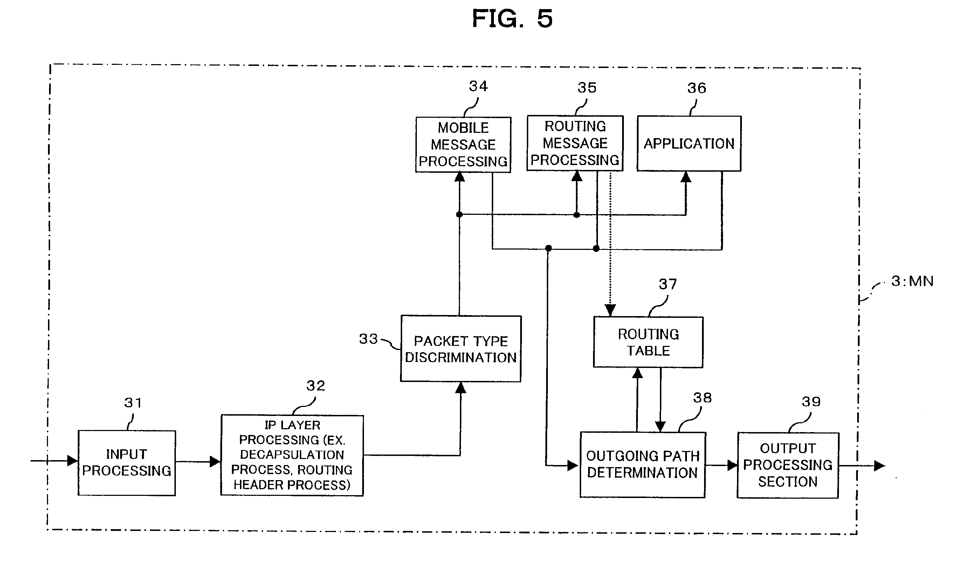

FIG. 5 is a block diagram showing a detailed configuration of the terminal 3. Referring to FIG. 5, the terminal 3 in the present embodiment includes an input processing section 31, an IP layer processing section 32, a packet type discrimination section 33, a mobile message processing section 34, a routing message processing section 35, an application 36, a routing table 37, an outgoing path determination section 38, and an output processing section 39.

The input processing section 31 receives a packet from the nearest EN 12 (of a local link). The IP layer processing section 32 performs various IP layer processes such as a decapsulation process (only when a packet is in an encapsulated state) and a routing header process regarding a packet inputted thereto from the input processing section 31.

The packet type discrimination section 33 discriminates the type (a mobile message, a routing message or the like) of a received packet after the IP layer processes described above. The packet type discrimination section 33 thus distributes a mobile message (in this instance, principally a "router advertisement", a home/resident position registration response message or the like) to the mobile message processing section 34, a routing message to the routing message processing section 35 and any other packet (user packet or the like) to the application section 36.

The routing message processing section 35 processes control messages (routing messages) other than mobile messages. The application section 36 takes charge of a reception process of any other packet (user packet or the like) than control messages. The mobile message processing section 34 takes charge of a position registration process upon reception of a "router advertisement" reported from an EN 12 or a process regarding a home/resident position registration response message or the like.

To this end, the mobile message processing section 34 includes, as principal components thereof, for example, as seen in FIG. 6, a message reception section 34A, a message type discrimination section 34B, a router advertisement message processing section 34C, a mobile IP message processing section 34D andamessage transmission section 34E. The router advertisement message processing section 34C in turn includes an information storage register 341, a router advertisement analysis section 342, a position registration message production section 343 and a binding update message production section 344.

The message reception section 34A receives a mobile message distributed from the packet type discrimination section 33. The message type discrimination section 34B discriminates whether the received mobile message is a "router advertisement" or any other mobile IP message. The message type discrimination section 34B transfers a "router advertisement" to the router advertisement message processing section 34C and transfers any other mobile IP message to the mobile IP message processing section 34D.

In the router advertisement message processing section 34C, the information storage register 341 stores an EN address, a THA address and an M3 network address (such addresses may be hereinafter referred to generally as "address information") mentioned hereinabove included in the received "router advertisement". The router advertisement analysis section 342 analyzes contents of the "router advertisement" transferred thereto from the message type discrimination section 34B. In particular, the router advertisement analysis section 342 extracts the EN address, THA address and M3 network address and stores the addresses into the mobile message processing section 34.

It is to be noted, however, that the router advertisement analysis section 342 further has a function of comparing address information of the past stored in the mobile message processing section 34 and address information included in the latest received "router advertisement". In the present embodiment, even if the comparison reveals that the EN address exhibits a change as a result of movement of the terminal 3, if the M3 network address does not exhibit a change, then the THA address is not updated.

Consequently, in the "HMIPv6", although the position registration message production section 343 produces and issues a resident position registration message destined for a THA 11 (21) having a new THA address after the EN address changes, unless the M3 network address exhibits a change, the position registration message production section 343 produces and issues a resident position registration message destined for the THA 11 (21) having the old THA address.

In other words, the message reception section 34A functions as report information reception means for receiving a "router advertisement" (report information) issued as a report from the EN 12; the router advertisement analysis section 342 functions as gate node identification information supervision means for supervising whether or not the THA address (gate node identification information) included in the "router advertisement" received by the message reception section 34A exhibits a change and further as network identification information supervision means for supervising whether or not the ME network address (network identification information) included in the "router advertisement" exhibits a change; and the position registration message production section 343 functions as current position reporting means for reporting current position information (the COA) of the terminal 3 itself to the same THA if a change of the ME network address is not detected by the network identification information supervision means even if a change of the THA address is detected by the gate node identification information supervision means.

The mobile message processing section 34 in the present embodiment having such various means as specified above thus functions as current position registration means for reporting and registering the COA ("PCOA") based on the EN address of the resident EN 12 to and into the VHA/THA.

It is to be noted that the processes described above are performed when the terminal 3 is roaming. On the other hand, when the terminal 3 is not roaming (in other words, when the terminal 3 is moving in the home network 1 (2)), each time a change of the EN address is detected, a home position registration message destined for the VHA 10 (20) is produced and issued by the binding update message production section 344 so that position registration (registration of the "PCOA") into the VHA 10 (20) is performed. In short, when the terminal 3 is present in the packet network 1 (2), the THA 11 (21) is not used.

The discrimination of whether or not the terminal 3 is positioned in the home network 1 in this instance may be performed by storing the M3 network address of the home network 1 as a default address (which is hereinafter referred to as "M3 home network address") into the information storage register 341 in advance and comparing the M3 home network address with an M3 network address included in the "router advertisement". It is to be noted that, if the "router advertisement" does not include an M3 network address, then this signifies that the network is a non-"M3 compliant network" (in other words, a THA is not prepared for the network).

In this instance, the terminal 3 performs a position registration process which complies with the existing "MIPv6". In particular, if the network of the destination of roaming is a non-hierarchical network, then every time the EN address included in a "router advertisement" exhibits a change when the terminal 3 moves, the terminal 3 performs position registration into a VHA of the packet network 1 (2) of the terminal 3 itself. However, if the network of the destination of roaming is a hierarchical network, then each time the EN address exhibits a change, the terminal 3 performs position registration into an MA of a local link. It is to be noted that the function of producing a position registration message to the VHA or the MA in this instance may be provided as an additional function of the position registration message production section 343 and the binding update message production section 344 or as a function allocated exclusively to a separate element.

The mobile IP message processing section 34D shown in FIG. 6 takes charge of processes of messages (Binding Request, Binding Ack message and so forth) other than the "router advertisement" described above. For example, the mobile IP message processing section 34D performs a reception process of a response (home/resident position registration response message) to the home/resident position registration message described above and so forth. The message transmission section 34E transmits the home/resident position registration message or the like to the outgoing path determination section 38 shown in FIG. 5. It is to be noted that the functions just described are prepared as standard functions for a mobile IP terminal.

Referring back to FIG. 5, the routing table 37 stores routing information necessary for transmission of a packet from the terminal 3. The routing information is suitably updated in response to a received routing message by the routing message processing section 35. It is to be noted that also the routing table 37 is implemented by a storage device such as, for example, a RAM or a register.

The outgoing path determination section 38 determines an output destination (interface) of a packet inputted from the mobile message processing section 34, routing message processing section 35 and application section 36 described hereinabove based on destination information (DA) of the packet and routing information of the routing table 37. The output processing section 39 outputs a packet to a desired output interface in accordance with the determination by the outgoing path determination section 38.

### A4. Operation

Now, operation of the packet communication system of the present embodiment having the configuration described above is described in detail.

### A4.1 Operation (Position Registration Process) of the Terminal 3

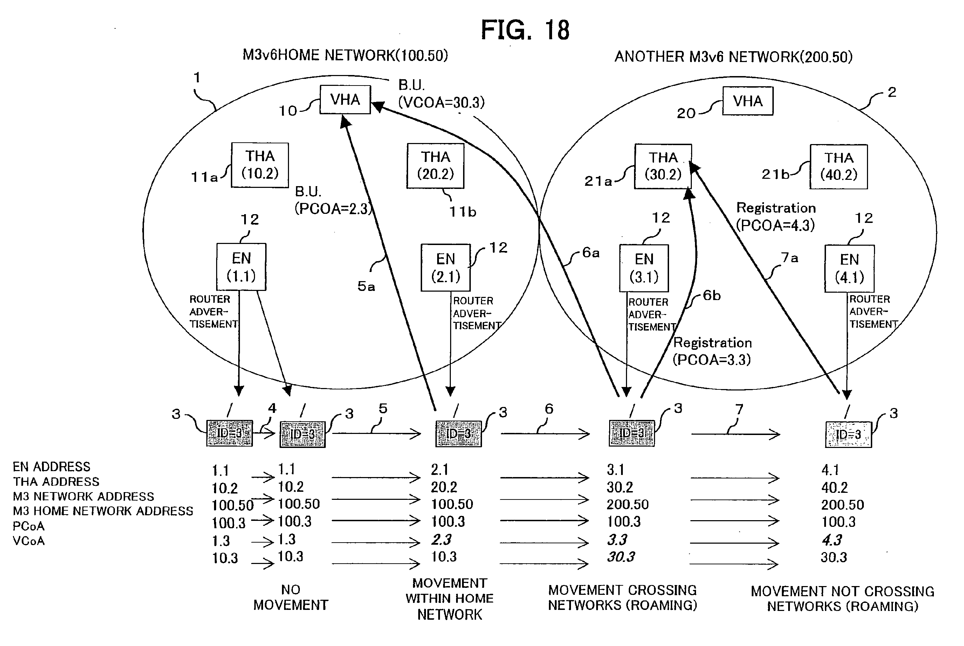

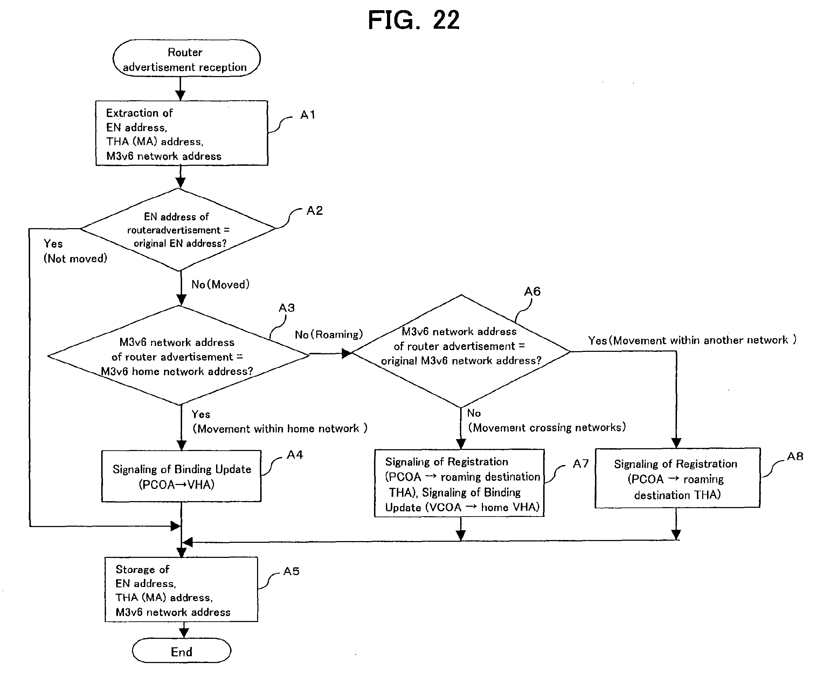

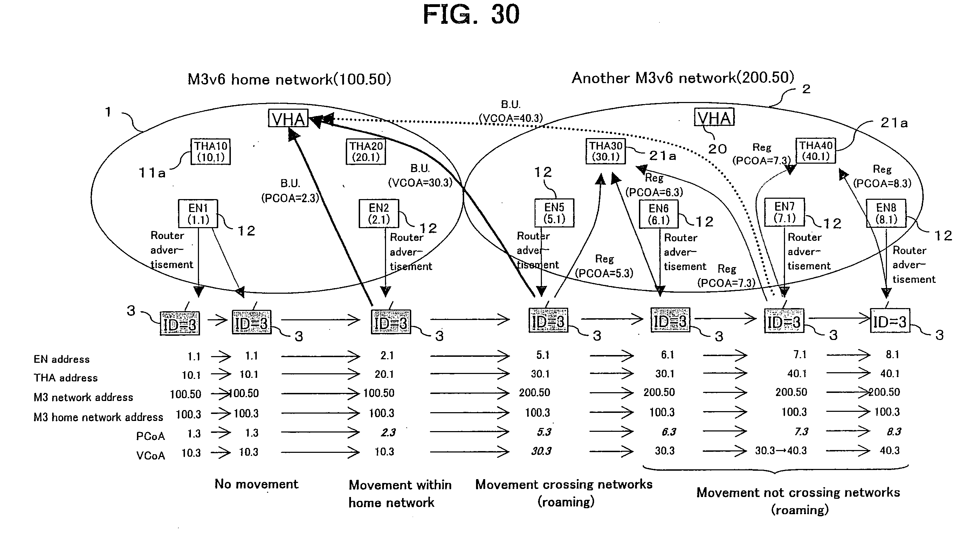

First, operation (a position registration process) of the terminal 3 is described with reference to FIGS. 18 and 22. It is to be noted here that, for the convenience of description, as seen in FIG. 18, the address representation of the "MIPv6" is given as '"network address"."interface address"', and it is assumed that the address (M3 network address) of the home network 1 of the terminal 3 is "100.50", the M3 network address of the packet network 2 of the roaming destination is "200.50", the addresses of the THAs 11a, 11b, 21a and 21b are "10.2", "20.2", "30.2" and "40.2", respectively, and the addresses of the ENs 12 (EN"1" to EN"4") are "1.1", "2.1", "3.1" and"4.1", respectively. Further, it is assumed that the interface ID of the terminal 3 is "3" (accordingly, in this instance, the M3 network home address is "100.3"). Naturally, actual address representations of them are different from the representations given above (actually, such a long representation, for example, as "aaaa.b.c.d"). The description given above similarly applies with regard to FIG. 30 as hereinafter described.

Referring to FIG. 18, it is assumed that the terminal 3 first moves (refer to an arrow mark 4) within a resident zone of the EN "1". In this instance, in the terminal 3, the router advertisement analysis section 342 (refer to FIG. 6) extracts the EN address (1.1), THA address (10.2) andM3 network address (100.50) of a "router advertisement" received from the EN "1" as seen in FIG. 22 (step A1). Then, the router advertisement analysis section 342 compares the received EN address with an EN address stored in the information storage register 341 to discriminate whether or not they coincide with each other (step A2).

In this instance, since the terminal 3 receives a "router advertisement" from the same EN "1" , the EN address (1.1) does not exhibit a change. Accordingly, the router advertisement analysis section 342 places the extracted EN address (1.1), THA address (10.2) and M3 network address (100.50) as they are into the information storage register 341 (from the Yes route of step A2 to step A5).

It is assumed that thereafter the terminal 3 further moves and enters a resident zone of the different EN "2" (refer to an arrow mark 5). Thereupon, in the terminal 3, the EN address included in a received "router advertisement" changes from "1.1" to "2.1". Thus, the router advertisement analysis section 342 now compares the M3 network address included in the "router advertisement" with the M3 home network address stored in the information storage register 341 to check whether or not they coincide with each other (from the No route of step A2 to step A3).

In this instance, as seen from FIG. 18, although the EN address and the THA address exhibit a change, the M3 network address does not exhibit a change and besides the M3 home network address does not exhibit a change either. Therefore, the router advertisement analysis section 342 recognizes that the movement of the terminal 3 is a movement within the packet network 1 and requests the binding update message production section 344 to produce a home position registration message.

In response to the request, the binding update message production section 344 produces and issues a home position registration message wherein the "PCOA" is set in the SA field 717 illustrated in FIG. 9 and the address of the VHA 10 is set in the DA field 718 (from the Yes route of step A3 to step A4) to perform position registration into the VHA 10 (refer to an arrow mark 5a of FIG. 18), and stores the EN address (2.1), THA address (20.2) and M3 network address (100.50) received with the "router advertisement" into the information storage register 341 (step A5).

It is to be noted that the address of the VHA 10 is set in advance for each terminal 3. Further, the "PCOA" is produced from the EN address included in the "router advertisement" issued by the EN "2" as described hereinabove. In particular, the network prefix part of the EN address (in the present example, the part of "2" of "2.1") and the interface ID (= "3") of the terminal 3 itself are combined with each other to produce the "PCOA". Accordingly, in this instance, the terminal 3 produces the "PCOA" = "2.3" and reports this to the VHA 10.

In this manner, while the terminal 3 of the present embodiment remains positioned within the home network 1 (2) of the terminal 3 itself, it does not perform position registration into a THA but normally performs registration of the "PCOA" into a VHA.

Then, it is assumed that thereafter the terminal 3 further moves until it enters (roams into) a resident zone of the EN "3" of the packet network 2 as indicated by an arrow mark 6 in FIG. 18. In this instance, the EN address included in a "router advertisement" received by the terminal 3 changes from "2.1" to "3.1" and also the M3 network address changes from the M3 home network address (100.3) to a different address (200.50). Thus, the router advertisement analysis section 342 now compares the M3 network address included in the "router advertisement" with the M3 home network address stored in the information storage register 341 to check whether or not they coincide with each other (from the No route of step A2 to step A3 and from the No route of step A3 to step A6).

Now, since the M3 network address included in the "router advertisement" exhibits a change from the original address "100.50" to "200.50", the router advertisement analysis section 342 recognizes that the terminal 3 has moved (roamed) crossing the packet networks 1 and 2. Thus, the router advertisement analysis section 342 requests the position registration message production section 343 to produce a resident position registration message and requests the binding update message production section 344 to produce a home position registration message.

In response to the request, the binding update message production section 344 produces and issues a home position registration message wherein the "VCOA" is set in the SA field 717 illustrated in FIG. 9 and the address of the VHA 10 is set in the DA field 718 to perform position registration into the VHA 10 (refer to an arrow mark 6a of FIG. 18). It is to be noted that the "VCOA" at this time is "30.3" because it is produced from a combination of the network prefix part ("30") of the THA address (30.2) and the interface ID (= "3") of the terminal 3.

Meanwhile,the position registration message production section 343 produces and issues a resident position registration message wherein the "PCOA" (3.3) is set in the SA field 717 illustrated in FIG. 11 and the THA address (30.2) is set in the DA field 718 to perform position registration into the THA 21a (refer to an arrow mark 6b of FIG. 18). In short, when the terminal 3 moves (roams) crossing the packet networks 1 and 2, it performs position registration into the VHA 10 of the home network 1 and the THA 21a which accommodates the nearest EN 12 of the roaming destination (from the No route of step A6 to step A7).

It is to be noted that, also after the router advertisement analysis section 342 issues the requests for production of messages described above, it stores the EN address (3.1), THA address (30.2) and M3 network address (200.50) extracted from the "router advertisement" into the information storage register 341 (to update the address information stored in the information storage register 341) (step A5).

Now, it is assumed that the terminal 3 further moves within the packet network 2 of the roaming destination until it enters a resident zone of the different EN "4". In this instance, the EN address included in a "router advertisement" received by the terminal 3 now changes from "3.1" to "4.1", but the M3 network address remains "200.50" which is different from the M3 home network address (100.3) (since the discriminations in steps A2 and A3 are No and the discrimination in step A6 is Yes), the router advertisement analysis section 342 requests the position registration message production section 343 to produce a resident position registration message.

In request to the request, the position registration message production section 343 produces and issues a resident position registration message wherein the "PCOA" (4.3) is set in the SA field 717 illustrated in FIG. 11 and the original THA address (30.2) stored in the information storage register 341 is set in the DA field 718 to perform position registration into the same THA 21a (step A8; refer to an arrow mark 7a of FIG. 18). Then, the router advertisement analysis section 342 stores the EN address (4.1), THA address (40.2) and M3 network address (200.50) received with the "router advertisement" into the information storage register 341 (to update the address information stored in the information storage register 341) (step A5).

In particular, if it is assumed that the terminal 3 of the present embodiment is incorporated otherwise in an existing system compliant with the "HMIPv6", then since the EN address included in the "router advertisement" exhibits a change, the terminal 3 performs position registration into another THA 21b having the THA address (40.2) which is included in the same "router advertisement" (changes over the THA of the object of position registration thereof). In the present embodiment, however, even if the EN address exhibits a change, if the M3 network address does not exhibit a change, then the terminal 3 performs position registration into the THA 21a into which the terminal 3 has performed position registration first to continuously use the same THA 21a as the object of position registration irrespective of the movement of the terminal 3 itself.

This signifies that the terminal 3 during roaming must perform position registration into a VHA 10 of the packet network 1 only when it roams into the packet network 2. Accordingly, it is not necessary for the terminal 3 to perform position registration into a VHA 10 of the packet network 1 every time the MA changes over as in an existing system compliant with the "HMIPv6", and therefore, the handover time during roaming of the terminal 3 is reduced significantly.

### A4.2 Operation of the VHA/THA

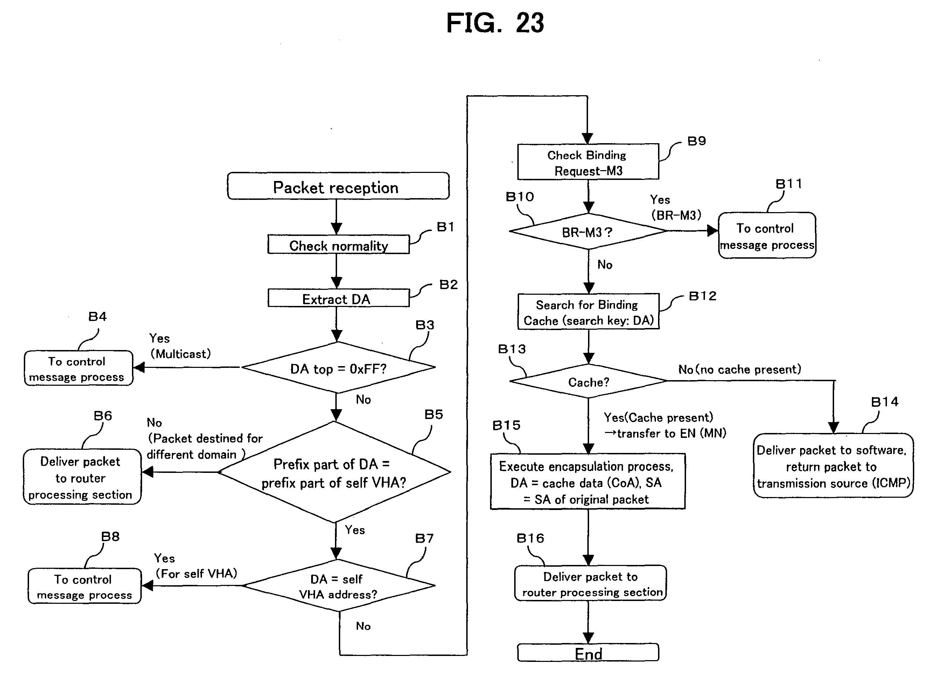

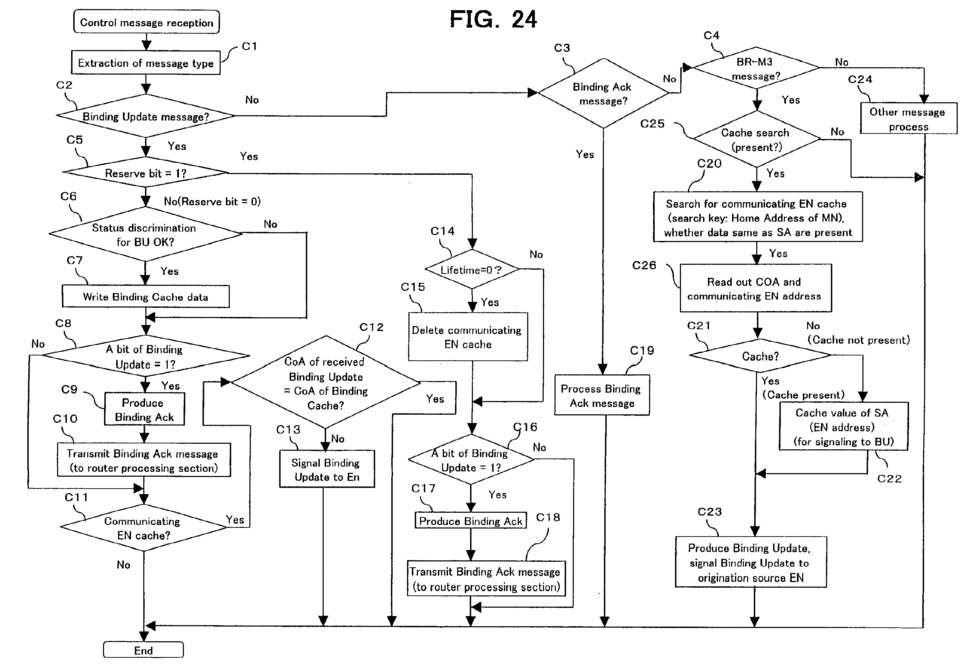

Now, operation of the VHA/THA side is described with reference to FIGS. 23 and 24.

Referring first to FIG. 23, if the VHA/THA receives a packet, then the input processing section 41 checks the normality of the packet (step B1), and the packet type identification section 42 extracts a destination address set in the DA field 718 (step B2). Then, the packet type identification section 42 checks whether or not the top of the extracted address is "0xFF" (step B3). If the top of the address is "0xFF", then since the received packet is a multicast packet, the packet type identification section 42 transfers the packet to the control message processing section 50 (from the Yes route of step B3 to step B4).

On the other hand, if the extracted destination address has a value any other than the "0xFF", then the packet type identification section 42 checks whether or not the prefix part (higher order 64 bits) of the destination address coincides with the prefix part of the VHA/THA address of the VHA/THA itself (from the No route of step B3 to step B5). If they do not coincide with each other, then since the received packet is destined for a different domain, the packet type identification section 42 transfers the received packet as it is to the router processing section 46 (from the No route of step B5 to step B6).

On the contrary if the prefix part of the destination address coincides with the prefix part of the VHA/THA address of the VHA/THA itself, then the packet type identification section 42 checks whether or not the destination address (lower order 64 bits) coincides with the VHA/THA address of the VHA/THA itself (from the Yes route of step B5 to step B7). If they coincide with each other, then since the received packet is destined for the VHA/THA itself (thatis, the packet is a control message), the packet type identification section 42 transfers the received packet to the control message processing section 50 (from the Yes route of step B7 to step B8).

On the contrary if the destination address (lower 64 bits) does not coincide with the VHA/THA address of the VHA/THA itself, then the packet type identification section 42 refers to the destination option of the received packet to check whether or not the packet is a cache request (BR-M3) message (Option Type = 16) (from the No route of step B7 to step B9).

If a result of the checking proves that the received packet is a BR-M3 message, then the packet type identification section 42 transfers the received packet to the control message processing section 50 (from the Yes route of step B10 to step B11). However, if the result of the checking proves that the received packet is not a BR-M3 message, then the packet type identification section 42 transfers the received packet to the cache search section 43. The cache search section 43 uses the destination address set in the DA field 718 of the packet transferred thereto as a search key to search the cache table 44 (from the No route of step B10 to step B12).

If a result of the search proves that the pertaining destination address (COA) is not registered in the cache table 44, then the cache search section 43 delivers the packet to software (not shown) because it cannot find a destination. The software thus issues an error message representing that a destination is not found to the transmission source of the packet in accordance with, for example, the ICMP (Internet Control Message Protocol) (from the No route of step B13 to step B14).

On the contrary, if the destination address of the received packet is registered in the cache table 44 (if the search results in cache hit), then the binding cache search section 43 transfers the received packet to the encapsulation processing section 45. The encapsulation processing section 45 adds a header wherein the COA of the cache hit is set as the DA and the address set in the SA field 717 of the received packet (original packet) is set as the SA to the original packet to encapsulate the original packet (from the Yes route of step B13 to step S15).

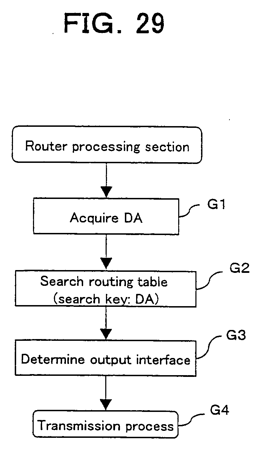

Then, the encapsulated packet (tunnel packet) is outputted to the router processing section 46. In the router processing section 46, as seen in FIG. 29, the outgoing path determination section 46b extracts the DA of the tunnel packet (step G1) and uses the DA as a search key to search routing information of the routing table 46a (step G2) to determine an output interface corresponding to the DA (step G3). Then, the outgoing path determination section 46b transmits the encapsulated packet (tunnel packet) to the output processing section 48 (step G4).

Consequently, the tunnel packet is transmitted through the determined output interface to a next hop destination node (EN/MN) corresponding to the DA (step B16).

Now, processing by the control message processing section 50 is described in detail with reference to a flow chart shown in FIG. 24.

In the control message processing section 50, the type of a control message transferred from the packet type identification section 42 as a result of the processing in step B4, B8 or B11 described hereinabove is discriminated by the message type discrimination section 51 first. In particular, the message type discrimination section 51 extracts the message type (destination option) of the received control message (step C1) and checks which one of the binding update message, binding acknowledgement message and binding request message the extracted message type is (steps C2 to C4).

If a result of the checking reveals that the received control message is any other message (a routing message or the like) than a mobile message (if the discriminations in steps C2 to C4 are all No), then the message type discrimination section 51 transfers the message to the routing message processing section 53 so that a process corresponding to contents of the message is performed by the routing message processing section 53 (step C24).

However, if it is revealed that the received control message is, for example, a binding update message (Option Type = 198), then the message type discrimination section 51 transfers the message to the binding update message processing section 52C (binding update message analysis section 522).

The binding update message analysis section 522 checks whether or not the reserve bit of the received binding update message is "1" (that is, whether or not the received binding update message is a cache deletion request message) (from the Yes route of step C2 to step C5). If the reserve bit is "0", then since the received binding update message is any other than a cache deletion request message (that is, a home/resident position registration message), the binding update message analysis section 522 further performs status discrimination (normality confirmation of the format or the like) for the binding update message (from the No route of step C5 to step C6).

If a result of the status discrimination reveals that the received binding update message is normal, then the binding update message analysis section 522 issues an instruction to the table access section 521 to update the cache table 44. In particular, since the received binding update message in this instance is a home/resident position registration message, the table access section 521 writes the COA (VCOA/PCOA) set in the SA field 717 of the binding update message into a storage area of the cache table 44 which is specified using the MN home address set in the home address field 724 as a search key to update the pertaining "cache" [data 61a; refer to FIG. 4(A)] (from the Yes route of step C6 to step C7).

Then, the binding update message analysis section 522 checks whether or not the A bit of the received binding update message described above is "1", that is, whether or not a response is required to the message (step C8). If the A bit is "1" (if the discrimination in step C8 is Yes), then the binding update message analysis section 522 requests the binding acknowledgement message production section 523 to produce a binding acknowledgement message (home/resident position registration response message) to the binding update message described above. In response to the request, the binding acknowledgement message production section 523 message destined for the terminal 3 (step C9).

The produced message is transferred to the router processing section 46 (outgoing path determination section 46b) through the message transmission section 52F (step C10). Consequently, the message is reported to the terminal 3 of the source of issuance of the home/resident position registration response message.

In other words, as described hereinabove with reference to FIGS. 18 and 22, a home/resident position registration message issued from the terminal 3 when the terminal 3 moves is processed by a VHA/THA in accordance with an algorithm wherein the processing passes steps B1 and B2, the No route of step B3, the Yes route of step B5 and the Yes route of step B7 described hereinabove with reference to FIG. 23, step C1, the Yes route of step C2, the No route of step C5, the Yes route of step C6 to step C7, the Yes route of step C8 to steps C9 and C10, and the No route of step C11.

Then, the binding update message analysis section 522 checks whether or not there exists communicating EN address data 61b [refer to FIG. 4(A)] corresponding to the "cache" (data 61a) which has been updated in step C7 described hereinabove (step C11). If no such communicating EN address data 61b exists , then since a communicating EN 12 which receives the "cache" of the VHA/THA itself and is communicating in place of the VHA/THA itself does not exist and a cache update request to any EN 12 need not be performed, the binding update message analysis section 522 ends its processing immediately (No route of step C11).

On the other hand, if at least one communicating EN address data 61b exits, then the binding update message analysis section 522 further checks whether or not the COA (VCOA/PCOA) set in the SA field of the received binding update message and the COA of the "cache" prior to updating coincide with each other (that is, whether or not the COA has changed) (from the Yes route of step C11 to step S12).

If a result of the checking proves that the COA does not exhibit a change (if the discrimination in step C12 is Yes), then since the "cache" of the communicating EN 12 need not be updated, the binding update message analysis section 522 ends its processing immediately (Yes route of step C12). However, if the COA exhibits a change (if the discrimination in step C12 is No), then since it is necessary to update the "cache", the binding update message analysis section 522 requests the binding update message production section 524 to produce a binding update message (cache update request message) destined for the communicating EN 12.

In response to the request, the binding update message production section 524 produces and issues a cache update request message wherein the communicating EN address described above is placed in the DA field 718 (step C13). In particular, the VHA/THA has the "communicating EN address" stored in the cache table 44 and, if it receives a report of new current position information (a new COA) from the terminal 3 as a result of the movement of the terminal 3, then it carries out updating of the "cache" for the communicating EN identified with the "communicating EN address" based on the new current position information.

Consequently, the VHA/THA can update the "cache" of a desired EN, whose "cache" should be updated, correctly without an error. Further, since new current position information (a new COA) is reported to the VHA/THA as a result of movement (position registration) of the terminal 3, every time the "cache" of the VHA/THA side is updated, the updating is reflected on the "cache" of the communicating EN 12 side to establish synchronism between them.

Accordingly, by performing routing of a packet for the terminal 3 based on the "cache" after updated, the communicating EN can continuously perform packet routing to a new resident EN (EN of the destination of movement of the terminal 3) in place of the VHA/THA. Consequently, the packet destined for the terminal 3 can always be delivered correctly to the destination of movement of the terminal 3.

On the other hand, if the reserve bit of the received binding update message is "1" in step C5 described above, then since this signifies that the message is a cache deletion request message (refer to FIG. 16), the binding update message analysis section 522 further checks whether or not the lifetime of the received message is set to "0" (from the Yes route of step C5 to step C14).

If a result of the checking reveals that the lifetime is set to "0" , then the binding update message analysis section 522 reports the MN home address set in the home address field 724 of the cache deletion request message to the table access section 521 to request the table access section 521 for deletion of the pertaining "cache" ("communicating EN address" data 61b).

In response to the request, the table access section 521 uses the reported MN address as a search key to search the cache table 44 to delete the pertaining "communicating EN address" data 61b (from the Yes route of step C14 to step C15). It is to be noted that, if the lifetime described above is set to a value any other than "0", then the cache deletion process by the table access section 521 is not performed (the No route of step C14).

Then, the binding update message analysis section 522 checks whether or not the A bit of the received message is "1" (step C16). If the A bit of the received message is not "1", then since the VHA/THA itself need not issue a response message to the received message, the binding update message analysis section 522 ends the processing immediately (the No route of step C16).

On the other hand, if the A bit is "1", then since the VHA/THA itself must issue a response message, the binding update message analysis section 522 requests the binding acknowledgement message production section 523 to produce a binding acknowledgement message (cache deletion request response message). The binding acknowledgement message production section 523 thus produces a cache deletion request response message wherein the SA of the received message is set in the DA (from the Yes route of step C16 to step C17).

The thus produced cache deletion request response message is transferred to the router processing section 46 (outgoing path determination section 46b) through the message transmission section 52F. The outgoing path determination section 46b determines an output interface for the message and routes the message to a next hop destination node through the determined output interface (step C18).

While the forgoing is the processing (operation of the VHA/THA) when a binding update message is received, the processing when a binding acknowledgement message or a binding request (BR-Me) message is received is such as described below.

In particular, if the message type discrimination section 51 discriminates that the received message is a binding acknowledgement message (Option Type = 7), then the message is transferred to and processed by the binding acknowledge message processing section 52D (from the Yes route of step C3 to step C19). It is to be noted that the binding acknowledgement message which can be received by the VHA/THA in this instance is the cache update response message (refer to FIG. 13).

On the other hand, if the message type discrimination section 51 discriminates that the received message is a BR-M3 message, then the BR-M3 message is transferred to the binding request message processing section 52E (binding request message analysis section 526). The binding request message analysis section 526 thus analyzes contents of the received BR-M3 message to extract the MN home address set in the home address field 724 and reports the MN home address to the table access section 525.

Consequently, the table access section 525 uses the reported MN home address as a key to search the cache table 44 to check whether or not there exists a pertaining "cache" [cache data (a COA) same as the SA of the received BR-M3 message] (from the Yes route of step C4 to step C25).

If a result of the checking reveals that the pertaining "cache" does not exist in the cache table 44, then the table access section 525 ends its processing immediately (the No route of step C25). On the other hand, if the "cache" exists, then the table access section 525 stores the COA registered in the "cache" and further performs a search to discriminate whether or not a "communicating EN address" same as the SA of the BR-M3 is present in the pertaining cache entry (from the Yes route of step C25 to step C20).

If a result of the search reveals that the same "communication EN address" as the SA of the BR-M3 message is present, then the table access section 525 reads out the "communicating EN address" and the stored COA (step C26) and delivers them to the binding request message analysis section 526. Consequently, the binding request message analysis section 526 transfers the received information (COA and "communicating EN address") to the binding update message production section 527 and requests the binding update message production section 527 for production of a binding update message (cache report message) (from the Yes route of step C21 to step C23). It is to be noted that, if the "communicating EN address" is not registered as yet in step C20 described above, then at the point of time, the SA of the BR-M3 message is newly registered as "communicating EN address".

On the other hand, if the "cache" does not exist (if the discrimination in step C21 is No), then the binding request message analysis section 526 caches the SA of the received message (step C22) and requests the binding update message production section 527 for production of a binding update message (step C23).

### A4.3 Operation of the EN

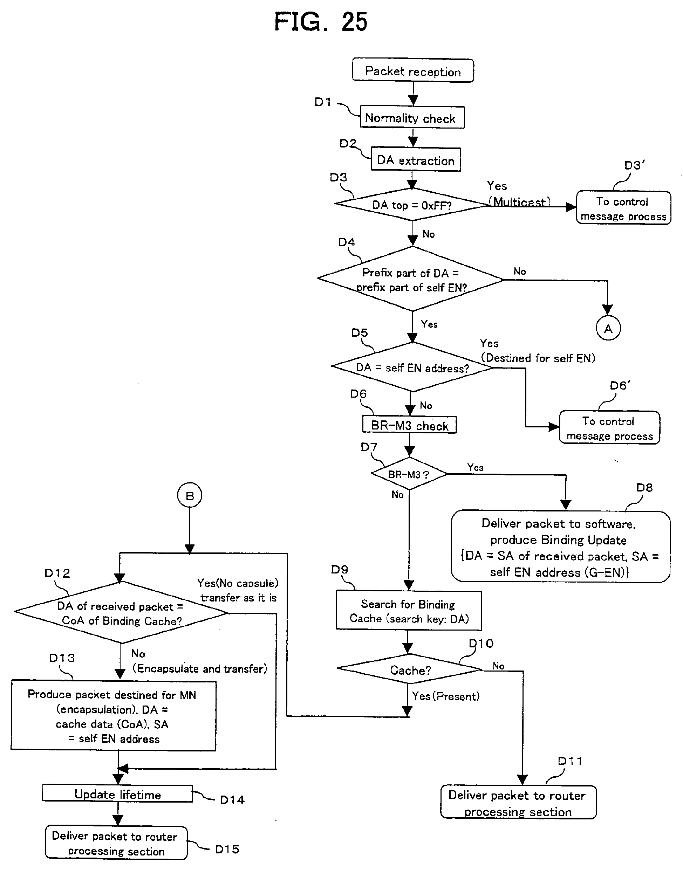

Now, operation of the EN in the present embodiment is described in detail with reference to FIGS. 25 to 29.

Referring first to FIG. 25, if the EN receives a packet, then the input processing section 41 thereof checks the normality of the received packet (step D1), and the packet type identification section 42 extracts the DA of the received packet (step D2). Then, the packet type identification section 42 checks whether or not the top of the DA is "0xFF" (that is, whether or not the DA indicates a multicast packet) (step D3).

If a result of the checking reveals that the received packet is a multicast packet, then the packet type identification section 42 transfers the packet to the control message processing section 50 (from the Yes route of step D3 to step D3'). However, if the received packet is not a multicast packet, then the packet type identification section 42 compares the prefix part (higher order 64 bits) of the extracted DA with the prefix part of the EN address of the EN itself to check whether or not they coincide with each other (from the No route of step D3 to step D4).

If a result of the comparison proves that the prefix parts described above coincide with each other, then the packet type identification section 42 recognizes that the received packet is destined for the domain to which the EN itself belongs and further compares lower order 64 bits of the DA and the EN address of the EN itself with each other to check whether or not they coincide with each other (step D5). If they coincide with each other, then since the received packet is a control message destined for the EN itself, the packet type identification section 42 transfers the received packet to the control message processing section 50 (from the Yes route of step D5 to step D6'). However, if they do not coincide with each other, then the packet type identification section 42 now checks whether or not the received packet is a BR-M3 message (from the No route of step D5 to step D6).

If a result of the checking reveals that the received packet is a BR-M3 message, then the packet type identification section 42 delivers the received packet to software (not shown) . Consequently, the software produces a binding update message (cache report message) wherein the DA is the SA of the received packet and the SA is the EN address of the EN itself (from the Yes route of step D7 to step D8).

It is to be noted that the cache report message produced at this time is intended to prevent such a situation that the EN 12 having issued the BR-M3 message repetitively issues the BR-M3 message from the reason that the "cache" does not exist every time the EN 12 thereafter receives a packet, and the transmission source EN 12 receiving the cache report message produces a dummy "cache" based on the message. The "dummy cache" is set such that, for example, the search key and the registration data have an equal value so as to allow it to be distinguished from a normal cache entry. Alternatively, a particular bit may be used to allow such identification.

On the other hand, if the received packet is not a BR-M3 message, then since it is a packet destined for the terminal 3, the packet type identification section 42 transfers the received packet to the binding cache search section 43. The binding cache search section 43 thus uses the DA of the received packet as a search key to search the cache table 44 (from the No route of step D7 to step D9).

If a result of the search reveals that the pertaining "cache" is not registered in the cache table 44, then the binding cache search section 43 transfers the received packet as it is (without encapsulation by the encapsulation processing section 45) to the router processing section 46 (from the No route of step D10 to step D11).

On the other hand, if the pertaining "cache" is registered in the cache table 44, then the binding cache search section 43 compares the DA of the received packet with the COA of the "cache" obtained by the search to check whether or not they coincide with each other (from the Yes route of step D10 to step D12). If they do not coincide with each other, then since this signifies that the terminal 3 has already moved into the resident zone of another EN and the "cache" described above has been produced newly, the binding cache search section 43 transfers the received packet to the encapsulation processing section 45.

The encapsulation processing section 45 adds a header wherein the DA is set to the COA obtained by the cache search described above and the SA is set to the EN address of the EN itself to the received packet to encapsulate the received packet (from the No route of step D12 to step D13). Consequently, the packet destined for the terminal 3 is transferred correctly to the new EN which is the destination of the movement of the terminal 3. It is to be noted that, if the DA of the received packet and the DA (COA) of the "cache" obtained by the search coincide with each other, then since this signifies that the "cache" is the dummy cache, the received packet is not encapsulated (the Yes route of step D12).

Then, the binding cache search section 43 updates (refreshes) the lifetime included in the "cache" so that it may not expire (so that it may not be reduced to "0") (step D14). It is to be noted that the value to which the lifetime is updated is set for each EN in advance, and the binding cache search section 43 sets the lifetime to the preset value. However, if the lifetime after the refreshment is shorter than the lifetime at present, then the lifetime at present is maintained.

Meanwhile, in the router processing section 46, the outgoing path determination section 46b uses the DA of the received packet (tunnel packet or received packet which has not been encapsulated) to search the routing table 46a to determine an output interface for the received packet (step d15), and transmits the received packet to the output processing section 48 (steps G1 to G4 illustrated in FIG. 29). Consequently, the received packet is routed to a next hop destination node through the output interface corresponding to the DA.

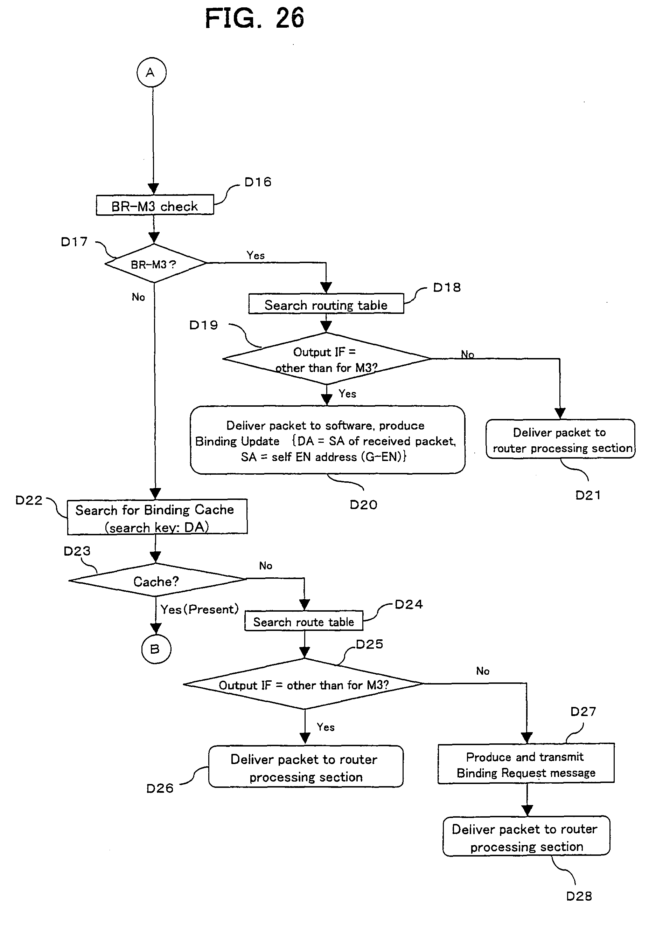

On the other hand, if the prefix part of the DA of the received packet and the prefix part of the EN address of the EN itself do not coincided with each other in step D4 described hereinabove (in other words, when the received packet is destined for a different domain), then the packet type identification section 42 further checks whether or not the received packet is a BR-M3 message as illustrated in FIG. 26 (step D16).

If a result of the checking proves that the received packet is a BR-M3 message, then since this signifies that the message is a BR-M3 message destined for a different domain, the cache search section 43 uses the DA of the BR-M3 as a search key to search the routing table 46a (from the Yes route of step D17 to step D18), and checks whether or not the output interface is an interface to a network other than an "M3 ready network" (step D19).

If a result of the checking reveals that the output interface is an interface to a network other than an "M3 ready network", that is, if the output interface is an interface to a network which cannot deal with the BR-M3 message even if it receives the BR-M3 message, then the cache search selection 43 delivers the packet to software so that the software produces a binding update message (cache report message) wherein the SA of the received packet is the DA and the SA is the EN address of the EN itself (from the Yes route of step D19 to step D20).

Consequently, also in this instance, the cache report message is transmitted to the EN of the issuance source of the received BR-M3 message, and the EN of the issuance source produces a "dummy cache". In short, this signifies that the EN 12 which performs the processing just described is also a gate node which provides a gateway function to a network other than an "M3 ready network".

On the other hand, if the output interface is an interface to an "M3 ready network", then since this signifies that the next hop destination node is a node (EN) ready for an "M3 ready network" and the EN 12 itself plays a role as a repeating node in an "M3 ready network", the cache search selection 43 transfers the received packet to the router processing section 46 from the No route of step D19 to step D21).

It is to be noted that, if the received packet is not a BR-M3 message in step D17 described hereinabove, then the packet type identification section 42 transfers the received packet to the cache search selection 43, and the cache search selection 43 uses the DA of the received packet as a search key to search the cache table 44 (from the No route of step D17 to step D22).

If a result of the search reveals that the pertaining "cache" is registered, then since this signifies that the received packet is destined for a terminal 3 of a different domain, the processing in steps D12 et seq. described hereinabove with reference to FIG. 25 is performed. Consequently, the router processing section 46 determines an output interface for the received packet, and the received packet is routed to a next hop destination node through the thus determined output interface (from the Yes route of step D23 to steps D12 to D15 illustrated in FIG. 25).

On the other hand, if the pertaining "cache" is not registered, then also in this instance, the cache search selection 43 uses the DA of the received packet as a search key to search the routing table 46a (from the No route of step D23 to step D24) and then checks whether or not the output interface for the received packet is an interface to a network other than an "M3 ready network" (step D25).

If a result of the checking reveals that the output interface is an interface to an "M3 ready network" (if the discrimination in step D25 is No), then the cache search selection 43 requests the binding request message production section 528 (refer to FIG. 3) of the binding request message processing section 52E of the mobile message processing section 52 to produce a BR-M3 message (step D27). In this manner, when the communicating EN routes a packet destined for the terminal 3 to a VHA/THA, if the cache is not present, then the communicating EN requests the VHA/THA for the "cache". It is to be noted that, if the output interface is an interface to a non-"M3 ready network" (if the discrimination in step D25 is Yes), then the cache search selection 43 delivers the received packet to the router processing section 46 (step D26).

The binding request message production section 528 receiving the request produces a BR-M3 message wherein the DA of the received packet is the DA and the SA is the EN address of the EN itself and transfers the BR-M3 message to the router processing section 46 through the message transmission section 52F (steps D27 and D28). Consequently, a cache request is issued to the VHA/THA/EN, and a necessary "cache" is reported with a cache report message from the VHA/THA/EN.

It is to be noted that, since the present example is presupposed that each EN does not know the VHA/THA address, the DA of the packet received by the EN is set to the DA to be used for production of a BR-M3 message. However, if the EN knows the VHA/THA address, then the address should be set to the DA.

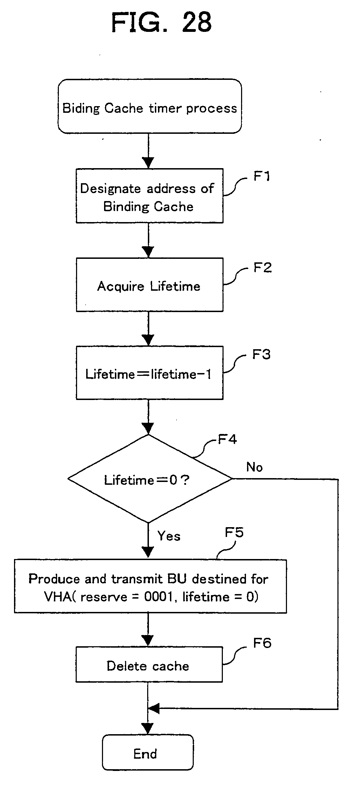

By the way, in the timer processing section 49 of the EN 12, a timer process illustrated in FIG. 28 is performed independently of the message process, the routing process and so forth described above. In particular, the timer processing section 49 successively designates one of addresses of the cache table 44, for example, in an ascending order or a descending order (step F1), successively acquires a lifetime of the pertaining "cache" (step F2), decrements the lifetime by one (step F3), and checks whether or not the lifetime is "0" (step F4).

If a result of the checking reveals that the lifetime is "0" , then since this signifies that the term of the "cache" has expired, the timer processing section 49 requests the binding update message production section 527 (refer to FIG. 3) of the mobile message processing section 52 to produce a binding update message (cache deletion request message).

In response to the request, the binding update message production section 527 produces a cache deletion request message destined for the VHA/THA wherein the VHA/THA address data 62b [refer to FIG. 4(B)] corresponding to the "cache" whose term has expired is set in the DA and the EN address of the EN itself is set in the SA while the reserve bit of the destination option is set to "1" and the lifetime is set to "0", and transfers the cache deletion request message to the router processing section 46 (from the Yes route of step F4 to step F5).

In short, when communication comes to an end and the term of the "cache" comes to an end, the communicating EN requests the VHA/THA for deletion of the "communicating EN address" managed by the VHA/THA. Consequently, the VHA/THA which receives the cache deletion request message (VHA/THA which has issued the cache report) deletes the pertaining "communicating EN address" stored in the cache table 44.

Thereafter, the timer processing section 49 on the EN side deletes the "cache", whose lifetime has expired, from the cache table 44 (step F6). In this manner, those "caches" whose lifetime has expired are successively deleted by the VHA/THA/EN. Accordingly, unnecessary information does not remain stored in the cache table 44 indefinitely, and the necessary storage capacity for the cache table 44 can be supplied to the lowest level.

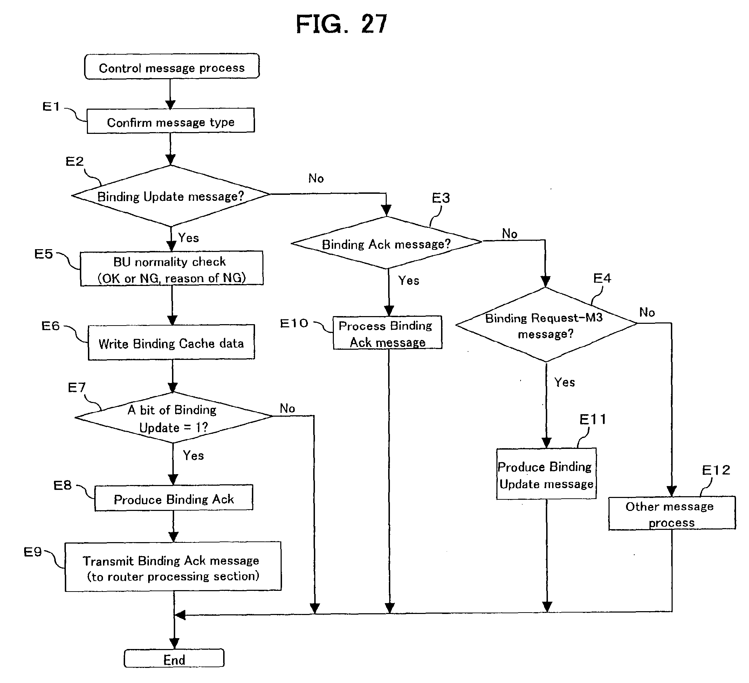

Now, a process by the control message processing section 50 of the EN 12 is described with reference to FIG. 27.

In particular, in the control message processing section 50, the message type discrimination section 51 refers to the option type of the destination option of the received packet (message) to discriminate the type of the received message (step E1). In particular, the message type discrimination section 51 discriminates which one of a binding update message, a binding acknowledgement message and a BR-M3 message the received message is (steps E2, E3 and E4).

If a result of the discrimination reveals that the received message is, for example, a binding update message (cache report message) (if the discrimination in step E2 is Yes), then the message type discrimination section 51 transfers the message to the binding update message analysis section 522 of the binding update message processing section 52C. It is to be noted that binding update messages which can be received by the EN 12 include a cache report message and a position (cache) update message (refer to Table 1 given hereinabove).

Accordingly, the binding update message analysis section 522 checks the normality of the received message (step E5), and if the receives message is normal, then the table access section 521 writes the cache data 61a reported with the message (cache report message/cache update message) into the pertaining storage area of the cache table 44 using the MN home address included in the message as a key to register/update contents of the cache table 44 (step E6).

Then, the binding update message analysis section 522 checks whether or not the A bit of the received message is "1" (step E7). If the A bit is "1" (if the discrimination in step E7 is Yes), then since this signifies that the EN 12 is requested for a response message (cache update response message) to the message, the binding update message analysis section 522 requests the binding acknowledgement message production section 523 to produce a cache update response message.

In response to the request, the binding acknowledgement message production section 523 produces a cache update response message destined for the VHA/THA wherein the SA of the received message is the DA and the EN address of the EN itself is the SA (step E8). The cache update response message is transferred to the router processing section 46 through the message transmission section 52F, and the router processing section 46 (outgoing path determination section 46b) determines an output interface and the cache update response message is routed to a next hop destination node corresponding to the DA (step E9 and steps G1 to G4 of FIG. 29).

It is to be noted that, if the A bit of the received message is not "1", then since this signifies that the EN 12 is not requested for a response message to the receivedmessage, after the received "cache" is written by the table access section 521, the binding update message analysis section 522 does not issue a request for production of a cache update response message but ends the process immediately (the No route of step E7).

On the other hand, if the result of the message type discrimination reveals that the received message is a binding acknowledgement message (if the discrimination in step E2 is No and then the discrimination in step E3 is Yes), then the message type discrimination section 51 transfers the message to the binding acknowledge message processing section 52D so that the binding acknowledge message processing section 52D performs a process based on contents of the message (from the Yes route of step E3 to step E10). It is to be noted that a response (cache deletion response message) to the cache deletion request message issued by the EN 12 itself is a binding acknowledgement message which can be received by the EN 12 (refer to Table 1).

On the other hand, if the result of the message type discrimination described above reveals that the received message is a BR-M3 message (if the discriminations in both of steps E2 and E3 are No and the discrimination in step E4 is Yes), then the message type discrimination section 51 transfers the message to the binding request message analysis section 526. Consequently, the binding request message analysis section 526 reports the MN home address included in the message to the table access section 525, and the table access section 525 uses the MN home address as a search key to search the cache table 44.

If the search results in cache hit, then the binding update message production section 527 produces a cache report message for reporting the "cache" to the node of the source of the cache request (step E11). The cache report message is transferred to the router processing section 46 through the message transmission section 52F.

It is to be noted that, if the result of the message type discrimination described above reveals that the received message is none of a binding update message, a binding acknowledgement message and a BR-M3 message (if the discriminations in all of steps E2 to E4 are No), then the message type discrimination section 51 transfers the received message to the routing message processing section 53 so that the routing message processing section 53 performs a process corresponding to contents of the message (step E12).

Through such operation of the individual ones of the VHA/THA/EN/MN as described hereinabove, in the system of the present embodiment, for the home terminal 3 of the home network 1(2), the VHA manages the current position information (COA) of the terminal 3 and the EN inquires the VHA of the home network 1 (2) for the current position information, and after the COA is acquired, the EN can encapsulate the packet for the COA in place of the VHA and transfer the packet, but for the terminal 3 which roams into the home network 1 (2) from a different network 2(1), the THA manages the current position information (COA) of the terminal 3 and the EN inquires the THA of the home network 1 (2) for the current position information (COA) of the terminal 3, and after the COA is acquired, the EN can encapsulate the packet for the COA in place of the THA and transfer the packet.

### A4.4 Operation upon Communication with a Terminal 3 during Roaming

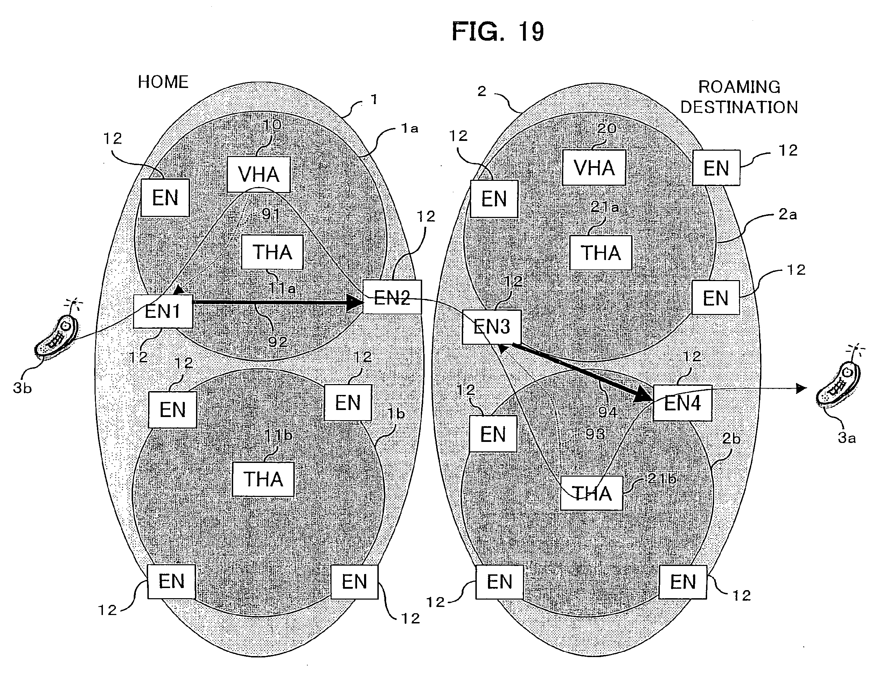

Now, presupposing the operation of the individual ones of the VHA/THA/EN/MN described above, operation of a terminal 3 when, while it is positioned within a resident zone of the EN "4" of the packet network 2 of the roaming destination as described hereinabove with reference to FIG. 18, for example, another terminal 3 which is positioned in the resident zone of the EN "1" of the home network 1 as seen in FIG. 19 (in the following description, for the convenience of description, the terminal 3 during roaming is represented as 3a, and the other terminal 3 present in the home network 1 is represented as terminal 3b) communicates with the terminal 3a during roaming is described.

Accordingly, in this instance, the terminal 3a has a registration of the "PCOA" in the THA 21b of the roaming destination and has another registration of the "VCOA" in the VHA 10 of the home network 1.

First, since the terminal 3b does not know the movement destination address (COA) at present of the terminal 3a, it transmits a packet (user packet) to the home address (MN home address). When the packet destined for the home address is received by the nearest EN "1", in the EN "1", the discriminations in steps D3 and D4 described hereinabove with reference to FIG. 25 result in No and the discriminations in steps D17, D23 and D25 described hereinabove with reference to FIG. 26 result in No.

Accordingly, the EN "1" transfers the received user packet toward the VHA 10 and issues a BR-M3 message wherein the DA (MN home address) of the received packet is the DA, that is, a BR-M3 message destined for the VHA 10 to request the VHA 10 for a "cache". The VHA 10 encapsulates the received user packet so as to be destined for the "VCOA" and transfers the user packet, and issues a cache report message destined for the EN "1" as a response to the BR-M3 message (refer to a dotted line arrow mark 91 shown in FIG. 19).

The processes described above correspond, with regard to the user packet, to the processes which pass the No route of step B3, the Yes route of step B5, the No route of step B7, the No route of step B10 and the Yes route of step B13 described above, and with regard to the BR-M3 message, to the processes which pass the No route of step B3, the Yes route of step B5 and the Yes route of step B7 described hereinabove with reference to FIG. 23 and the No route of step C2, the No route of step C3, the Yes route of step C4 and the Yes route of step C21 described hereinabove with reference to FIG. 24.

Consequently, the user packet is routed, for example, to the EN "2" as seen in FIG. 19, and in the EN "1", a "cache" reported with a cache report message from the VHA 10 is registered into the cache table 44. As a result, the EN "1" can thereafter can encapsulate the user packet destined for the terminal 3a with the "VCOA" and transfer the user packet without passing the VHA 10 (route optimization) in place of the VHA 10.

Then, the EN "2" transfers the user packet encapsulated with the "PCOA" by the VHA 10 to the EN "3", and the EN "3" routes the user packet toward the THA 21b and issues a BR-M3 message destined for the THA 21b to request the THA 21b for a "cache".

It is to be noted that the processes by the EN "2" in this instance correspond to the processes which pass the No route of step D3 and the No route of step D4 described hereinabove with reference to FIG. 25, the No route of step D17 and the Yes route of step D23 described hereinabove with reference to FIG. 26 and the Yes route of step D12 described hereinabove with reference to FIG. 25, and the processes by the EN "3" correspond to the processes which pass the No route of step D3 and the No route of step D4 described hereinabove with reference to FIG. 25 and the No route of step D17 and the No route of step D23 described hereinabove with reference to FIG. 26.

Consequently, the THA 21b encapsulates the received user packet with the "PCOA" and routes it toward the EN "4" and issues a cache report message destined for the EN "3" as a response to the BR-M3 message (refer to a dotted arrow mark 93 shown in FIG. 19). Also the processes described above correspond, with regard to the user packet, to the processes which pass the No route of step B3 , the Yes route of step B5, the No route of step B7, the No route of step B10 and the Yes route of step B13 described hereinabove with reference to FIG. 23, and with regard to the MR-M3 message, to the processes which pass the No route of step B3 , the Yes route of step B5 and the Yes route of step B7 described hereinabove with reference to FIG. 23 and the No route of step C2, the No route of step C3, the Yes route of step C4 and the Yes route of step C21 described hereinabove with reference to FIG. 24.

Consequently, the user packet is transferred correctly to the terminal 3a during roaming through the EN "4" as seen from FIG. 19, and in the EN "3", the "cache" reported with the cache report message from the THA 21b is registered into the cache table 44. As a result, also the EN "3" can thereafter encapsulate a user packet destined for the terminal 3a and transfer (route optimization) the user packet without passing the THA 21b as indicated by a thick solid line arrow mark 94 in FIG. 19 in place of the THA 21b.

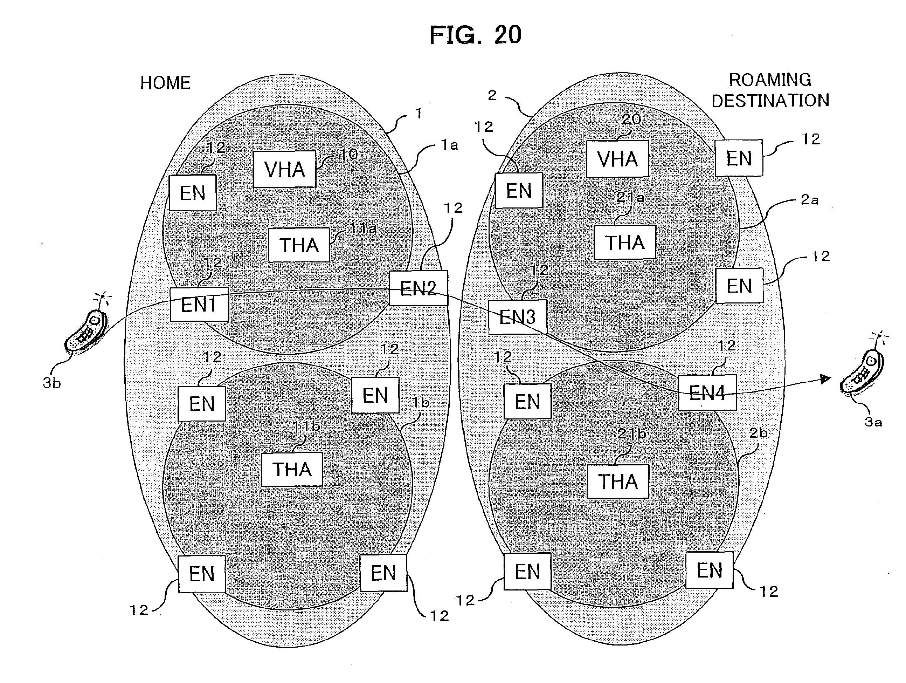

In short, the user packet transmitted from the terminal 3b follows such a route as illustrated in FIG. 20 and finally reaches the terminal 3a during roaming. Accordingly, the transfer delay of the packet is suppressed to the minimum, and the processing load to a VHA/THA is distributed to ENs and accordingly moderated significantly. Particularly in this instance, since the packet transfer route is not limited to a route which includes a THA and packets are not concentrated upon a THA, different from the prior art, a very high effect can be anticipated.

It is to be noted that the processing by the EN "4" described above corresponds to the processes which pass the No route of step D3, the No route of step D4, the No route of step D7 and the Yes route of step D12 described hereinabove with reference to FIG. 25.

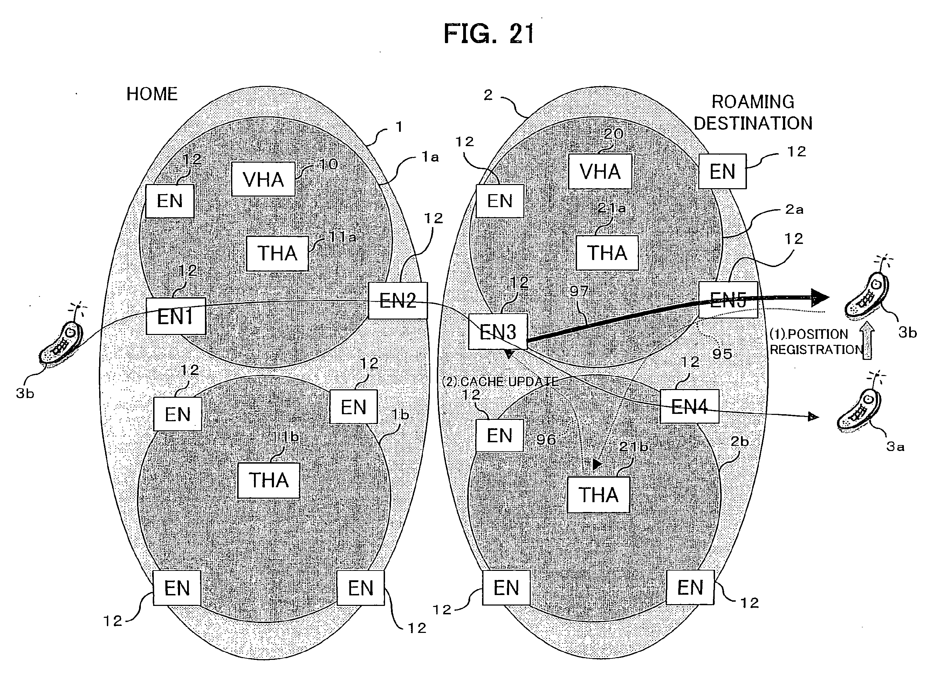

Now, operation when the terminal 3a while communicating with the terminal 3b as seen in FIG. 20 moves, for example, into a resident zone of the EN "5" accommodated in the THA 21a different from the THA 21b as seen in FIG. 21 is described.

In this instance, the terminal 3a now receives a "router advertisement" from the EN "5" as a result of the movement. Consequently, since the EN address included in the "router advertisement" is different from that which has been received previously, the terminal 3a recognizes that the position thereof has changed. Further, in the present example, the terminal 3a receives a THA address different from a previously received one.

In this instance, however, since the movement is nothing but movement within the packet network 2 of the roaming destination, the terminal 3a receives an M3 network address same as that received previously. Accordingly, the terminal 3a performs position registration into the THA 21b of the first THA address as described hereinabove with reference to FIGS. 18 and 22 but does not change over the THA of the object of its position registration.

However, although the THA is not changed over, singe the EN address has changed, the "PCOA" is renewed. Therefore, the terminal 3a reports the new "PCOA" to the original THA 21b (refer to a dotted line arrow mark 95 in FIG. 21). It is to be noted that the processes of the terminal 3a described above correspond to the processes which pass the No route of step A2, the No route of step A3 and the Yes route of step A6 described hereinabove with reference to FIG. 22.

Meanwhile, the THA 21b receiving the new "PCOA" updates the pertaining "cache" registered in the cache table 44 of the THA 21b itself and issues and reports a cache update message wherein the communicating EN address data 62b corresponding to the updated "cache" is the DA to the communicating EN "3" (refer to a dotted line arrow mark 96 in FIG. 21).

It is to be noted that the processes described above correspond to the processes which pass the Yes route of step C2, the No route of step C5, the Yes route of step C6, the Yes route of step C8, the Yes route of step C11 and the No route of step C12 described hereinabove with reference to FIG. 24.

Consequently, the "cache" of the EN "3" is rewritten with the "cache" reported from the THA 21b (refer to step E6 of FIG. 27). As a result, when the EN "3" receives a packet destined for the terminal 3a which thereafter arrives thereat, it encapsulates the packet with the new "PCOA" (refer to step D13 of FIG. 25) and transmits it. Consequently, the packet can be delivered correctly to the latest destination of the movement of the terminal 3a.

It is to be noted that, while, in the embodiment described above, the terminal 3a whose home network is the packet network 1 roams into the packet network 2, similar operation is performed also when the terminal 3 whose home network is the packet network 2 roams into the packet network 1.

As described above, according to the present embodiment, since an EN receives a "cache" managed by a VHA/THA and performs routing of a packet destined for a terminal 3 based on the "cache" in place of the VHA/THA, the packet destined for the terminal 3 can be transferred directly to the resident EN without the intervention of the VHA/THA, and high speed handover and route optimization which is free from a limitation to a transfer route can be anticipated.

Particularly, in the present embodiment, since a plurality of communicating EN addresses for different ENs can be stored in the cache table 44 such that a plurality of communicating ENs can be set so as to individually perform routing for one terminal 3 in place of a VHA/THA, different from the prior art, packets are not concentrated upon a particular VHA/THA, and the processing load to the VHA/THA can be distributed to the ENs and can be moderated significantly.

Further, even if the THA address included in a "router advertisement" from a resident EN changes as a result of movement of a terminal 3 during roaming, if the M3 network address does not exhibit a change, then the terminal 3 recognizes that the terminal 3 itself remains positioned within the network 2 (1) of the roaming destination and can maintain the same THA as a reporting (registration) destination of the "COA" ("PCOA"). Therefore, such a situation that changeover of the position registration destination THA occurs frequently as the terminal 3 moves as in the prior art can be prevented. Consequently, the high speed handover performance can be further improved.

Furthermore, even if the same THA is maintained as the position registration destination THA by the terminal 3 irrespective of movement of the terminal 3 as described above, since a necessary "cache" is successively provided to a communicating EN in response to updating registration of the current position of the terminal 3 into the THA to maintain synchronism between the terminal 3 and the THA, the communicating EN can change the packet transfer route appropriately and rapidly to a route to a new resident EN which does not pass the THA. Accordingly, high speed handover can be achieved while further suppressing the processing load to the THA.

Further, since an EN which receives a packet destined for a terminal 3 requests, when it does not have a "cache", a VHA/THA for a necessary "cache", any EN can perform packet routing in place of the VHA/THA, and the number of ENs which can perform packet routing in place of a VHA/THA is not fixed to one and packets are not concentrated upon a particular EN to apply an increased load to the EN. Accordingly, also in this instance, the loads to both of the ENs and the VHA/THA can be reduced.

Furthermore, in this instance, since the VHA/THA provides cache information only to an EN or ENs from which the request for a "cache" has been received, unnecessary transfer of the "cache" can be prevented, and also an increase of the traffic amount within the network can be suppressed. Further, since the VHA/THA grasps an EN whose "cache" should be updated/deleted with a "communicating EN address" stored in the cache table 44, the "cache" of the pertaining communicating EN when a report of a new COA is received can be updated without an error. Accordingly, the reliability of packet routing, that is, the communication quality, can be improved.

Furthermore, since a communicating EN refreshes the lifetime (term) of the "cache" described above every time a packet destined for the terminal 3 is received, such a situation that the term of the "cache" expires during communication and normal communication cannot thereafter be maintained can be prevented, and consequently, the reliability of packet routing, that is, the communication quality, can be further improved.

Further, when the communication comes to an end and the term of the "cache" expires, the communicating EN deletes the "cache" and requests the VHA/THA from which the "cache" has been received to delete the "communicating EN address" of the "cache", and the VHA/THA receiving the request deletes the pertaining "communicating EN address" stored in the cache table 44 of the VHA/THA itself. Therefore, unnecessary information is not kept stored for an unnecessarily long period in any of the EN and the VHA/THA. Consequently, the EN and the VHA/THA can be miniaturized with the memory capacities thereof reduced.

### B. Modifications

In the embodiment described above, even if a terminal 3 moves in a roaming destination until the EN address and the THA address thereof change, as a rule, the changes of them are ignored unless the M3 network address of the terminal 3 changes, and the terminal 3 performs position registration only into a THA into which it has performed position registration first. However, it is otherwise possible to modify the embodiment such that, if a particular condition (additional condition) is satisfied, then the terminal 3 performs changeover of the THA of the position registration destination. It is to be noted that the "changeover of the THA" signifies to produce a "VCOA" and a "PCOA" from the THA address and the EN address included in a received "router advertisement" and transmit the "VCOA" to the VHA with a home position registration message and transmit the "PCOA" to the THA with a resident position registration message to register the COAs into the VHA and the THA, respectively.

Several examples are described in detail below. In the examples described below, however, a situation wherein, for example, a terminal 3 moves from the packet network 1 to another network (another M3v6 network) 2 of the roaming destination as seen in FIG. 30 is presupposed. Here, it is assumed that the address (M3 network address) of the home network 1 of the terminal 3 in FIG. 30 is "100.50; the M3 network address of the packet network 2 of the roaming destination is "200. 50" , the addresses of the THAs 11a, 11b, 21a and 21b are "10.1", "20.1", "30.1" and "40.1", respectively; the addresses of ENs 12 (EN "1", EN "2" , EN "5" to EN "8") are "1.1", "2.1", "5.1", "6.1", "7.1" and "8.1", respectively; and the interface ID of the terminal 3 is "3".

Accordingly, as seen in FIG. 30, when the terminal 3 moves, the EN address included in a "router advertisement" received by the terminal 3 from an EN 12 successively changes like "1.1" → "1.1" → "2.1" → "5.1" → "6.1" → "7.1" → "8.1", and the THA address successively changes like "10.1" → "10.1" → "20.1" → "30.1" → "30.1" → "40.1" → "40.1".

Further, the M3 network address successively changes like "100.500" → "100.50" → "100.50" → "200.50" → "200.50" → "200.50" → "200.50" → "200.50". Then, upon such movement, the "PCOA" produced by the terminal 3 successively changes like "1.3" → "1.3" → "2.3" → "5.3" → "6.3" → "7.3" → "8.3", and the "VCOA" successively changes like "10.3" → "10.3" → "30.3" → "30.3" → "40.3" → "40.3".

### B1. First Modification (when a changeover discrimination of the THA is performed after each lapse of a fixed interval of time)

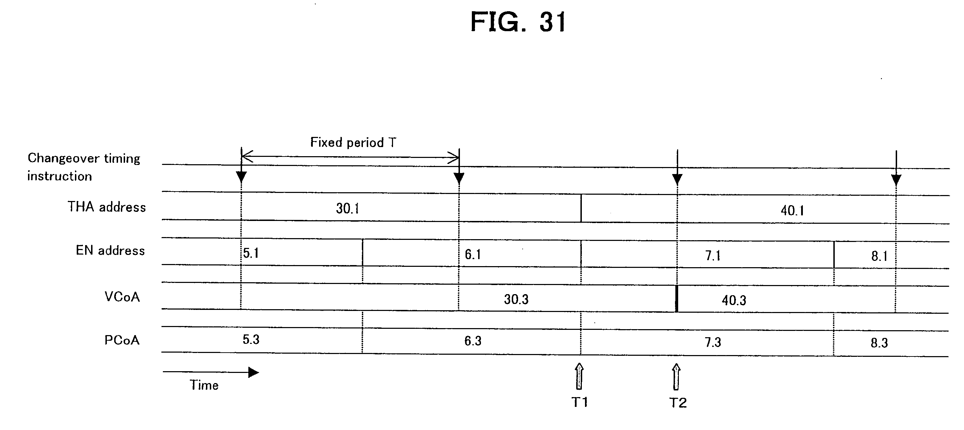

Presupposing such a situation as described above, in the terminal 3 of the first modification, after it roams into the packet network 2, it discriminates, for example, after each fixed period T as seen in FIG. 31 whether or not the THA address exhibits a change. Then, if the THA address exhibits a change upon elapse of the fixed period T, then the terminal 3 changes over the THA of the position registration destination from the THA 21a to the THA 21b.

In particular, in the present example, at a point T1 of time at which the THA address changes, the terminal 3 does not perform changeover of the THA, but at another point T2 of time after lapse of the fixed period T, the terminal 3 combines the prefix part ("7") of the EN address (= "7.1") at the point of time with the interface ID (= " 3 ") of the terminal 3 itself to produce the "PCOA" = "7.3" and reports the "PCOA" not to the THA 21a but to the THA 21b (refer to a dotted line arrow mark 96). Further, the terminal 3 combines the prefix part ("40") of the THA address (= "40.1") at the point of time with the interface ID (= "3") of the terminal 3 itself to produce the "VCOA" = "40.3" and reports the "VCOA" to the VHA 10 of the packet network 1 (refer to a dotted line arrow mark 97).

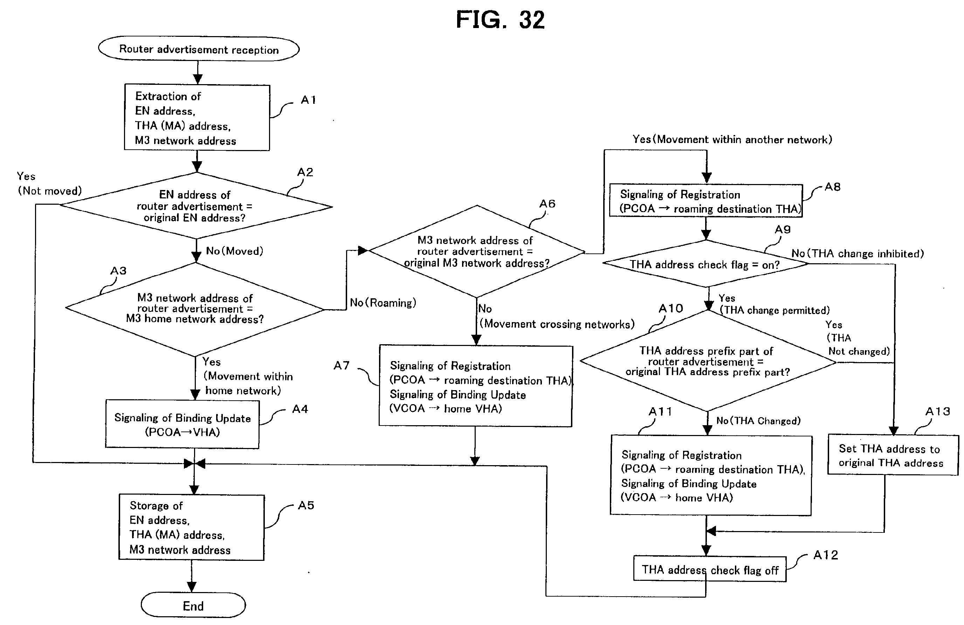

Such operation as described above can be realized, for example, by adding a THA address check algorithm (steps A9 to A13) illustrated in FIG. 32 and a flag setting algorithm (steps A14 to A18) to the basic algorithm (steps A1 to A8 illustrated in FIG. 22) of the router advertisement message processing section 34C of the terminal 3.

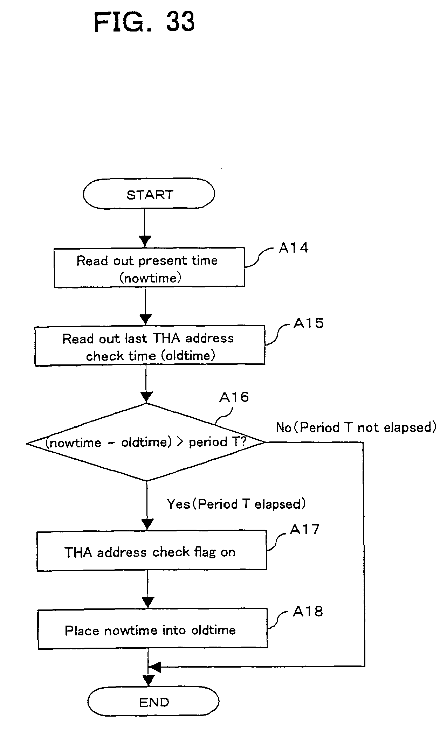

In particular, in this instance, as seen from FIG. 33, the terminal 3 reads out current time information (nowtime) (step A14), reads out last THA address check time information (oldtime) (step A15), and checks whether or not the finite difference (nowtime - oldtime) of the time information is greater than the period T (step A16).

Then, if the finite difference of the time information is greater than the time information (period) T, then since this signifies that the fixed period T elapses, a THA address check flag is changed over to "on" (from the Yes route of step A16 to step A17) and updates the last THA address check time information (oldtime) with the current time information (nowtime) (step A18), thereby ending the processing. It is to be noted that, when the finite difference of the time information described above is equal to or smaller than the time information T, then the processing is ended immediately (the No route of step A16).

The terminal 3 repetitively executes the procedure described above (fixed period count algorithm) to set the THA address check flag to "on" after each lapse of the fixed period T. It is to be noted that the time information (nowtime and oldtime), time information T and THA address check flag described above may be stored into the information storage register 341.

If, in this state, the terminal 3 (router advertisement message processing section 34C) issues a resident position registration message destined for the original THA 21a to perform position registration into the THA 21a (step A8), then the terminal 3 now checks whether or not the THA address check flag is "on" (step A9). If the THA address check flag is "off" , then even if the THA address exhibits a change at the point of time, then the terminal 3 sets the original THA address as the current THA address (from the No route of step A9 to step A13) and then resets the THA address check flag to "off" (step A12).

On the other hand, if the THA address check flag is "on" , then the router advertisement message processing section 34C checks whether or not the prefix part of the THA address included in a "router advertisement" coincides with the prefix part of the original THA address (stored, for example, in the information storage register 341) (from the Yes route of step A9 to step A10). If they coincide with each other, then since the THA address does not exhibit a change, the terminal 3 also in this instance sets the original THA address as the current THA address (from the Yes route of step A10 to step A13) and resets the THA address check flag to "off" (step A12).

On the other hand, if the prefix parts described above do not coincide with each other, then since this signifies that the THA address exhibits a change, the terminal 3 (router advertisement message processing section 34C) reports the "PCOA" to the THA 21b having the new THA address with a resident position registration message and reports the "VCOA" to the VHA 10 of the home network 1 with a home position registration message (from the No route of step A10 to step A11) as described hereinabove and resets the THA address check flag to "off" (step A12).

In short, in the present modification, the router advertisement analysis section 342 having a function as gate node identification information supervision means is formed as conditional supervision means for executing the flag setting algorithm (steps A14 to A18) and the THA address check algorithm (steps A9 to A13) described above to discriminate whether or not the THA address exhibits a change in a predetermined additional condition.

In this instance, the position registration message production section 343 having a function as current position reporting means has another function as conditional reporting means for reporting, if a change of the THA address in the additional condition is detected by the router advertisement analysis section 342, even if the M3 network address does not exhibit a change, the current position information (PCOA) of the terminal 3 itself to a new THA identified with the THA address after the change.

In this manner, in the first modification, if the fixed condition that the THA address exhibits a change when the fixed period T elapses is satisfied, then changeover of the position registration destination THA is performed. Therefore, for example, in such a case that the position registration destination THA is maintained until the distance between the terminal 3 and the THA becomes very long, the registration frequency is reduced when compared with an alternative case wherein position registration is performed every time the nearest THA changes while optimization of the position registration destination THA, that is, optimization of the handover timing, can be achieved effectively.

### B2. Second Modification (when a THA changeover discrimination is performed while communication is not proceeding)

Now, a modification where such a changeover discrimination of the THA as described above is performed while the terminal 3 is not communicating is described.

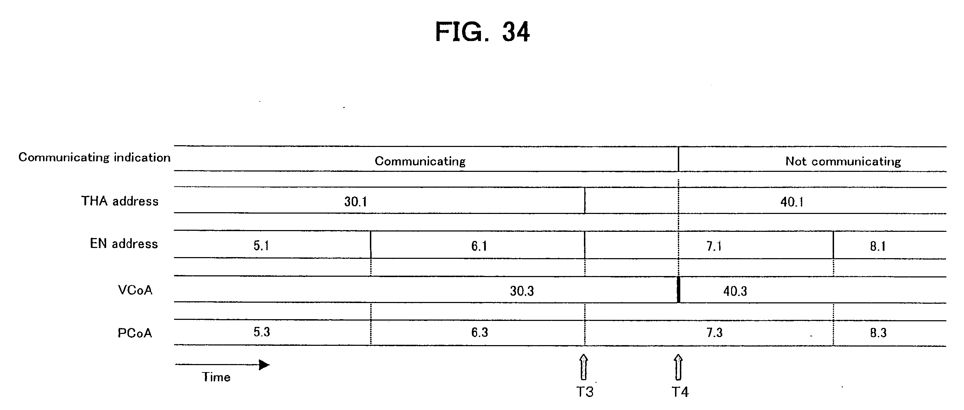

In particular, for example, as seen in FIG. 34, at a point T3 of time at which the THA address included in a "router advertisement" changes from "30.1" to "40.1", the terminal 3 does not perform changeover of the THA because it is communicating as yet. If the terminal 3 thereafter receives a "router advertisement" at a point of time at which the terminal 3 enters a non-communicating state (after another point T4 of time), then the terminal 3 executes changeover of the THA in a similar manner as in the example described above (that is, reports the "PCOA" to the THA 21b and reports the "VCOA" to the VHA 10).

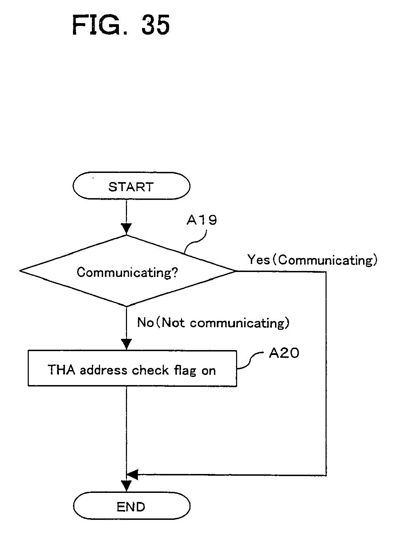

Such operation as described above is different in the opportunity in which the THA address check flag is changed to "on", and therefore can be realized using, in place of the flag setting algorithm described hereinabove with reference to FIG. 33, another flag setting algorithm wherein, for example, as illustrated in FIG. 35, only when the terminal 3 is not communicating (only when the discrimination in step A19 is No), the THA address check flag is changed to "on" (step A20) . It is to be noted that the algorithm illustrated in FIG. 35 is started up independently of the THA address check algorithm illustrated in FIG. 32 (for example, periodically).

In this manner, in the second modification, since changeover of the position registration destination THA is performed without fail only when the terminal 3 is not communicating, deterioration of the communication quality by occurrence of changeover during communication does not occur. Accordingly, optimization of the handover time can be achieved while preventing deterioration of the communication quality. B3. Third Modification (when a THA changeover discrimination is performed while the terminal 3 is not communicating)

Now, a modification wherein the THA changeover discrimination described above is performed only when the traffic amount is equal to or lower than a predetermined threshold value is described.

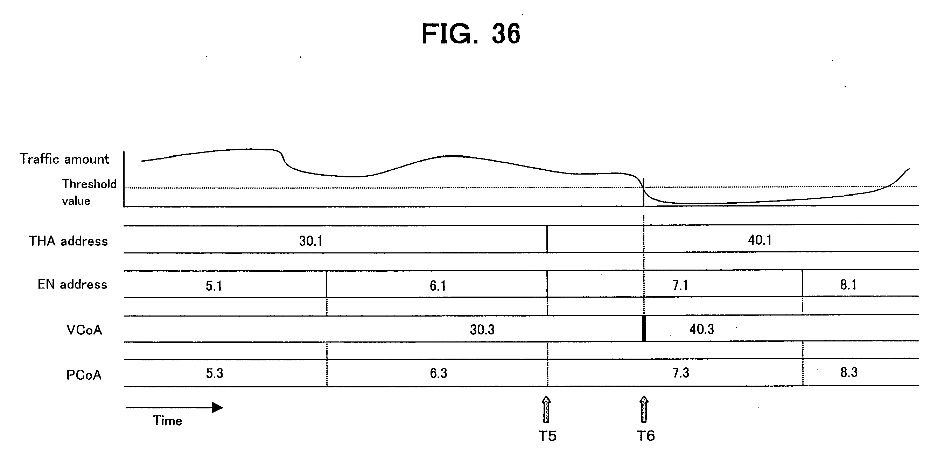

In particular, for example, as seen in FIG. 36, the terminal 3 supervises the communication traffic amount, and even if the THA address changes, if the traffic amount then exceeds a threshold value, then the terminal 3 does not perform a THA changeover discrimination (refer to a point T5 of time), but only if the traffic amount becomes equal to or lower than the predetermined threshold value, the terminal 3 performs a THA changeover discrimination (refer to a point T6 of time) .

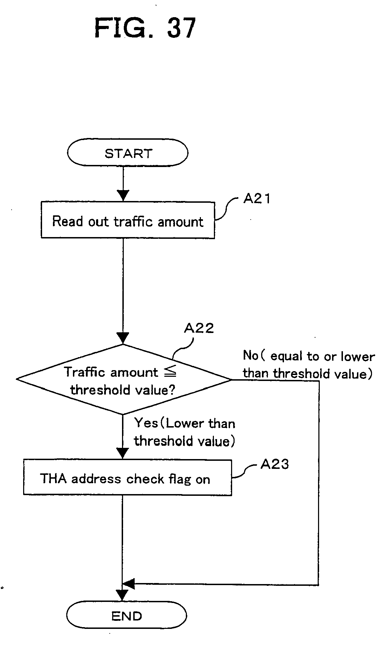

Such operation of the terminal 3 can be realized using, in place of the flag setting algorithm illustrated in FIG. 33, another flag setting algorithm wherein, for example, as seen in FIG. 37, the terminal 3 reads out the supervised traffic amount (which may be stored, for example, in the information storage register 341) (step A21) and changes, only when the traffic amount is equal to or smaller than the threshold value (only when the discrimination in step A22 is Yes), the THA address check flag to "on" (step A23). It is to be noted that also the algorithm illustrated in FIG. 37 is started up independently of the algorithm illustrated in FIG. 32 (for example, periodically).

In this manner, in the third modification, since changeover of the position registration destination THA is performed without fail only when the communication traffic amount is equal to or smaller than the predetermined value, optimization of the handover time can be achieved while suppressing the influence upon communication (pressure on the communication band and so forth) to the minimum.

### B4. Fourth Modification (when a THA changeover discrimination is performed depending upon the type of communicating traffic)

Now, a modification wherein the THA changeover discrimination described above is performed depending upon the type of communicating traffic is described.

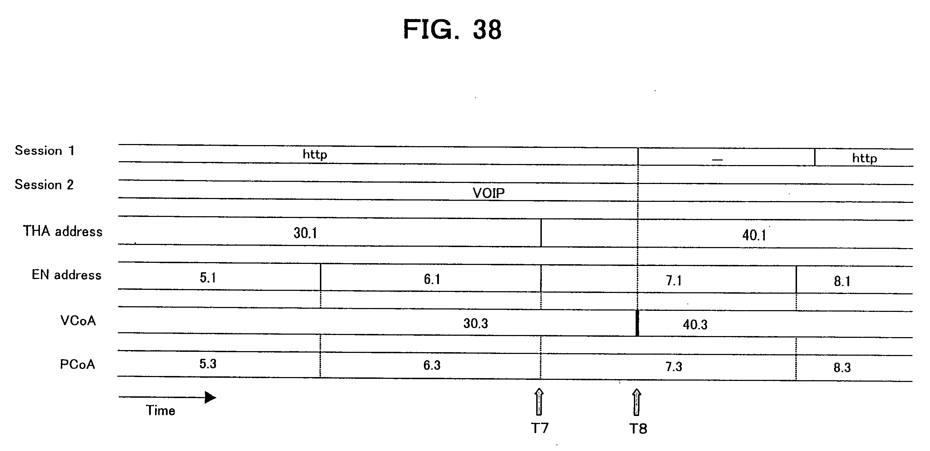

In particular, for example, as seen in FIG. 38, a terminal 3 is performing communication of two traffic types of "http" and "VOIP", and while the "http" traffic is present, even if the THA address changes, the terminal 3 does not perform a THA changeover discrimination (refer to a point T7 of time). Thereafter, when the "http" traffic disappears and only the "VOIP" traffic remains, the terminal 3 performs a changeover discrimination of the THA upon reception of a "router advertisement" after all (refer to a point T8 of time).

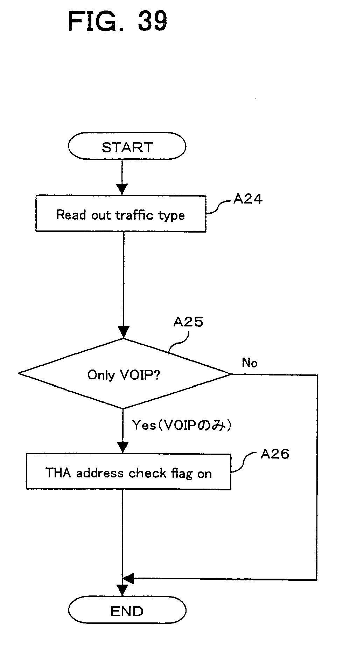

Such operation of the terminal 3 can be realized using, in place of the flag setting algorithm illustrated in FIG. 33, another flag setting algorithm wherein, for example, as seen in FIG. 39, the terminal 3 supervises the traffic type and stores such type information into the information storage register 341 or the like and then reads out the type information (step A24) and changes, when only the traffic type "VOIP" is effective at present (when the discrimination in step A25 is Yes), the THA address check flag to "on" (step A26).

It is to be noted that the discrimination of whether or not the traffic at present is the "VOIP" traffic is performed by referring to the value set in a "traffic class" field 712 (refer to FIG. 8) of the received packet. Also the algorithm illustrated in FIG. 39 is started up independently of the THA address check algorithm illustrated in FIG. 32 (for example, periodically).

In this manner, in the fourth modification, since changeover of the position registration destination THA is performed only when the data traffic type during communication is the "VOIP" which allows some packet loss, even if changeover of the position registration destination THA is performed, the handover time can be optimized only with communication quality deterioration within a permissible range.

It is to be noted that, if also some traffic type other than the "VOIP" permits some communication quality deterioration by handover, then naturally it is possible to perform changeover of the position registration destination THA while only communication of the type is proceeding. Also in this instance, similar operation and effects can be anticipated.

### B5. Fifth Modification (when a THA changeover discrimination is performed while an application of a terminal 3 is not operating)

Now, a modification wherein the THA changeover discrimination described above is performed while an application of a terminal 3 is not operating is described.

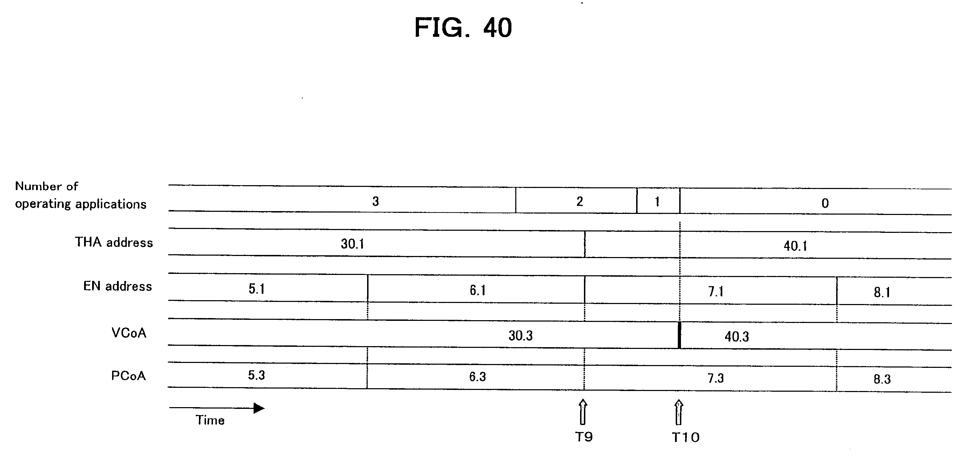

In particular, for example, as seen from FIG. 40, the terminal 3 supervises the number of operating applications and, when the number of applications which are operating is any other than "0", the terminal 3 does not perform a THA changeover discrimination even if the THA address exhibits a change (refer to a point T9 of time), but when the number of operating applications becomes zero, the terminal 3 performs a THA changeover discrimination upon reception of a "router advertisement" after all (refer to a point T10 of time).

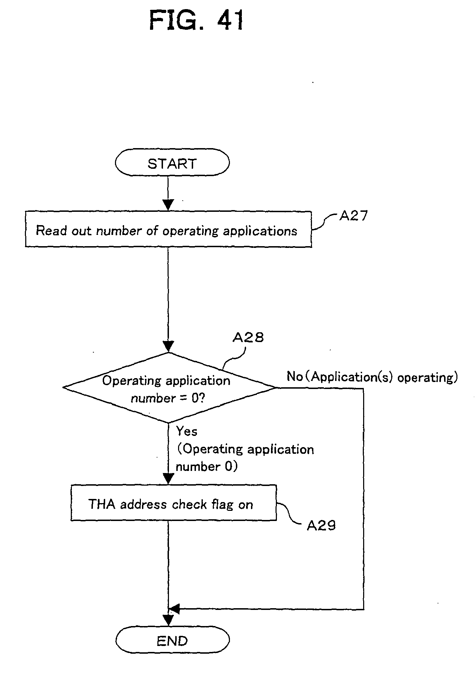

Such operation of the terminal 3 as just described can be realized using, in place of the algorithm illustrated in FIG. 33, another flag setting algorithm wherein, for example, as seen in FIG. 41, the terminal 3 reads out the supervised operating application number (step A27) and changes, only when the number of applications which are operating is "0" (when the discrimination in step A28 is Yes), the THA address check flag to "on" (step A29). It is to be noted that also the algorithm illustrated in FIG. 41 is started up independently of the THA address check algorithm illustrated in FIG. 32 (for example, periodically).

In this manner, in the fifth modification, since the used state of applications to be used for communication is supervised and, as the additional condition that the applications are not used, that is, the terminal 3 itself has a sufficient processing capacity, the changeover of the position registration destination THA is performed. Consequently, also with the fifth modification, optimization of the handover time can be achieved while suppressing the communication quality deterioration during communication to the minimum.

The conditions described hereinabove in connection with the first to fifth modifications in B1 to B5 may be set in a suitable combination. In particular, a changeover of the position registration destination THA may be performed only when the THA address exhibits at a particular timing (in a combination of conditions) specified by an arbitrary combination of the conditions given above, that is, the fixed period, that the communication is not proceeding, the communication traffic amount, the data traffic type and the used state of applications.

For example, it is possible to perform a changeover of the position registration destination THA, for example, when the terminal is not communicating at a time at which the fixed period T elapses or only when the traffic amount is equal to or smaller than the predetermined value during communication of a particular data traffic type. In any case, deterioration of the communication quality by handover can be suppressed further effectively.

### C. Others

It is to be noted that, while the embodiment described above is configured on the premise that an EN does not know the address of the other party (VHA/THA) to be requested for a "cache", for example, where addresses are allocated precisely hierarchically, another method may be used wherein an EN combines several higher order digits of an address area of a received packet and a particular interface ID to determine a destination address.

As a different method, where an EN knows the address of a VHA/THA in advance, the address may be transmitted as the address of a BR-M3 message.

### D. Second Embodiment

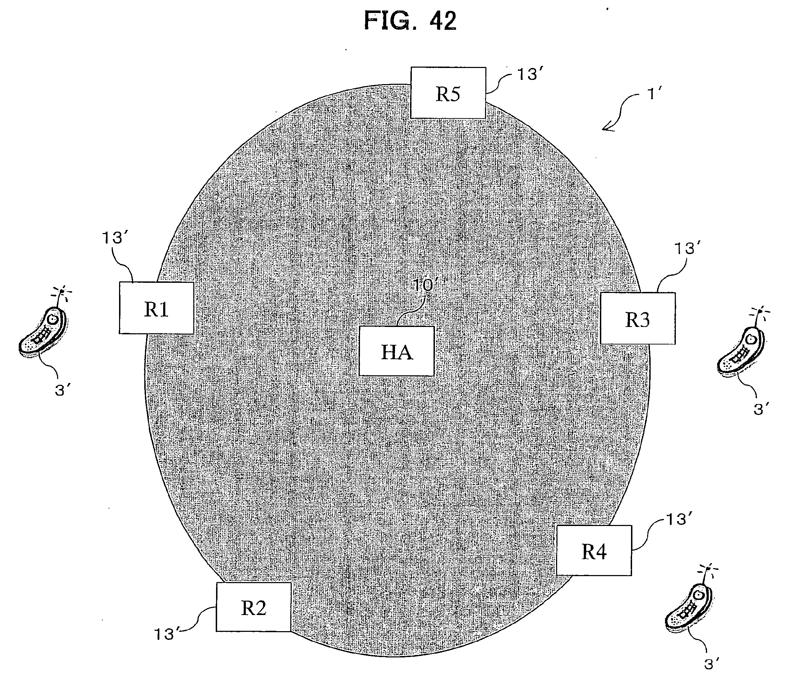

FIG. 42 is a block diagram showing a configuration of a packet network according to a second embodiment of the present invention. Referring to FIG. 42, the packet network 1' shown complies with the "MIPv6" and includes a plurality of nodes (routing nodes), a particular one of which serves as a home agent node (HA) 10' having a position management function of a mobile terminal (MN; Mobile Node) 3' and the other ones of which serve as routers (R) 13' (in FIG. 42, five routers R1 to R5 are shown).

Also in this instance, the MN 3' produces current position information (a COA) based on the IP address of the nearest router (resident node) 13' included in a router advertisement (RA) received from the router 13' and reports the current position information to the HA 10' to successively perform position registration into the HA 10'. Consequently, the HA 10' can normally route (hand over) a received packet destined for the MN 3' to the resident router 13' corresponding to the current position of the MN 3' to allow normal mobile IP communication (including voice and data communication) during movement of the MN 3'. It is to be noted that, though not shown in FIG. 42, opposite terminals which can be connected to the router 13' to communicate with the MN 3' not only include other MNs 3' but also fixed terminals.

More particularly, the HA 10' has a function of receiving a report (position registration) of the COA from the MN 3' and managing the COA of the MN 3' as part of information called binding cache. Further, the HA 10' has another function of searching such "cashes" for the "COA" corresponding to the destination address (DA) indicated by an arriving (incoming or received) packet destined for the MN 3' , encapsulating the packet with the searched out pertaining "COA" and transferring (routing) the packet.

Each router 13' can communicate with any MN 3' positioned in its resident zone by a radio circuit to perform transmission and reception of a packet to and from the MN 3' and has a function of routing a received packet to a next hop destination (another router 13' or MN 3') based on the destination address (DA) provided to the received packet. It is to be noted that, in the following description, the HA 10' and the MN 3' are sometimes represented with their reference characters omitted like HA and MN, respectively, similarly to those in the first embodiment.

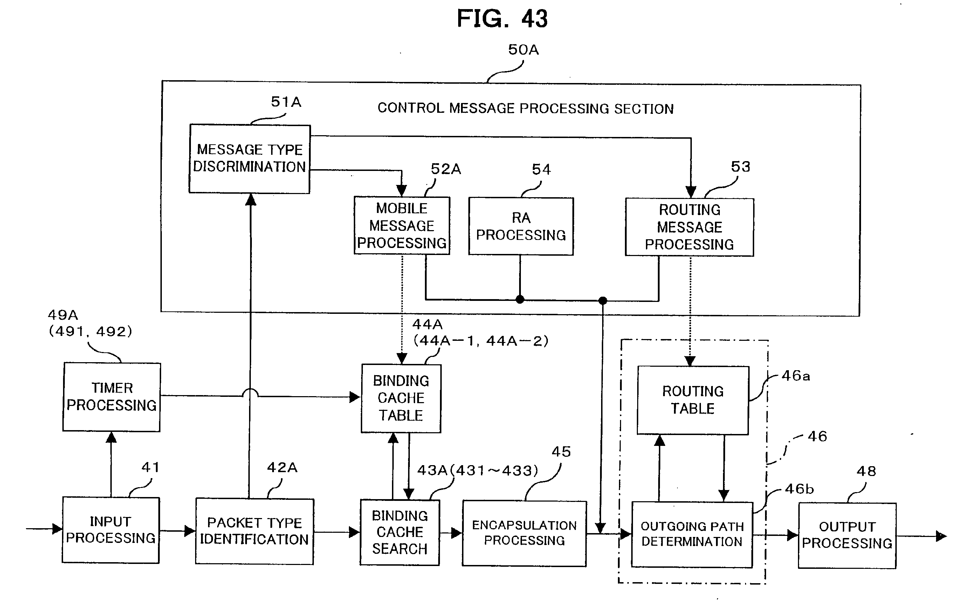

Each of the HA 10' and router 13' includes, for example, as seen in FIG. 43, as principal components thereof, an input processing section 41, a packet type identification section 42A, a binding cache (Binding Cache) search section 43A, a binding cache (Binding Cache) table 44A, an encapsulation processing section 45, a router processing section 46 including a routing table 46a and an outgoing path determination section 46b, an output processing section 48, a timer processing section 49A and a control message processing section 50A.

The input processing section 41 performs, similarly to that shown in FIG. 2, processing of the IP layer or lower layers of an arriving or incoming (received) packet. For example, in an ethernet, the input processing section 41 has a function of fetching a packet to which an MAC (Media Access Control) address destined for the node itself is applied and checking the normality of a frame itself of the packet.

The packet type identification section 42A refers to the destination address (DA) of a normal packet received by the input processing section 41 to identify the type of the packet (principally whether the packet is a message destined for the node itself or for another node). Here, the packet type identification section 42A delivers a message (packet) destined for the node itself to the control message processing section 50A but delivers another message destined for another node to the binding cache search section 43A.

The binding cache table (which may sometimes be hereinafter referred to merely as "cache table") 44A shown in FIG. 43 stores, also in the present embodiment, "caches" produced basically on the "MIPv6" base as data of the form of a table for each of home addresses (MN home addresses) of MNs 3' , and is formed from a required storage device such as, for example, a RAM or a register.

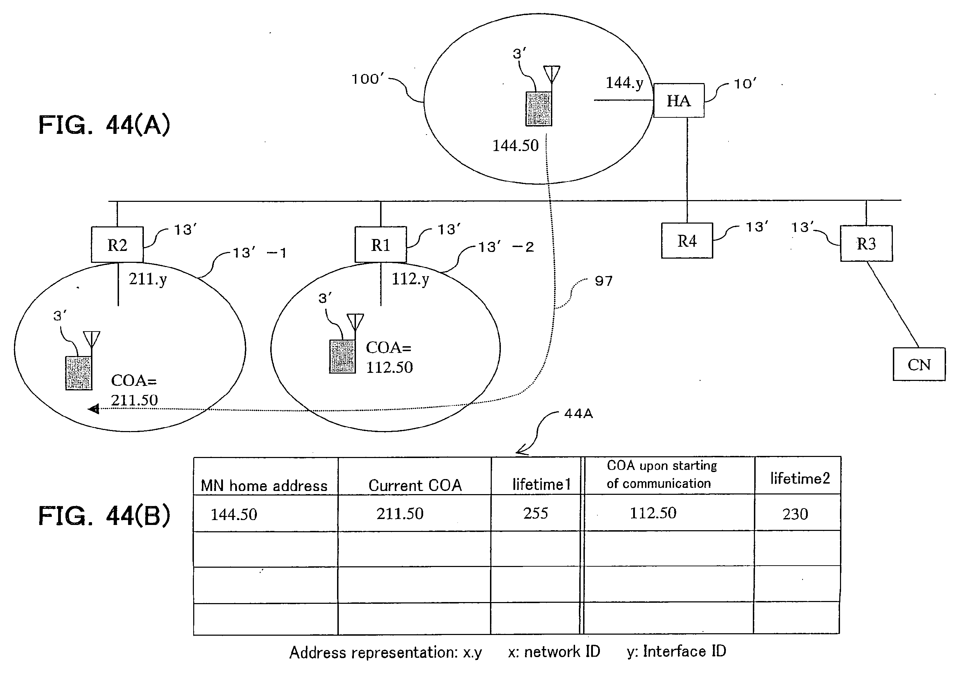

Also the cache table 44A basically holds cache data such as "COA" (128 bits), "Lifetime" (32 bits), "Home registration flag" (1 bit), "router flag" (1 bit), "prefix length" (7 bits), "Sequence Number" (16 bits), "Recent Usage Information" (1 bit) and "last BR time" (128 bits). Particularly, the cache table 44A of the HA additionally holds, for example, as seen in FIG. 44(B), for each MN home address, "current COA" and "lifetime 1" representative of the term of the "current COA" as well as "COA upon starting of communication (in the past) " and "lifetime 2" representative of the "COA upon starting of communication".

In short, the cache table 44A in the present embodiment has a function as a position information holding section 44A-1 for holding a plurality of COAs ("current COA" and "COA upon starting of communication") involved in movement of an MN and another function as a term information storage section 44A-2 for storing information ("lifetime 2") at least relating to the term of the "COA upon starting of communication".

Here, it is assumed that, for example, as schematically shown in FIG. 44(A), an MN present in a communication area (resident zone) 100' of the HA successively moves to the resident zone 13'-2 of the router "R1" and the resident zone 13'-1 of the router "R2" (refer to a dotted line arrow mark 97). It is to be noted that the IP address of each node is represented, similarly as in the representation method in the first embodiment, as x(network ID).y(interface ID of MN), and if the network ID of the HA is "144", the network ID of the router "R2" is "211", and the network ID of the router "R1" is "122", then the address of the HA is represented as "144.y", the address of the router "R2" as "211.y", and the address of the router "R1" as "112.y".

Then, if it is assumed that the interface ID of the MN (an identifier unique to the MN) is "50", then when the MN moves to the resident zone 13'-2 of the router "R1" and establishes a connection to the router "R1", it produces the COA = "112.50" and reports (position registers) it into the HA. It is to be noted that, at this point of time, the "COA upon starting of communication" is not registered in the cache table 44A.

Thereafter, if the MN starts communication in a state wherein it is connected to the router "R1" (in other words, if a packet destined for the MN is received by the HA), then the HA discriminates the "traffic type" of the received packet. Then, if the received packet is a data packet, then the HA copies the "current COA" and the "lifetime 1" then and registers them as the "COA upon starting of communication" and "lifetime 2" into the cache table 44A, respectively.

If the MN further moves in this state until it is connected to the router "R2", then it produces a new COA = "211.50" and reports it to the HA, and the HA rewrites the "current COA" = "current COA" from "112.50" to "211.50". It is to be noted that the "COA upon starting of communication" then is not changed (remains "112.50").

In this state, the cache table 44A of the HA has such registration contents as seen in FIG. 44(B). In particular, in the cache table 44A, "211.50" is held as the "current COA" and "112.50" is held as the "COA upon starting of communication" as seen in FIG. 44(B).

It is to be noted that both of the "lifetime 1" and "lifetime 2" described above are periodically decremented while a packet destined for the corresponding COA is not received, and if the value of any of them is reduced to "0" (that is, the term expires), then the corresponding COA (cache) is deleted. However, while a packet destined for the corresponding COA is successively received, the COA must be maintained, and therefore, the "lifetime 2" is refreshed (updated) to an initial value or the like determined in advance every time a packet is received so that the "lifetime 2" may not be reduced to "0". The opportunity of updating the "lifetime 1" is similar to that in the first embodiment. Such updating of the terms is carried out by the timer processing section 49A.

The binding cache search section (which may be hereinafter referred to merely as "cache search section") 43A can use the destination address included in the IP header 70 of an input packet as a search key to search the cache table 44A described hereinabove to acquire information (the COA and so forth) necessary for encapsulation by the encapsulation section 45.

It is to be noted, however, that the cache search section 43A of the HA in the present embodiment principally has the following functions.
(1) A function as a traffic (packet) type identification section 431 for identifying the type of a received packet (for example, the traffic type)
(2) A function as a copy registration section 432 which can copy the "current "COA" and "lifetime 1" and register them as the "COA upon starting of communication" and "lifetime 2" into the cache table 44A, respectively.
(3) A function as a COA selection section (selection means) 433 for selecting one of the "current COA" and the "COA upon starting of communication" in the cache table 44A as a COA to be used for encapsulation by the encapsulation processing section 45 in accordance with a result of identification (the traffic type of the received packet) by the traffic type identification section 431.

Here, as examples of the "traffic type" mentioned above, (i) a voice packet [for example, a VOIP (Voice Over Internet Protocol) packet] having a characteristic that some packet loss is permitted, and (ii) a data packet [for example, an http (hyper text transfer protocol) data packet, an ftp (file transfer protocol) data packet or the like] having another characteristic that some packet transfer delay is permitted, are available. The traffic types can be identified by defining the value of a tos (type of service) field ["traffic class" field 712 (refer to FIG. 8)] included in the IP header 70 (standard header 71; refer to FIG. 7) differently for the different traffic types. It is to be noted that such use of the tos value for identification of the "traffic type" in this manner is the most simple and convenient method, and also miniaturization of the HA can be anticipated through the use.

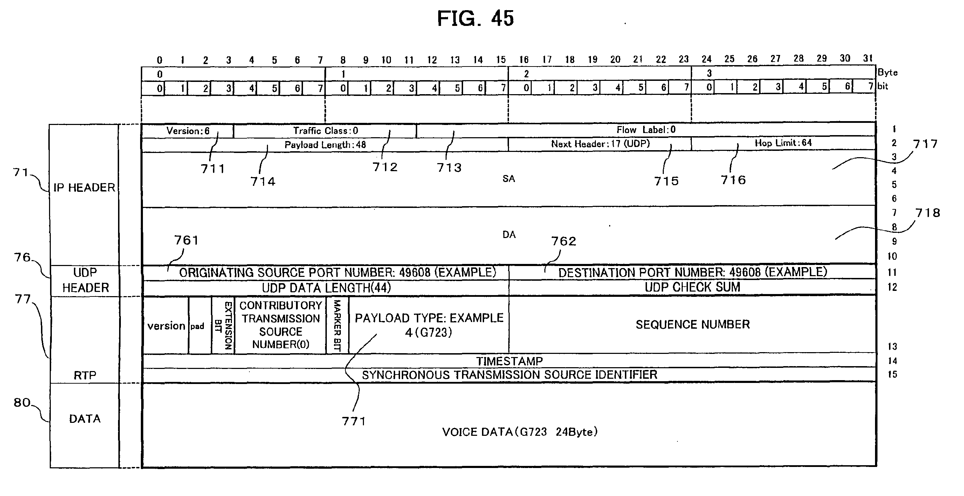

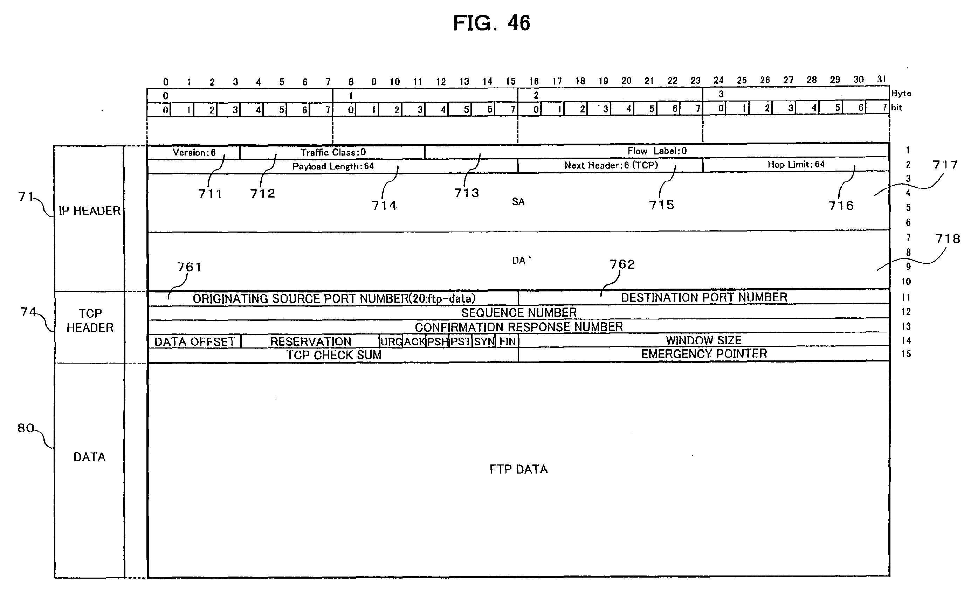

More particularly, for example, a voice packet has such a format as illustrated in FIG. 45 while an ftp data packet has such a format as illustrated in FIG. 46, and if values representative of a voice packet and an ftp data packet are set in the "traffic class" field 712 in FIGS. 45 and 46, then the "traffic type" (hereinafter referred to sometimes as "packet type") of any of the packets can be discriminated by the traffic type identification section 431.

In short, the traffic type identification section 431 in this instance functions as a packet loss/transfer delay characteristic identification section for at least identifying which one of a traffic type having a characteristic that some packet loss is permitted and another traffic type having another characteristic that some packet transfer delay is permitted the "traffic type" of a received packet is.

It is to be noted that the value (tos value) of the "traffic class" field 712 mentioned above may be set, for example, when an MN produces a packet, by the MN side in accordance with an agreement concluded between the MN and the network manager in advance. Alternatively, in accordance with an agreement concluded with the network manager in advance, an edge router at the entrance of the packet network 1' into which packets flow may be provided with a policy control function such that it may check the transmission source address (SA), destination address (DA), used protocol, transmission (originating) source port number, and destination port number for all received packets to identify the "traffic type" of the received packets, rewrite (set) the tos value of each received pocket into (to) a suitable value (traffic identification information) in accordance with a result of the identification and transfer (route) the packet into the network 1' (to the HA).

In the latter case, the MN need not set the tos value of a transmission packet by itself, and the HA can identify the "traffic type" based on the tos value re-set in the received packet by the edge router described above. Consequently, the processing capacity of the MN remains sufficiently high. It is to be noted that a result of identification of the "traffic type" by the edge router may naturally be set to any other place than the "traffic class" field 712 of a packet.

Referring to FIGS. 45 and 46, the "transmission source address (SA) is indicated in an SA field 717 ; the "destination address (DA)" is indicated in a DA field 718; and the "used protocol" is indicated in a "next header" field (protocol field) 715 [for example, "6" for the TCP (Transmission Control Protocol), "17" for the UDP (User Datagram Protocol) and so forth].

Similarly, the "transmission source port number" is an originating source port number field 761 of a TCP header 74 or a UDP header 76, and the "destination port number" is similarly indicated in a destination port number field 762 of the TCP header 74 or the UDP header 76.

It is to be noted that, where the entrance (edge router) of the network 1' is not provided with the policy control function in this manner, then since, for example, a voice packet which uses the VOIP normally uses the RTP (Real-time Transport Protocol) for a higher order layer of the IP, the fact that a received packet is a voice packet can be identified by detecting the RTP header 77 (refer to FIG. 45).

The type of voice coding of the RTP is indicated in a payload type field 771. FIG. 45 illustrates, as an example of a voice packet, a packet format wherein the G.723 (dual rate speech coder for multimedia communications transmitting at 5.3 and 6.3 kbit/s) (payload type = 4) is used for voice coding of voice data placed in a payload 80 (24 bytes).

Further, where the used port number is different depending upon an application used by the MN side, the "traffic type" of a received packet can be identified from the value indicated in the port number field 761 or 762 mentioned hereinabove.

Furthermore, since the type of a higher order application is indicated in the protocol field 715 mentioned hereinabove, the "traffic type" of a received packet can be identified from the value of the type of the higher order application. Further, since a real time traffic such as a voice packet has a characteristic that the packet length is normally short, also it is possible to identify the "traffic type" from the value of the packet length ("payload length" field 714).

Furthermore, for a packet of the "IPv4", the value of an identifier (Identification) field included in the header of the packet can be used for identification of the "traffic type".

The cache search section 43A of the HA uses an MN home address of a packet transmitted with the MN home address set as the destination address (DA) because the current position of the opposite (destination) MN is not known as a search key to search the cache table 44A described hereinabove so that the COA selection section 433 selectively acquires one of the "current COA" and the "COA upon starting of communication" as a COA to be used for encapsulation by the encapsulation processing section 45 in accordance with the "traffic type" identified by the traffic type identification section 431 as described above.

In other words, the COA selection section 433 of the cache search section 43A in the present embodiment functions as a terminal position information selection section which searches, for example, where the received packet is a voice (VOIP) packet having a characteristic that some packet loss is permitted, the cache table 44A to select the "current COA" corresponding to the MN home address of the received packet, but selects, where the received packet is a data packet having a characteristic that some packet transfer delay is permitted, the "COA upon starting of communication" (only if it is registered) corresponding to the MN home address.

The encapsulation processing section 45 encapsulates a received packet transferred thereto from the cache search section 43A using a COA selected by the COA selection section 433. The router processing section 46 (routing table 46a and outgoing path determination section 46b) and the output processing section 48 have individually similar functions to those described hereinabove with reference to FIG. 2. In particular, the outgoing path determination section 46b searches the routing table 46a to determine a physical interface to be used for outputting, a destination address in a lower layer and so forth. The output processing section 48 applies, for example, in an ethernet, a necessary frame check sequence code to an ethernet frame and signals the resulting packet (frame).

Accordingly, the encapsulation processing section 45 in the present embodiment encapsulates a received packet transferred from the cache search section 43A using a COA selected by the COA selection section 433. Then, in the router processing section 46, the outgoing path determination section 46b searches routing information of the routing table 46a based on the destination information ("current COA" or "COA upon starting of communication") of the header (capsule header) of the packet ("tunnel packet") encapsulated in this manner to determine an output interface for the tunnel packet and outputs the tunnel packet to the thus determined output interface.

In short, the router processing section 46 in the present embodiment functions as routing means for routing a received packet based on a COA selected by the COA selection section 433.

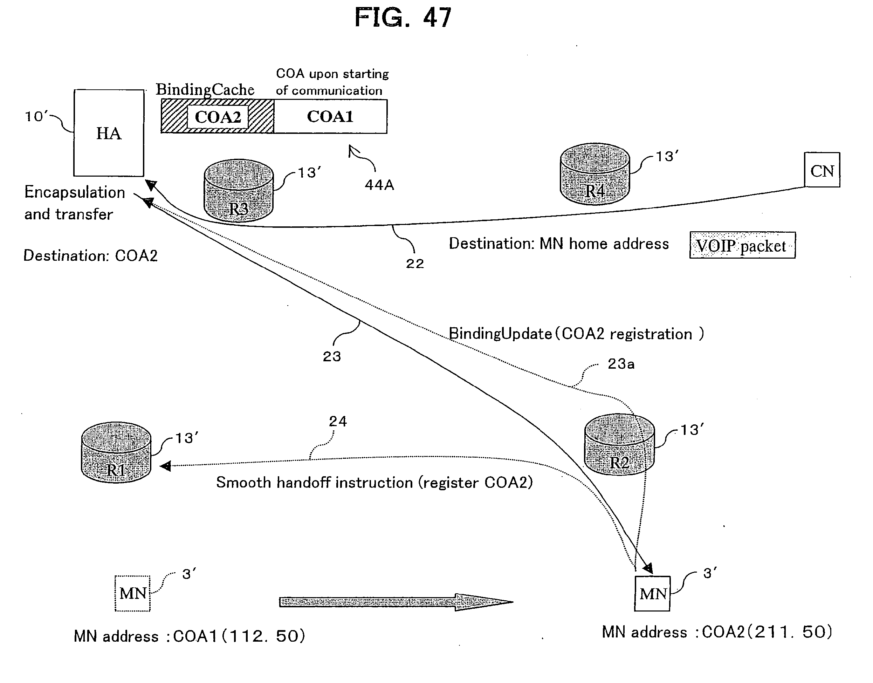

Consequently, for example, as schematically illustrated in FIG. 47, a voice packet is routed after it is encapsulated with the "current COA" registered with a binding update message from an MN (refer to a dotted line arrow mark 23a), that is, the latest COA (COA2 = 211.50) of the MN. Consequently, the packet transfer route to the router "R2" to which the MN is currently connected is optimized (refer to solid line arrow marks 22 and 23) to minimize the packet transfer delay.

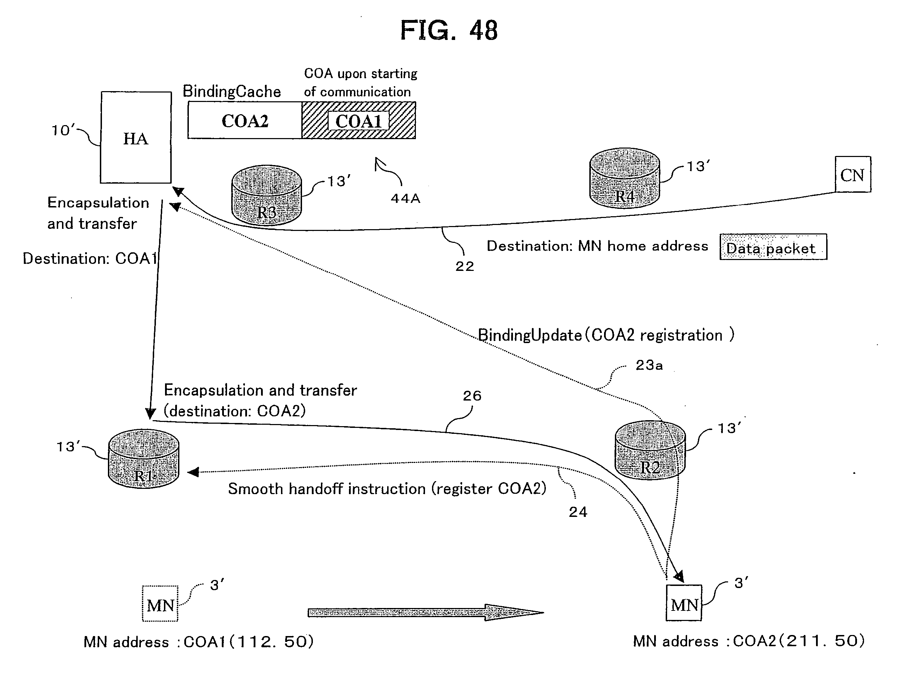

On the other hand, since a data packet is encapsulated with the "COA upon starting of communication" (COA1 = 112.50) and routed, for example, as schematically illustrated in FIG. 48, while the MN continues communication, it issues a "smooth handoff instruction" to the router (hereinafter referred to as old router) "R1", to which the MN was connected upon starting of the communication, to register the "current COA" (COA2 = 211.50) into the old router "R1" (refer to a dotted line arrow mark 24) to extend the path from the old router "R1" to the router "R2" to which the MN is currently connected (refer to a solid line arrow mark 26) thereby to maintain the packet transfer route from the HA to the old router "R1" (refer to a solid line arrow mark 25). Consequently, the packet loss can be suppressed to the minimum when compared with an alternative case (of FIG. 47) wherein the HA changes over the packet transfer destination router from "R1" to "R2".

In this manner, the HA in the present embodiment can selectively use the COA for use for encapsulation of a receive packet in accordance with the "traffic type" of the received packet to change (change over) the handover scheme (method) for the MN. It is to be noted that, in the following description, the former (handover method for a VOIP packet) of the two handover methods described above is sometimes referred to as first handover method and the latter (handover method for a data packet) is sometimes referred to as second handover method.

Referring back to FIG. 43, the timer processing section 49A has a function as a lifetime refreshment section 491 which updates the "lifetime 1" and "lifetime 2" of the above-described cache table 44A, that is, a function of successively decrementing the "lifetime1" and "lifetime 2" while a packet whose destination address (DA) is the MN home address is not received by the input processing section 41, but updates the "lifetime 1" and "lifetime 2" so as not to expire (not to be reduced to "0") while a packet is successively received. The timer processing section 49A further has a function as a COA (terminal position information) deletion section 492 which deletes the pertaining COA when the "lifetime 1" or "lifetime 2" expires.

The control message processing section 50A receives a (control) message identified as a message destined for the node itself by the packet type identification section 42A and processes the message. To this end, the control message processing section 50A includes, as shown in FIG. 43, a message type discrimination section 51A, a mobile message processing section 52A, a routing message processing section 53 and a router advertisement (RA) message processing section 54.

The message type discrimination section 51A discriminates (identifies) the type of a received control message. In particular, the message type discrimination section 51A discriminates mobile messages (binding update/acknowledgement messages) and the other routing messages from each other and distributes the mobile messages to the mobile message processing section 52A, but distributes the routing messages to the routing message processing section 53.

The mobile message processing section 52A discriminates (analyzes) the type of a received mobile message and performs a process (registration or deletion of information into or from the cache table 44A) in accordance with the contents of the message. In the present embodiment, as such message types, principally (i) a binding update message [position registration message (smooth handoff instruction message) which uses the binding update (Binding Update) option, and (ii) a binding acknowledgement (Binding Acknowledgement) message (position registration response message) which uses the binding acknowledge (Binding Acknowledgement) option, and so forth are available. It is to be noted that the message of the former (i) is that message which is transmitted from the MN to the HA (old router 13') and the message of the latter (ii) is that message which is transmitted from the HA (old router 13') to the MN of the position registration message transmission source.

More particularly, if a position registration message (smooth handoff instruction message) is received, then the mobile message processing section 52A registers (updates) the COA included in the message as the "current (latest) COA" into a pertaining region of the cache table 44A (region corresponding to the MN home address).

It is to be noted, however, that the mobile message processing section 52A of the HA can copy, if the "COA upon starting of communication" when the received packet is a data packet is not registered in the cache table 44A as yet, the "current COA" and the "lifetime 1" then and register them as the "COA upon starting of communication" and the "lifetime 2", respectively.

In short, a portion including the cache table 44A, timer processing section 49A and mobile message processing section 52A in FIG. 43 functions as terminal position management means for managing a plurality of COAs (terminal position information) involved in movement of an MN.

It is to be noted that the routing message processing section 53 and the RA processing section 54 shown in FIG. 43 are similar to those described hereinabove with reference to FIG. 2. In particular, processes (for example, updating of routing information involved in alteration of the network configuration and so forth) regarding routing messages of the RIP (Routing Information Protocol) or the like are carried out by the routing message processing section 53, and a router advertisement to a resident MN is issued by the RA processing section 54.

A handover method (operation of the HA) in the packet network 1 ' of the second embodiment having such a configuration as described above is described in detail. It is to be noted, however, that, in the following description, for the convenience of description, it is presupposed that the tos value described hereinabove is used for identification of the "traffic type" of a received packet (for example, tos = 0 represents a voice (VOIP) packet, and tos = 1 represents a data packet).

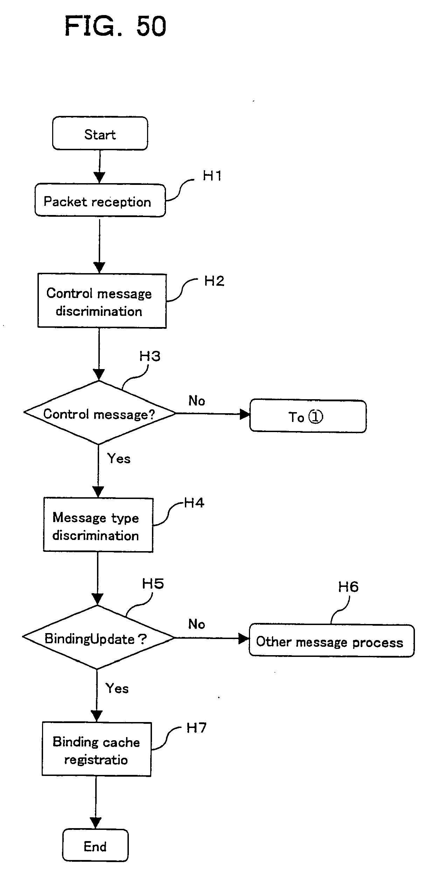

First, in the HA, as seen in FIG. 50, when a packet is received by the input processing section 41 (step H1), the input processing section 41 checks the normality of the received packet, and the packet type identification section 42A discriminates whether or not the received packet is a control message (steps H2 and H3).

If a result of the discrimination reveals that the received packet is a control message, then the control message is transferred to the message type discrimination section 51A of the control message processing section 50A, and the message type discrimination section 51A discriminates whether or not the control message is a mobile message (binding update/acknowledgement message) [from the Yes route of step H3 to steps H4 and H5].

If a result of the discrimination reveals that the received control packet is a mobile message, then the mobile message is transferred to the mobile message processing section 52A. The mobile message processing section 52A registers, if the received mobile message is a binding update message (that is, a position registration message), the COA included in the message as the "current COA" of the MN into the pertaining region of the cache table 44A (from the Yes route of step H5 to step H7). It is to be noted that, if the received mobile message is a binding acknowledgement message, then the mobile message processing section 52A analyzes contents of the message and performs alteration of an internal parameter or the like if necessary.

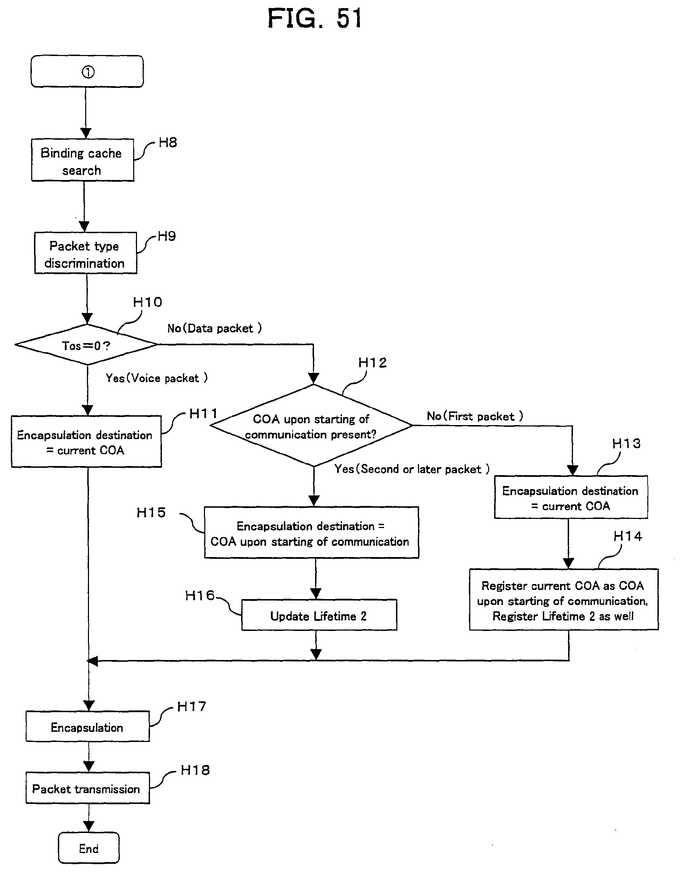

On the other hand, if the packet type identification section 42A discriminates that the received packet is not a control message (if the discrimination in step H3 is No), then the received packet is transferred to the cache search section 43A. Thus, as seen in FIG. 51, the cache search section 43A uses the destination address (MN home address) of the received packet as a search key to search the cache table 44A to acquire the COAs (the "current COA" and the "COA upon starting of communication") corresponding to the MN home address (step H8).

Further, the cache search section 43A (traffic type identification section 431) checks the tos value of the packet transferred thereto from the packet type identification section 42A to identify (discriminate) the packet type of the packet (whether it is a voice packet or a data packet) (steps H9 and H10).

If a result of the identification reveals that the tos value is "0" and the received packet is a voice (VOIP) packet (if the discrimination in step H10 is Yes), then the cache search section 43A selects, by means of the COA selection section 433 thereof, the "current COA" from between the COAs acquired in step H8 described hereinabove as the COA to be used for encapsulation (step H11).

On the other hand, if the tos value is "1" and the received packet is a (ftp) data packet (if the discrimination in step H10 is No), then the cache search section 43A checks whether or not the COAs acquired in step H8 described above include the "COA upon starting of communication" (in short, whether or not the "COA upon starting of communication" is registered already in the cache table 44A) (step H12).

If a result of the discrimination reveals that the "COA upon starting of communication" is not registered as yet (if the discrimination in step H12 is No), then since this signifies that the received packet is the first packet destined for the MN, that is, this point of time is the point of time "upon starting of communication", the cache search section 43A selects, by the COA selection section 433 thereof, the "current COA" at the point of time as the COA to be used for encapsulation of the first packet (step H13). Then, the copy registration section 432 of the cache search section 43A copies the "current COA" and the "lifetime 1" and registers them as the "COA upon starting of communication" and "lifetime 2" into the pertaining regions of the cache table 44A, respectively (step H14).

Since the "COA upon starting of communication" is registered in the cache table 44A after then, when a packet (second or later packet) destined for the same MN is received later, the "COA upon starting of communication" is used as the COA to be used for encapsulation of the received packet (from the Yes route of step H12 to step H15). Further, in order to prevent the term of the "COA upon starting of communication" from expiring and the "COA upon starting of communication" from being deleted during the communication, the "lifetime 2" is refreshed by the timer processing section 49A (term refreshment section 491) (step H16).

The "current COA" or "COA upon starting of communication" selected in step H11, H13 or H15 by the cache search section 43A (COA selection section 433) as described above is transferred to the encapsulation processing section 45 together with the received packet. The encapsulation processing section 45 encapsulates the received packet with the COA and transfers it to the router processing section 46 (step H17).

The outgoing path determination section 46b of the router processing section 46 determines an output interface based on routing information of the routing table 46a, and the encapsulated packet (tunnel packet) is transmitted to the thus determined output interface through the output processing section 48 (step H18). In particular, a VOIP packet is routed toward the router 13' (router to which the MN is currently connected) corresponding to the "current COA", but a data packet (second or later data packet) is routed to the old router 13' corresponding to the "COA upon starting of communication".

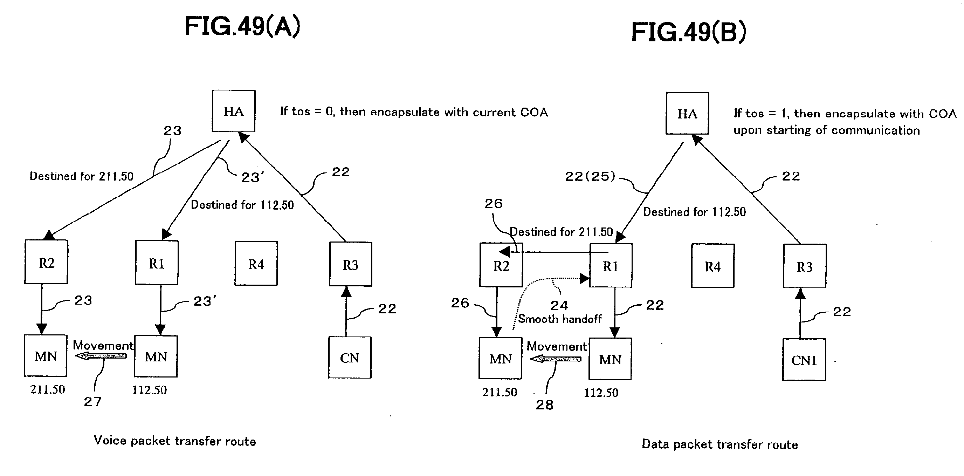

Presupposing that the HA operates in such a manner as described above, if, for example, as seen in FIG. 49(A), the MN moves, when it is communicating by voice with the other party terminal CN (Corresponding Node) through the route "R3" , HA and router "R1" (in this state, the HA encapsulates a voice packet so as to be destined for the "current COA" (112.50) and transfers the packet) (refer to solid line arrow marks 22 and 23'), into the resident zone of the router "R2" while continuing the communication (refer to an arrow mark 27), then the HA encapsulates the voice packet from the opposite terminal CN with the latest COA (211.50) registered from the MN and transfers the encapsulated voice packet (the first handover method is executed) (refer to a solid line arrow mark 23).

On the other hand, if, for example, as seen in FIG. 49(B), the MN moves, when it is communicating data with the opposite terminal CN (Corresponding Node) through the route "R3", HA and router "R1" (in this state, the HA encapsulates a data packet so as to be destined for the "current COA" (112.50) and transfers the packet) (refer to the solid line arrow mark 22), into the resident zone of the router "R2" while continuing the data communication (refer to an arrow mark 28), then the HA continuously encapsulates the data packet from the opposite terminal CN with the "COA upon starting of communication" (112.50) and transfers the encapsulated voice packet (the second handover method is executed) (refer to a solid line arrow mark 25).

In this instance, at the point of time at which the MN moves into the resident zone of the router "R2", the "current COA" (211.50) is registered into the old router "R1" in accordance with a "smooth handoff instruction" of the MN (refer to a dotted line arrow mark 24). Consequently, the old router "R1" re-encapsulates (smooth handoff) a packet sent from the HA to the "COA upon starting of communication" (112.50) with the COA (211.50) registered in accordance with the "smooth handoff instruction" and transfers the re-encapsulated packet to the router "R2" to which the MN is currently connected (refer to a solid line arrow mark 26).

It is to be noted that the router (node) 13' which receives a "smooth handoff instruction" and executes smooth handoff in accordance with the instruction is called "anchor point". The "anchor point" is cancelled when the communication of the MN comes to an end once (the COA registered from the MN in accordance with the "smooth handoff instruction" is deleted), and another router 13' to which the MN issues another "smooth handoff instruction" when it subsequently starts communication becomes a new "anchor point".

As described above, according to the present embodiment, since the HA manages a plurality of COAs (a current COA and a COA upon starting of communication) involved in movement of an MN, identifies the type of a packet destined for the MN, selects one of the COAs (that is, changes the destination of an encapsulation header) in accordance with the identified packet type and routes the received packet based on the selected COA, the handover method to be used can be changed over in accordance with the type of the received packet. Consequently, communication which satisfies the quality in a plurality of different communication services (QoS: Quality of Service) demanded by a user can be achieved, and a handover method which is optimum to a demand by a user can always be provided and the QoS can be improved significantly.

Particularly, in the present embodiment, if the received packet is a voice packet, then the HA can perform handover with the packet transfer delay suppressed to the minimum by selecting the "current COA" of the MN. On the other hand, if the received packet is a data packet, then the HA can perform handover with the packet loss suppressed to the minimum by selecting the "COA upon starting of communication". Consequently, an optimum handover method suitable for a voice communication service, a data communication service or the like to be utilized by the user of the MN can be provided.

Further, in the HA in the present embodiment, the "lifetime 2" of the "COA upon starting of communication" is stored, and every time a packet destined for the MN is received, the "lifetime 2" is refreshed by the timer processing section 49 (term refreshment section 491). Consequently, such a situation that the "COA upon starting of communication" becomes invalidated while the data packet communication continues can be prevented, and also the reliability of the data packet communication is improved.

Furthermore, if the lifetime" of the "COA upon starting of communication" expires, then the position information deletion section 492 of the timer processing section 49 deletes the "COA upon starting of communication". Therefore, the storage capacity necessary for storage of the "COA upon starting of communication" can be suppressed to the minimum, which significantly contributes to miniaturization of the HA.

Further, the MN in the present embodiment issues, while it successively receives a data packet, a "smooth handoff instruction" to the router 13' (anchor point) to which the MN was connected upon starting of communication. Therefore, the communication path (packet transfer route) can be extended from the router 13' which receives the "smooth handoff instruction" to the router 13' to which the MN is currently connected. Consequently, the packet loss arising from the handover can be suppressed to the minimum.

### D1. First Modification to the Second Embodiment

In the second embodiment described above, since the "COA upon starting of communication" is managed only for each destination (MN home address) of a packet, encapsulation is performed by the HA so that all data packets destined for the same destination use the same transfer route.

Therefore, for example, if a certain originating person is transmitting a data packet to an MN and, in this state, another originating person begins to newly transmit a data packet to the MN, then even when the MN moves into the resident zone of another router 13', the data packet from the second originating person is encapsulated with the "COA upon starting of communication" same as that used for encapsulation of the data packet transmitted from the first originating person, and therefore is transferred along a route quite same as the packet transfer route (route by the smooth handoff) of the data packet transmitted from the first originating person, which is inefficient.

Therefore, in the present modification, the "COA upon starting of communication" is managed not only for each destination (MN home address) but also for each originating source (transmission source address: SA) of a received packet so that the packet transfer route of a data packet can be changed for each originating source thereby to allow the shortest anchor point [router (node) which performs packet transfer by smooth handoff] to be always used for each originating person.

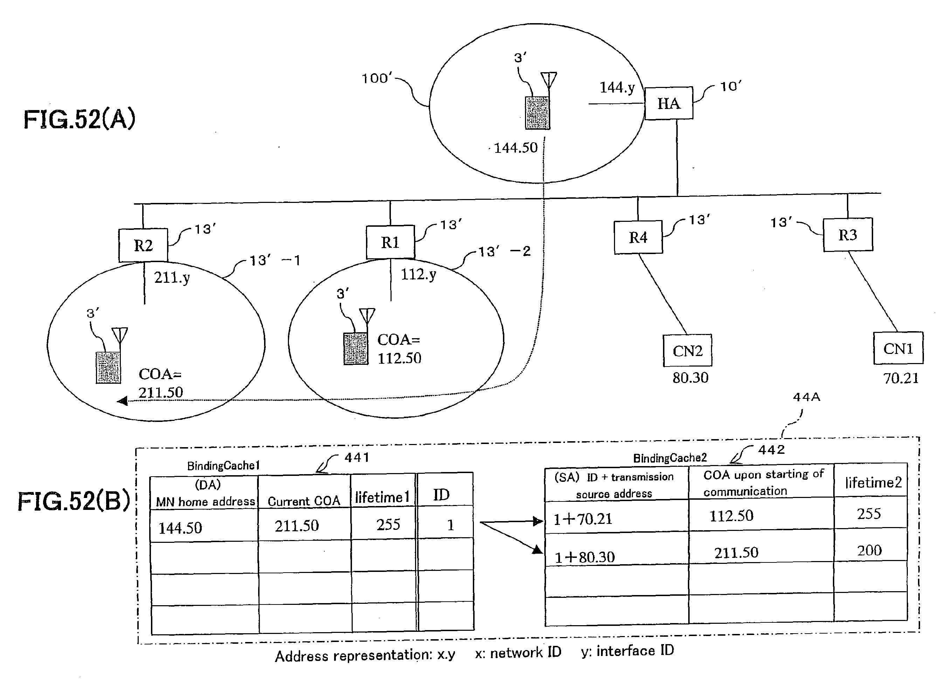

This can be realized by forming, for example, as shown in FIG. 52(B), the cache table 44A from a cache table 441 (Binding Cache 1) in and with which a set of the "current COA" , the "lifetime 1" representative the term of the "current COA" and an ID representative uniquely of an MN home address is registered and managed for each MN home address, and a cache table 442 (Binding Cache 2) in and with which a set of the "COA upon starting of communication" and the "lifetime 2" representative of the term of the "COA upon starting of communication" is registered and managed for each combination of the ID and the transmission source address (SA) of a received packet.

Also in the present modification, if it is assumed that the network ID of the HA is "144", the network ID of the router "R2" is "211" similarly as in FIG. 44(A), then the address of the HA is represented as "144.y", the address of the router "R2" as "211.y", and the address of the router "R1" as "112.y". Further, if it is assumed that the interface ID of the MN is "50", then when it is positioned in the resident zone 13'-2 of the router "R1", it produces the COA = "112.50" and reports (position registers) it to the HA. On the other hand, when the MN is positioned within the resident zone 13'-1 of the router "R2", it produces the COA = "211.50" and reports (position registers) it to the HA.

Accordingly, if it is assumed that, when the MN is positioned in the resident zone 13'-2 of the router "R1", it is connected to the router "R1" and starts data communication with an opposite terminal "CN1" (it is assumed that its transmission source address = 70.21) connected to the router "R3", then "112.50" is registered as the "COA upon starting of communication" with the opposite terminal "CN1" into the cache table 442 of the HA as seen from FIG. 52(B).

Further, if it is assumed that, when the MN is thereafter positioned in the resident zone 13'-1 of the router "R2", it establishes a connection to the router "R2" to start data communication with another opposite terminal "CN2" (it is assumed that its transmission source address = 80.30) connected to the router "R4", then "211.50" is registered as the "CO2 upon starting of communication" with the opposite terminal "CN2" into the cache table 442. It is to be noted that the functions of the "lifetime 1" and "lifetime 2" are similar to those described hereinabove in connection with the second embodiment.

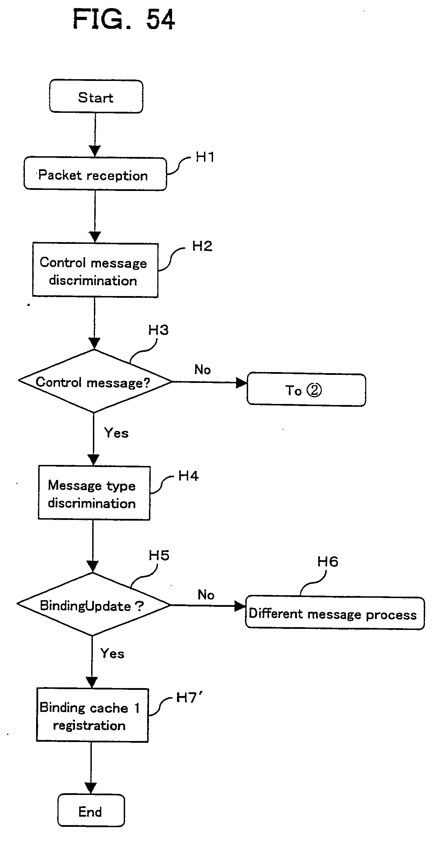

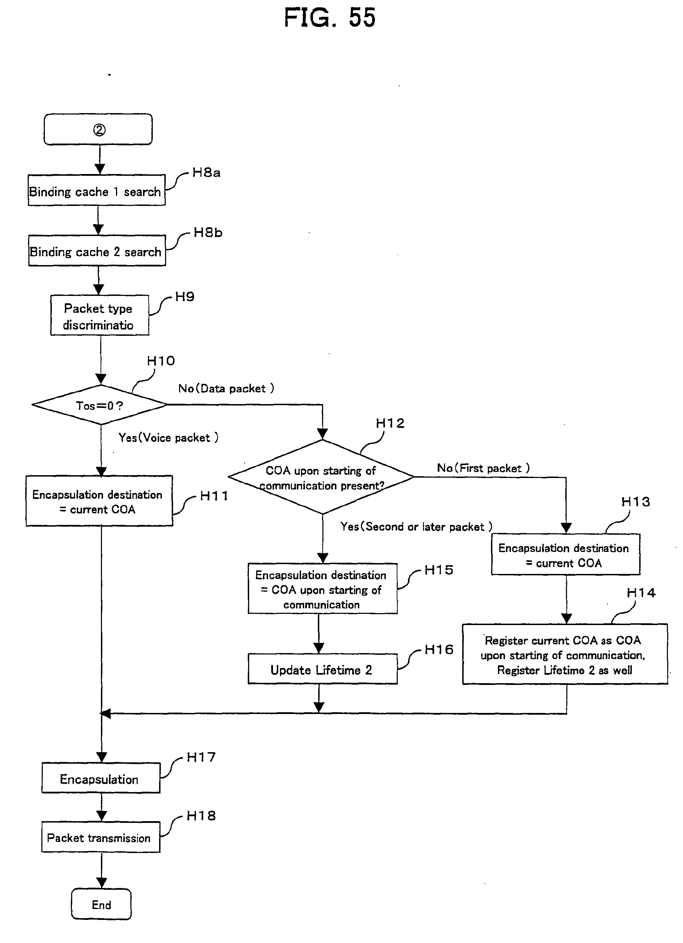

The HA in this instance can operate in accordance with flow charts shown in FIGS. 54 and 55 to perform transfer (routing) of a data packet so that the shortest anchor point may always be taken for each originating person ("CN1" or "CN2").

In particular, as seen in FIG. 54, the "current COA" is registered into the cache table 441 (Binding Cache 1) in step H7 described hereinabove with reference to FIG. 50 (step H7'). Then, as seen in FIG. 55, in step H8 described hereinabove with reference to FIG. 51, the cache search section 43A uses the MN home address and the ID as keys to search the cache tables 441 and 442 to acquire the "current COA" corresponding to the MN home address and the ID and the "COA upon starting of communication" for each transmission source address (steps H8a and H8b). It is to be noted that processing in the other steps is similar to that described hereinabove in connection with the second embodiment.

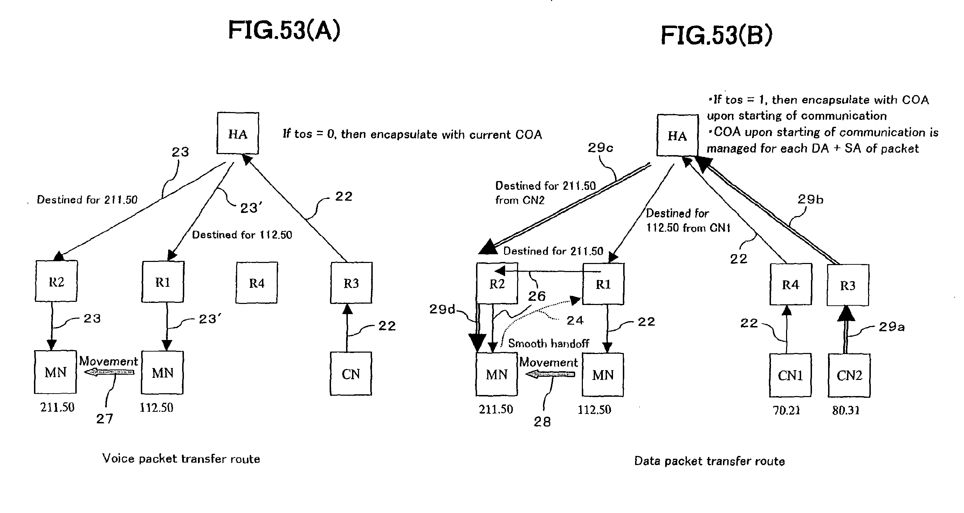

Consequently, the transfer route (handover) for a voice packet is same as that shown in FIG. 49 (A) for each originating person ("CN1" or "CN2") irrespective of the number of originating persons as schematically shown in FIG. 53(A). However, the transfer route for a data packet is such as schematically shown in FIG. 53(B).

In particular, if , while the MN is connected to the router "R1", the opposite terminal "CN1" (SA = 70.21) starts transmission of a data packet and thereafter the MN moves to the router "R2" side (refer to an arrowmark 28) and then another opposite terminal "CN2" starts transmission of a data packet destined for the MN, then since the data packet transmitted from the opposite terminal "CN1" is encapsulated with the "COA (112.50) upon starting of communication" by the HA even if the MN moves, the data packet follows the route of the opposite terminal "CN1" → router "R4" → HA → router "R1" (smooth handoff) → router "R2" → MN until it arrives at the MN similarly as in the case of FIG. 49(B) (refer to arrow marks 22, 25 and 26).

On the other hand, since the data packet transmitted from the second opposite terminal "CN2" is transmitted after the MN moves to the router "R2" side, it is encapsulated by the HA so as to be destined for the "COA (211.50) upon starting of communication" and consequently arrives at the MN past the router "R2" without passing the router "R1" (refer to arrow marks 29a to 29d).

In this manner, in the present modification, since the HA manages the "COA upon starting of communication" for each of received packets whose destination address (DA) and transmission source address (SA) are different, an optimum anchor point (packet transfer route) can be set for each of packet originating persons (the opposite terminals "CN1" and "CN2"), and consequently, the communication service quality to the MN can be further improved.

It is to be noted that, while, in the present modification, the ID is used for coordination between the MN home address and the transmission source address (coordination of the cache tables 441 and 442), the MN home address may be used in place of the ID to establish coordination of the cache tables 441 and 442, or alternatively the cache tables 441 and 442 may be collected into a single table using the MN home address.

### D2. Second Modification to the Second Embodiment

The changeover of the handover method in accordance with the "traffic type" of a received packet described above can be applied also to a system described hereinabove in connection with the first embodiment (that is, a system wherein an EN receives a "cache" from a VHA/THA and performs routing of a packet destined for an MN based on the "cache" in place of the VHA/THA).

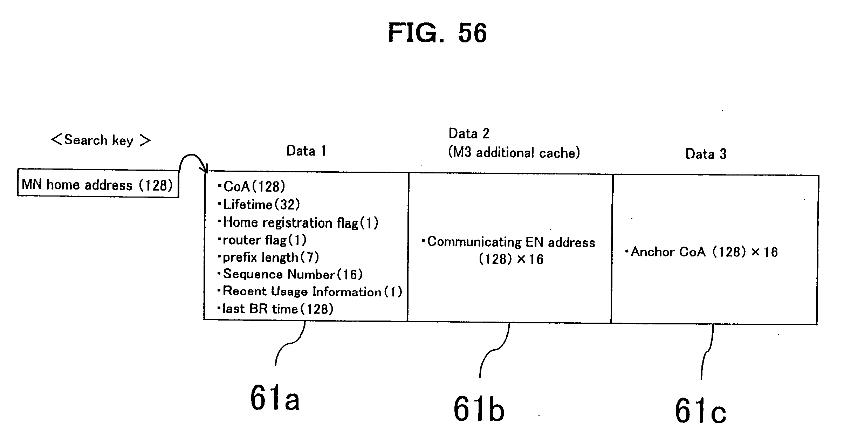

In particular, in this instance, for example, as illustrated in FIG. 56, a data region for recording and managing the "COA upon starting of communication" described above as anchor COA data 61c is added to the "cache" (cache data 61a and communicating EN address data 61b) of the VHA/THA described hereinabove with reference to FIG. 4, and the cache search section 43 is provided with functions equivalent to those of the cache search section 43A in the second embodiment.

It is to be noted that the "current COA" in the VHA/THA is a COA included in the cache data 61a. Further, the anchor COA data 61c mentioned above does not particularly have a relationship to the communicating EN address data 61b and may be provided separately from the cache data 61a and the communicating EN address data 61b. In short, the VHA/THA must only include the cache table 44A (441 or 442) described hereinabove with reference to FIG. 44(B) or 52(B).

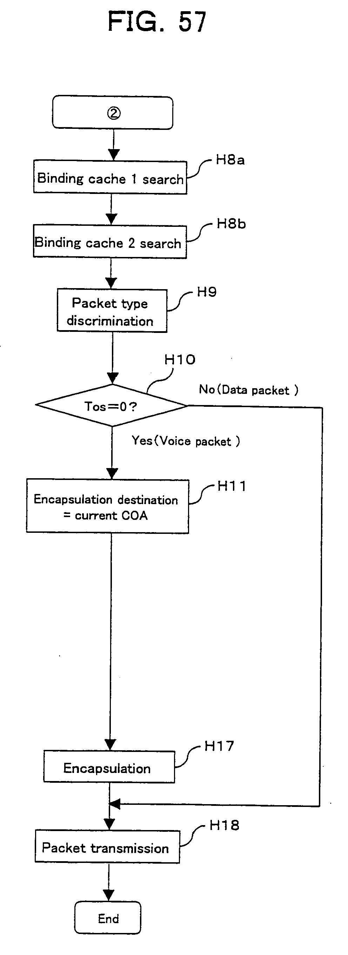

On the other hand, in the EN, the cache search section 43 shown in FIG. 2 additionally has functions as the traffic type identification section 431 and the copy registration section 432 described hereinabove and a bridge section 434 for transferring, where the identified "traffic type" is a VOIP packet, the received packet to the encapsulation processing section 45 so as to be encapsulated similarly as in the first embodiment, but bridging, where the identified "traffic type" is a data packet, the received packet to the router processing section 46 (outgoing path determination section 46b) without encapsulating the same (refer to the No route of step H10 shown in FIG. 57).

It is to be noted that the other operation is similar to that of the router 13' described hereinabove with reference to FIGS. 51 and 52. Naturally, however, it is presupposed that the EN operates similarly to that of the EN of the first embodiment.

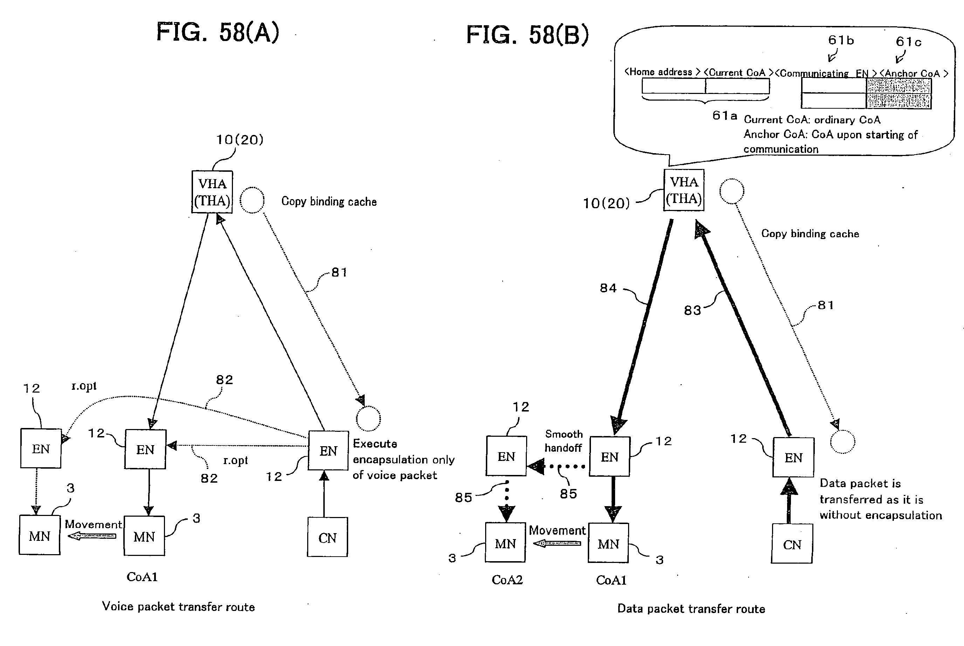

Consequently, as schematically illustrated, for example, in FIG. 58(A), after the EN receives a report of a "cache" from a VHA/THA [refer to a broken line arrow mark 81 of FIGS. 58(A) and 58(B)] as described hereinabove in connection with the first embodiment, if the "traffic type" of a packet received from the opposite terminal CN is a VOIP packet, then the encapsulation processing section 45 normally executes encapsulation similar to that in the first embodiment using the "current COA" and the router processing section 46 executes routing (route optimization) of the received packet to the resident EN in place of the VHA/THA (from the Yes route of step H10 shown in FIG. 57 to step H18).

As a result, a VOIP packet transmitted from the opposite terminal CN is always routed to the resident EN along an optimum route without passing the VHA/THA by the first handover method [refer to a dotted line arrow mark 82 shown in FIG. 58(A)]. Consequently, the packet transfer delay is further reduced when compared with that of the second embodiment described hereinabove, and the voice communication quality upon handover can be maintained high.

On the other hand, if the "traffic type" of a received packet is a data packet, then the cache search section 43 (bridge section 434) brides the received packet as it is to the router processing section 46 without encapsulating the same. Consequently, the router processing section 46 routes the received packet to the VHA/THA (gate node) [from the No route of step H10 to steps H17 and H18; refer to a solid line arrow mark 83 shown in FIG. 58(B)].

The VHA/THA identifies, similarly as in the second embodiment, that the received packet is a data packet and encapsulates the received packet with the "COA upon starting of communication" [COA1 in FIG. 58(B)] so that the received packet may be routed to the EN (anchor point) when the MN started the communication [refer to a solid line arrow mark 84 shown in FIG. 58(B)].

Then, the EN of the anchor point re-encapsulates, similarly as in the second embodiment described hereinabove, the received packet destined for the MN with the "current COA" [COA2 in FIG. 58(B) of the MN registered in accordance with a "smooth handoff instruction" from the MN to execute smooth handoff. Consequently, the packet destined for the MN is delivered to the MN along a route indicated by a dotted line arrow mark 85 in FIG. 58(B) by the second handover method.

As described above, in the present modification, only when a received packet is a packet (for example, a voice packet) which allows some packet loss, the EN (communicating EN) of the system described hereinabove in connection with the first embodiment encapsulates the received packet with a "cache" ("current COA") reported (copied) from the VHA/THA such that it routes the received packet to the resident EN in place of the VHA/THA. Consequently, upon handover of a VOIP packet, route optimization is always performed. Accordingly, when compared with the second embodiment described above, the packet transfer delay is further reduced, and the voice communication quality upon handover can be maintained high.

On the other hand, when the received packet is a data packet, the EN routes the received packet as it is to the VHA/THA without performing encapsulation of the received packet with the "cache" reported from the VHA/THA. Consequently, handover by smooth handoff at the anchor point is realized in a similar manner as in the second embodiment described above. Therefore, the packet loss upon handover while data packet communication continues can be suppressed to the minimum. D3. Third Modification to the Second Embodiment

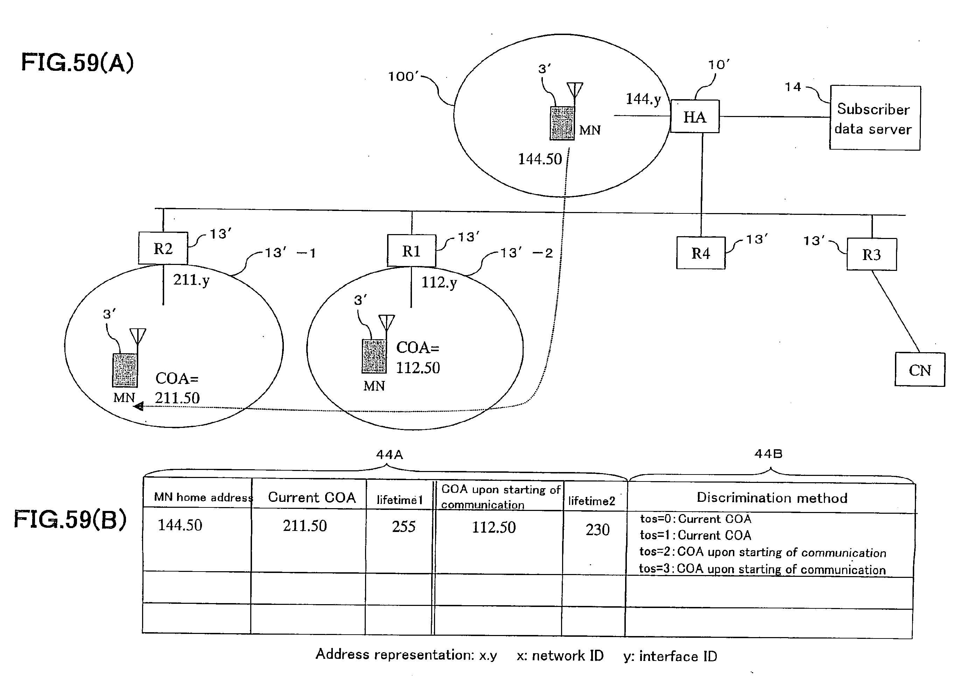

In the following, as a third modification to the second embodiment described above, changeover of the handover method in accordance with a service of an agreement concluded by a subscriber is described with reference to FIGS. 59(A) and 59(B).

In this instance, a user (subscriber) of an MN reports to a carrier (network administrator) or the like information that the user will use information of a changeover service of the handover method (handover condition), for example, the user will use the "current COA" when the tos value = "0" or "1", but use the "COA upon starting of communication" when the tos value = "2" or "3" in accordance with an agreement concluded in advance.

The carrier registers information regarding the handover condition (the information is hereinafter referred to as "handover condition data" or merely as "handover condition") for each subscriber (MN home address), for example, in advance into such a server [such as, for example, an AAA (Authentication, Authorization and Accounting) server; hereinafter referred to as subscriber data server] 14 which manages a service agreement situation, an accounting situation and so forth regarding the subscriber of an MN as subscriber data as illustrated in FIG. 59(A).

Then, the HA downloads, upon production of the cache table 44A or the like, the above-described handover condition data from the subscriber data server 14 and holds, together with the cache table 44A, the downloaded data (handover condition data) 44B (in the present example, handover condition of the subscriber of the MN having the MN home address = 144.50).

Consequently, in the HA, the cache search section 43A can discriminate, upon reception of a packet, based on the handover condition data 44B which one of the "current COA" and the "COA upon starting of communication" should be used to encapsulate the received packet, that is, the cache search section 43A can set a handover method for each subscriber. In particular, in the example illustrated, if the tos value of the received packet destined for the MN is "0" or "1", then the first handover method described hereinabove with reference to FIGS. 47 and 49(A) is executed by the HA. However, if the tos value of the received packet destined for the MN is "2" or "3" , then the second handover method described hereinabove with reference to FIGS. 48 and 49(B) is executed by the HA.

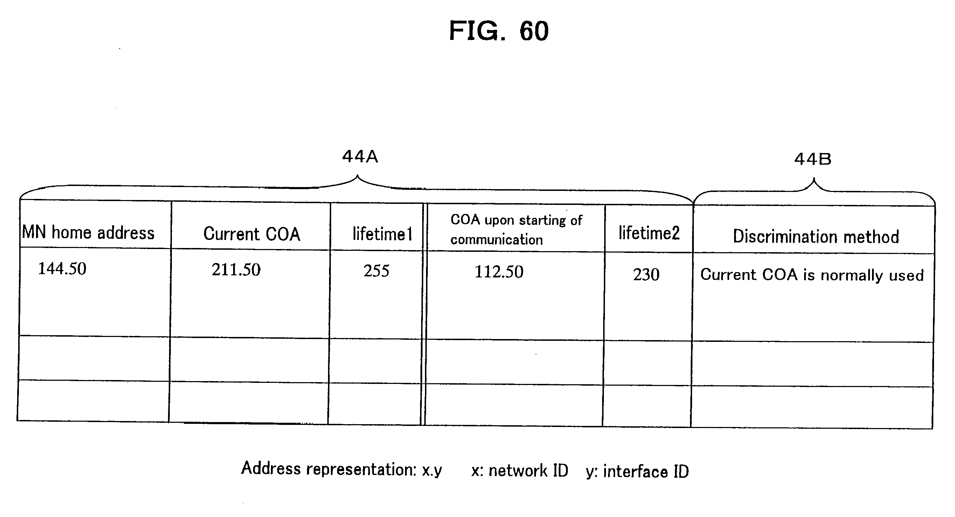

It is to be noted that the handover condition described above can be set or changed suitably in accordance with contract conditions with a subscriber. For example, the condition that "the current COA is normally used" may be set as seen in FIG. 60 such that only the handovermethod for a VOIP packet described hereinabove is always used for packets destined for the MN (MN home address) irrespective of the "traffic type" of them (in short, only a normal Mobile IP function is provided to a subscriber). Conversely, the condition that "the COA upon starting of communication is normally used" may be set such that the handover method for a data packet described hereinabove is always used for packets destined for the MN irrespective of the "traffic type" of them.

As described above, in the present modification, the HA can acquire subscriber data including handover condition data regarding a user of an MN from the subscriber data server 14 which manages such subscriber data, and control the selection of the "current COA" and the "COA upon starting of communication" based on the acquired handover condition data. Consequently, a handover condition can be set for each user of an MN, and finer change of the handover method can be anticipated.

### D4. Fourth Modification to the Second Embodiment

In the second embodiment and the modifications to it described above, changeover of a handover method in accordance with a packet type is applied to a packet network which complies with the normal (non-hierarchical) Mobile-IP or to an M3 network of the first embodiment. Naturally, however, such changeover of a handover method can be applied also to a normal hierarchical Mobile-IP network.

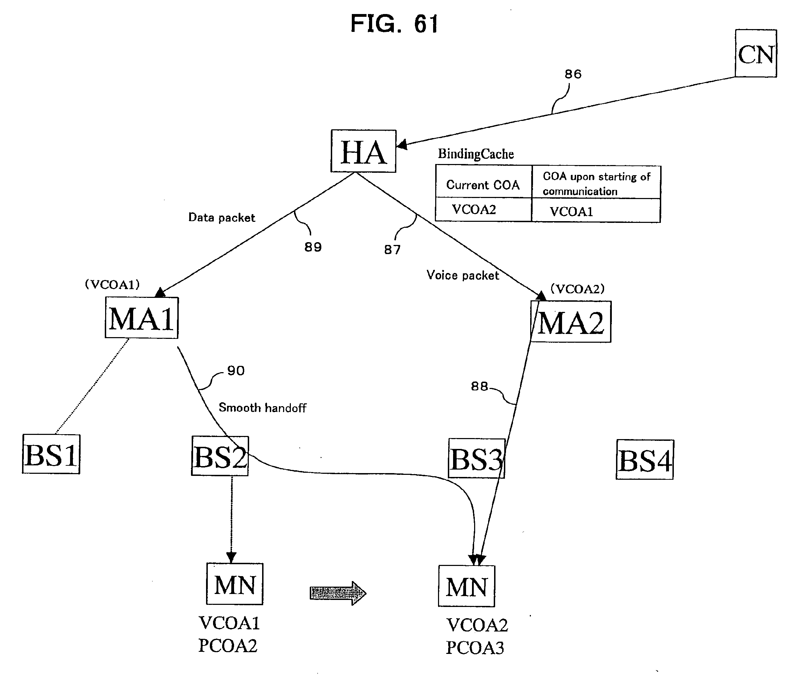

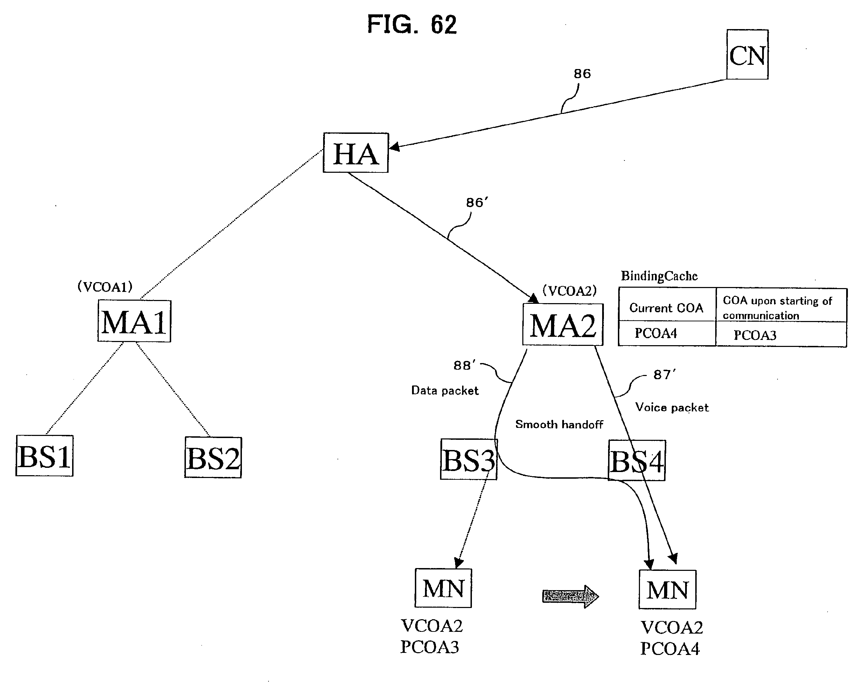

In particular, the changeover of a handover method can be applied by storing, as schematically illustrated in FIGS. 61 and 62, the "COA upon starting of communication" into a component node (HA and/or MA) of a hierarchical packet network and encapsulating a received packet using one of the "current (latest) COA" and the "COA upon starting of communication" in accordance with the "traffic type" of the received packet in a similar manner as described above.

To an MN of a normal hierarchical Mobile-IP network, two different addresses [an address (VCOA) for allowing a packet to arrive at a hierarchical node (MN) and another address (PCOA) for allowing the packet to arrive at the MN from the MA] are allocated, and the "VCOA" is registered into a "binding cache (Binding Cache)" of the HA. The "VCOA" registered in the HA is updated upon handover of the MN crossing hierarchical nodes (MAs).

Accordingly, where the changeover of the handover method described above is applied to an HA of a normal hierarchical Mobile-IP network, the "current VCOA" and the "VCOP upon starting of communication" are held as the "Binding Cache". For example, it is illustrated in FIG. 61 that an MN first establishes a connection to a base station node (routing node) "BS2" controlled by a hierarchical node "MA1" to start communication with an opposite terminal CN (VCOA = VCOA1 , PCOA = PCOA2) and then moves to the resident zone of another base station node "BS3" controlled by another hierarchical node "MA2" while it continues the communication (VCOA = VCOA2, PCOA = PCOA3). In this instance, the HA holds the "VCOA2" as the "current COA" and holds the "VCOA1" as the "COA upon starting of communication".

Consequently, the HA encapsulates a received packet with the "current VCOA (= VCOA2)", for example, if the received packet is a VOIP packet, but encapsulates the received packet with the "VCOA upon starting of communication (= VCOA1)" if the received packet is a data packet thereby to allow changeover of the handover method (packet transfer route) in accordance with the packet type when handover crossing hierarchical nodes (MA1 and MA2) is performed (a VOIP packet follows a packet transfer route indicated by arrow marks 86 to 88 in FIG. 61 whereas a data packet follows another packet transfer route indicated by arrow marks 86, 89 and 90 in FIG. 61).

On the other hand, where the changeover of a similar handover method is applied to a hierarchical node (MA), a "PCOA" with a "VCOA" used as a key is registered as the "Binding Cache" of the MA, and a new "PCOA" is registered (for updating) from the MN upon movement of the MN crossing base station nodes. Therefore, the "current PCOA" and the "PCOA upon starting of communication" may be held as the "Binding Cache" of the MA.

For example, it is illustrated in FIG. 62 that an MN first establishes a connection to a base station node "BS3" to start communication with an opposite terminal CN (VCOA = VCOA2, PCOA = PCOA3) and then moves into the resident zone of another base station node "BS4" while it continues the communication (VCOA = VCOA2, PCOA = PCOA4). In this instance, the HA holds the "PCOA4" as the "current COA" and holds the "PCOA3" as the "COA upon starting of communication".

Consequently, the HA encapsulates a received packet with the "current PCOA (= PCOA4)", for example, if the received packet is a VOIP packet, but encapsulates the received packet with the "PCOA upon starting of communication (= PCOA3)" if the received packet is a data packet thereby to allow changeover of the handover method (packet transfer route) in accordance with the packet type when handover crossing base station nodes (BS3 and BS4) is performed (a VOIP packet follows a packet transfer route indicated by arrow marks 86, 86' and 87' in FIG. 62 whereas a data packet follows another packet transfer route indicated by arrow marks 86, 86' and 88' in FIG. 62).

In this manner, in the present modification, changeover of the optimum handover method in accordance with the traffic type (communication service) of a received packet can be realized in both of an HA and an MA of a normal hierarchical Mobile-IP network. Therefore, also in the normal hierarchical Mobile-IP network, communication which satisfies a plurality of kinds of QoS demanded by users can be realized flexibly similarly as in the second embodiment, and a handover method optimum for a demand of a user can always be provided and the QoS can be improved significantly.

### E. Others

It is to be noted that the "traffic type" in the second embodiment described above can be identified also using the value (decremented every time the node is passed) set in a "hop limit number" (Hop Limit) field 716 (refer to FIGS. 45 and 46) [which corresponds, in the "IPv4", to the TTL (Time To Live) field].

In particular, if the value of the "hop number limit" field 716 (or the TTL field) is decremented to "0" when a packet arrives at the node, then the packet is abandoned at the point of time, and therefore, the handover method is changed so that a packet whose "hop number limit" field 716 (or the TTL field) has a value equal to or lower than a predetermined value may not be abandoned as far as possible, that is, the number of nodes through which the packet may pass may be minimized. This allows packet transfer along an optimum route.

Further, in the second embodiment described above, a voice (VOIP) packet is taken as an example of a packet of a "traffic type" having the characteristic that some packet loss is permitted, and a (ftp) data packet is taken as an example of a packet of another "traffic type" which permits some packet transfer delay. Naturally, however, different packets may be used only if they individually satisfy the characteristics described.

The present invention is not limited to the embodiments and the modifications to them specifically described above, and variations and modifications can be made without departing from the scope of the present invention.

According to another example a method is provided with the following elements:
1) A packet transfer method for a hierarchical packet network (1 or 2) which includes a plurality of edge nodes (12) capable of communicating with a mobile terminal (3) to transmit or receive a packet to or from said mobile terminal (3) and a gate node (VHA or THA) capable of managing current position information of said mobile terminal (3) and routing a packet destined for said mobile terminal (3) based on the current position information to a resident edge node (12) from among said edge nodes (12) with which said mobile terminal (3) can communicate from a current position thereof, characterized in that said gate node (VHA or THA) reports the current position information of said mobile terminal (3) managed by said gate node (VHA or THA) as cache information to a communicating edge node (12) from among said edge nodes (12) which routes a packet destined for said mobile terminal (3) to said gate node (VHA or THA), and
   the communicating edge node (12) performs routing of a packet destined for said mobile terminal (3) to the resident edge node (12) based on the cache information in place of said gate node (VHA or THA).
2) A packet transfer method for a hierarchical packet network as set forth in 1), characterized in that each of said edge nodes (12) transmits report information at least including gate node identification information of said gate node (VHA or THA) in which the edge node (12) is accommodated and network identification information of said hierarchical packet network (1 or 2) to said mobile terminal (3), and, even if the gate node identification information included in the report information exhibits a change upon movement of said mobile terminal (3) itself, said mobile terminal (3) maintains a destination of registration of the current position information of said mobile terminal (3) itself at said gate node (VHA or THA) if the network identification information does not exhibit a change upon the movement of said mobile terminal (3) itself.
3) A packet transfer method for a hierarchical packet network as set forth in 2), characterized in that said gate node (VHA or THA) updates the cache information of the communicating edge node (12) based on new current position information reported from said mobile terminal (3) upon movement of said mobile terminal (3), and the communicating edge node (12) routes a packet destined for said mobile terminal (3) to a new resident edge node (12) based on the updated cache information in place of said gate node (VHA or THA).
4) A packet transfer method for a hierarchical packet network as set forth in 1), characterized in that, when the communicating edge node (12) tries to route a packet destined for said mobile terminal (3) to said gate node (VHA or THA), if the cache information is not available, then the communicating edge node (12) requests said gate node (VHA or THA) for the cache information.
5) A packet transfer method for a hierarchical packet network as set forth in 4), characterized in that, when said gate node (VHA or THA) receives the request for the cache information, said gate node (VHA or THA) reports the cache information to the communicating edge node (12) of the source of the request.
6) A packet transfer method for a hierarchical packet network as set forth in 3), characterized in that said gate node (VHA or THA) stores identification information of the communicating edge node (12) and carries out, when said gate node (VHA or THA) receives a report of new current position information from said mobile terminal (3) upon movement of said mobile terminal (3), updating of the cache information in the communicating edge node (12) identified with the identification information of the communicating edge node (12) based on the new current position information.
7) A packet transfer method for a hierarchical packet network as set forth in any one of 1) to 6), characterized in that the communicating edge node (12) refreshes a lifetime of the cache information every time a packet destined for said mobile terminal (3) is received.
8) A packet transfer method for a hierarchical packet network as set forth in 4), characterized in that, when the communication comes to an end and a term of the cache information expires, the communicating edge node (12) issues a request for deletion of the identification information of the communicating edge node (12) managed by said gate node (VHA or THA) to said gate node (VHA or THA), and, upon reception of the request for deletion, said gate node (VHA or THA) deletes the identification information of the communicating edge node (12).
9) A packet transfer method for a hierarchical packet network as set forth in 2), characterized in that, even if the network identification information included in the report information does not exhibit a change, if the gate node identification information exhibits a change in a predetermined additional condition, then said mobile terminal (3) changes the registration destination of the current position information of said mobile terminal (3) itself to another gate node (VHA or THA) of said hierarchical packet network (1 or 2) which is identified with gate node identification information after the change.
10) A packet transfer method for a hierarchical packet network as set forth in 9), characterized in that said mobile terminal (3) supervises, after each lapse of a fixed period, whether or not the gate node identification information included in the report information exhibits a change and carries out the change of the gate node (VHA or THA) if the gate node identification information exhibits a change when the fixed period elapses as the additional condition.
11) A packet transfer method for a hierarchical packet network as set forth in 9), characterized in that said mobile terminal (3) carries out the change of the gate node (VHA or THA) if the gate node identification information exhibits a change while said mobile terminal (3) is not communicating as the additional condition.
12) A packet transfer method for a hierarchical packet network as set forth in 11), characterized in that said mobile terminal (3) supervises a communication traffic amount of said mobile terminal (3) itself and carries out the change of the gate node (VHA or THA) if the gate node identification information exhibits a change when the communication traffic amount is equal to or smaller than a predetermined amount as the additional condition.
13) A packet transfer method for a hierarchical packet network as set forth in 9), characterized in that said mobile terminal (3) identifies a data traffic type during communication and carries out the change of the gate node (VHA or THA) if the gate node identification information exhibits a change when the identified data traffic type is a particular data traffic type as the additional condition.
14) A packet transfer method for a hierarchical packet network as set forth in 9), characterized in that said mobile terminal (3) supervises a used state of an application or applications for use for communication and carries out the change of the gate node (VHA or THA) if the gate node identification information exhibits a change when the application or applications are not used as the additional condition.
15) A packet transfer method for a hierarchical packet network as set forth in 9), characterized in that said mobile terminal (3) carries out the change of the gate node (VHA or THA) if the gate node identification information exhibits a change in a combination condition specified by a combination of arbitrary ones of conditions that a fixed period elapses, that no communication is proceeding, that a communication traffic amount is equal to or smaller than a predetermined amount, that a data traffic type during communication is a particular data traffic type and that an application for use for communication is not used.

According to another example a hierarchical packet communication system is provided with the following elements:
16) A hierarchical packet communication system which includes a plurality of edge nodes (12) capable of communicating with a mobile terminal (3) to transmit or receive a packet to or from said mobile terminal (3) and gate node (VHA or THA) capable of managing current position information of said mobile terminal (3) and routing, based on the current position information, a packet destined for said mobile terminal (3) to a resident edge node (12) from among said edge nodes (12) with which said mobile terminal (3) can communicate from a current position thereof, characterized in that said mobile terminal (3) includes current position registration means (34) for reporting position information based on identification information of the resident edge node (12) as the current position information of said mobile terminal (3) to a particular one of said gate nodes (VHA or THA) to register the position information into the particular gate node (VHA or THA), that said gate node (VHA or THA) includes terminal position management means (44, 49 and 52) for managing the current position information reported by said current position registration means (34) of said mobile terminal (3), and cache information reporting means (524, 527) for reporting the current position information managed by said terminal position management means (44, 49 and 52) as cache information to a communicating edge node (12) from among said edge nodes (12) which routes a packet destined for said mobile terminal (3) to the gate node (VHA or THA), and that each of said edge nodes (12) includes cache means (44) for holding the cache information reported by said cache information reporting means (524, 527) of said gate node (VHA or THA), and routing means (46) for carrying out routing of a packet destined for said mobile terminal (3) to the resident edge node (12) based on the cache information held in said cache means (44) in place of said gate node (VHA or THA).
17) A hierarchical packet communication system as set forth in 16), characterized in that each of said edge nodes (12) includes a report information transmitting means (54) for transmitting report information at least including gate node identification information of said gate node (VHA or THA) in which the edge node (12) is accommodated and network identification information of said hierarchical packet network (1 or 2) to said mobile terminal (3), and said current position registration means (34) of said mobile terminal (3) includes report information reception means (34A) for receiving the report information, gate node identification information supervision means (342) for supervising whether or not the gate node identification information included in the report information received by said report information reception means (34A) exhibits a change, network identification information supervision means (342) for supervising whether or not the network identification information included in the report information exhibits a change, and current position reporting means (343) for reporting the current position information of said mobile terminal (3) itself to the gate node (VHA or THA) if said network identification information supervision means (342) does not detect a change of the network identification information even if said gate node identification information supervision means (342) detects a change of the gate node identification information.
18) A hierarchical packet communication system as set forth in 17), characterized in that said gate node (VHA or THA) further includes cache information updating means (524) for updating the cache information of the communicating edge node (12) based on current position information reported newly from said mobile terminal (3) by said current position reporting means (343) upon movement of said mobile terminal (3), and said routing means (46) of each of said edge nodes (12) routes a packet destined for said mobile terminal (3) to a new resident edge node (12) based on the cache information updated by said cache information updating means (524) in place of said gate nodes (VHA or THA).
19) A hierarchical packet communication system as set forth in 16), characterized in that each of said edge nodes (12) further includes cache information requesting means (528) for requesting, if the cache information is not available in said cache means (44) when the communicating edge node (12) tries to route a packet destined for said mobile terminal (3) to the gate node (VHA or THA), the gate node (VHA or THA) for the cache information.
20) A hierarchical packet communication system as set forth in 19), characterized in that said cache information reporting means (527) of the gate node (VHA or THA) reports, when the gate node (VHA or THA) receives the request for the cache information from said cache information requesting means (528) of the edge node (12), the cache information to the edge node (12) of the source of the request.
21) A hierarchical packet communication system as set forth in 18), characterized in that said gate node (VHA or THA) further includes node identification information holding means (44) for holding identification information of the communicating edge node (12), and said cache information updating means (524) carries out, when the report of the new current position information is received, updating of the cache information in that one of said edge nodes (12) which is identified with the identification information held in said node identification information holding means (44).
22) A hierarchical packet communication system as set forth in 21), characterized in that said node identification information holding means (44) is capable of holding identification information of a plurality of ones of said communicating edge nodes (12).
23) A hierarchical packet communication system as set forth in any one of 16) to 22), characterized in that each of said edge nodes (12) includes refreshment means (43) for refreshing a lifetime of the cache information held in said cache information holding means (44) every time a packet destined for said mobile terminal (3) is received.
24) A hierarchical packet communication system as set forth in 21) or 22), characterized in that the communicating edge node (12) includes node identification information deletion requesting means (527) for issuing, when the communication comes to an end and a term of the cache information expires, a request for deletion of the identification information of the communicating edge node (12) itself to the gate node (VHA or THA), and the gate node (VHA or THA) includes node identification information deletion means (521) for deleting, when the request for deletion from said node identification information deletion requesting means (527) is received, the identification information of the communicating edge node (12) held in said node identification information holding means (44).
25) A hierarchical packet communication system as set forth in 17), characterized in that said gate node identification information supervision means (342) of said mobile terminal (3) is formed as conditional supervision means for detecting whether or not the gate node identification information exhibits a change in a predetermined additional condition, and said current position reporting means (343) includes conditional reporting means for reporting, if said conditional supervision means detects a change of the gate node identification information in the additional condition, the current position information of said mobile terminal (3) itself to another gate node (VHA or THA) which is identified with the gate node identification information after the change even if said gate node identification information supervision means (342) does not exhibit a change of the network identification information.

According to another example a gate node is provided with the following elements:
26) A gate node (VHA or THA) which cooperates with a plurality of edge nodes (12) capable of communicating with a mobile terminal (3) to transmit or receive a packet to or from said mobile terminal (3) to form a hierarchical packet communication system and is capable of managing current position information of said mobile terminal (3) and routing, based on the current position information, a packet destined for said mobile terminal (3) to a resident edge node (12) from among said edge nodes (12) with which said mobile terminal (3) can communicate from a current position thereof, characterized in that it comprises: terminal position management means (44, 49 and 52) for managing position information reported as the current position information of said mobile terminal (3) from said mobile terminal (3) and based on identification information of the resident edge node (12); and cache information reporting means (524, 527) for reporting the current position information managed by said terminal position management means (44, 49 and 52) as cache information to that one of said edge nodes (12) which routes a packet destined for said mobile terminal (3) to said gate node (VHA or THA).

According to another example an edge node is provided with the following elements:
27) An edge node (12) which cooperates with another edge node or nodes (12) and a gate node (VHA or THA) to form a hierarchical packet communication system, each of said edge nodes (12) being capable of communicating with a mobile terminal (3) to transmit or receive a packet to or from said mobile terminal, said gate node (VHA or THA) being capable of managing current position information of said mobile terminal (3) and routing, based on the current position information, a packet destined for said mobile terminal (3) to a resident edge node (12) from among said edge nodes (12) with which said mobile terminal (3) can communicate from a current position thereof, characterized in that characterized in that it comprises: cache means (44) for receiving and holding the position information managed by said gate node (VHA or THA) and based on identification of the resident edge node (12) as cache information; and routing means (46) for carrying out routing of a packet destined for said mobile terminal (3) to the resident edge node (12) based on the cache information held in said cache means (44) in place of said gate node (VHA or THA).

According to another example a mobile terminal is provided with the following elements:
28) A mobile terminal for use with a hierarchical packet communication system which includes a plurality of edge nodes (12) capable of communicating with said mobile terminal (3) to transmit or receive a packet to or from said mobile terminal (3) and a gate node (VHA or THA) each capable of managing current position information of said mobile terminal (3) and routing, based on the current position information, a packet destined for said mobile terminal (3) to a resident edge node (12) from among said edge nodes (12) with which said mobile terminal (3) can communicate from a current position thereof, characterized in that it comprises: report information reception means (34A) for receiving report information at least including gate node identification information of said gate node (VHA or THA) in which the resident edge node (12) is accommodated and network identification information of said hierarchical packet network from the resident edge node (12); and current position registration means (34) for maintaining, even if the gate node identification information included in the report information received by said report information reception means (34A) exhibits a change upon movement of said mobile terminal (3), a registration destination of the current position information of said mobile terminal (3) at said gate node (VHA or THA) if the network identification information does not exhibit a change upon the movement of said mobile terminal (3).

According to another example a handover method is provided with the following elements:
40) A handover method for a hierarchical packet network (1 or 2) which includes a plurality of routing nodes (12) capable of communicating with a mobile terminal (3) to transmit or receive a packet to or from said mobile terminal (3) and a gate node (VHA or THA) capable of managing current position information of said mobile terminal (3) and routing, based on the current position information, a packet destined for said mobile terminal (3) to a resident node (12) from among said routing nodes (12) with which said mobile terminal (3) can communicate from a current position thereof, characterized in that said gate node (VHA or THA) reports the current position information of said mobile terminal (3) managed by said gate node (VHA or THA) as cache information to a communicating node (12) from among said routing nodes (12) which routes a packet destined for said mobile terminal (3) to said gate node (VHA or THA), and the communicating node (12) identifies a packet type of a received packet destined for said mobile terminal (3), and if a result of the identification reveals that the received packet is of a packet type which has a characteristic that packet loss is permitted, then the communicating node (12) routes the received packet to the resident node (12) based on the cache information reported from said gate node (VHA or THA) in place of said gate node (VHA or THA).
41) A handover method for a hierarchical packet network as set forth in 40), characterized in that, if the result of the identification of the packet type reveals that the received packet is of another packet type which has another characteristic that packet transfer delay is permitted, then the communicating node (12) routes the received packet to said gate node (VHA or THA).

According to another example a routing node is provided with the following elements:
47) A routing node which cooperates with another routing node or nodes (12) and a gate node (VHA or THA) to form a hierarchical packet network, each of said routing nodes (12) being capable of communicating with a mobile terminal (3) to transmit or receive a packet to or from said mobile terminal (3), said gate node (VHA or THA) being capable of managing current position information of said mobile terminal (3) and routing, based on the current position information, a packet destined for said mobile terminal (3) to a resident node (12) from among said routing nodes (12) with which said mobile terminal (3) can communicate from a current position thereof, characterized in that it comprises: cache means (44) for receiving the current position information of said mobile terminal (3) managed by said gate node (VHA or THA) as cache information from said gate node (VHA or THA) and holding the cache information; packet type identification means (431) for identifying a packet type of a received packet destined for said mobile terminal (3); and
   routing means (46) for routing, if a result of the identification by said packet type identification means (431) reveals that the packet type is a packet type which has a characteristic that packet loss is permitted, the received packet to the resident node (12) based on the cache information of said cache means (44) in place of said gate node (VHA or THA).
48) A routing node as set forth in 47), characterized in that, if the result of the identification by said packet type identification means (431) reveals that the received packet is of another packet type which has another characteristic that packet transfer delay is permitted, then said routing means (46) routes the received packet to said gate node (VHA or THA).

## Claims

1. A handover method for a packet network (1'), which includes a mobile terminal (3') and a plurality of routing nodes (10', 13'), for changing a packet transfer route to said mobile terminal (3') upon movement of said mobile terminal (3'), **characterized in that**
a particular node (10') from among said routing nodes (10', 13') manages a plurality of kinds of terminal position information involved in the movement of said mobile terminal (3'), and
the particular node (10') identifies a packet type of a received packet destined for said mobile terminal (3'), selects one of the plurality of kinds of terminal position information in response to the identified packet type, and routes the received packet based on the selected terminal position information.

2. A handover method for a packet network as set forth in 1, **characterized in that**
the particular node (10') manages current position information of said mobile terminal (3') and position information upon starting of communication of said mobile terminal (3') as the plurality of kinds of terminal position information, and selects the current position information of said mobile terminal (3') as the terminal position information if the identified packet type is a packet type which has a characteristic that packet loss is permitted, but selects the position information upon starting of communication of said mobile terminal (3') as the terminal position information if the identified packet type is another packet type which has another characteristic that packet transfer delay is permitted.

3. A handover method for a packet network as set forth in claim 2, **characterized in that** the particular node (10') stores information regarding a lifetime of the position information upon starting of communication and refreshes the information regarding the term every time the received packet is received.

4. A handover method for a packet network as set forth in claim 3, **characterized in that** the particular node (10') deletes the position information upon starting of communication when the lifetime expires.

5. A handover method for a packet network as set forth in claim 2, **characterized in that** said mobile terminal (3') successively issues a smooth handoff instruction to that one (13') of said routing nodes (10', 13') to which said mobile terminal (3') was connected during communication while a packet of the packet type which has the characteristic that packet transfer delay is permitted is successively received through routing of the received packet by the particular node (10') .

6. A handover method for a packet network as set forth in claim 2, **characterized in that** the particular node (10') manages the position information upon starting of communication for each of a plurality of received packets at least having different transmission source addresses from each other.

7. A handover method for a packet network as set forth in claim 1, **characterized in that** the particular node (10') performs the identification of the packet type based on a value set in a type-of-service field included in a header of the received packet.

8. A handover method for a packet network as set forth in claim 1, **characterized in that**
one of said routing nodes (10', 13') which receives a packet flowing into said packet network (1') and destined for said mobile terminal (3') sets information corresponding to the packet type of the packet as packet type identification information to the packet and routes the packet to the particular node (10'), and
the particular node (10') performs the identification of the packet type based on the packet type identification information set in the packet.

9. A handover method for a packet network as set forth in claim 1, **characterized in that** the particular node (10') acquires subscriber data including handover condition information regarding a user of said mobile terminal (3') from a subscriber data management node (14) which manages the subscriber data, and controls the selection of the terminal position information based on the handover condition information.

10. A handover method for a packet network as set forth in claim 1, **characterized in that** the particular node (10') is a home agent node which manages the position information of said mobile terminal (3') whose home network is said packet network (1').

11. A handover method for a packet network as set forth in claim 1, **characterized in that** the particular node (10') is a gate node (MA) for configuring said packet network (1') as a hierarchical network.

12. A routing node which cooperates with a mobile terminal (3') and another routing node or nodes (13') to form a packet network (1') and is capable of changing a packet transfer route to said mobile terminal (3') upon movement of said mobile terminal (3'), **characterized in that** it comprises:
terminal position management means (44A, 49A and 52A) for managing a plurality of kinds of terminal position information involved in the movement of said mobile terminal (3');
packet type identification means (431) for identifying a packet type of a received packet destined for said mobile terminal (3');
selection means (433) for selecting one of the plurality of kinds of terminal position information managed by said terminal position management means (44A, 49A and 52A) in accordance with the packet type identified by said packet type identification means (431); and
routing means (46) for routing the received packet based on the terminal position information selected by said selection means (433).

13. A routing node as set forth in claim 12, **characterized in that**
said terminal position management means (44A, 49A and 52A) includes a position information holding section (44A-1) for holding current position information of said mobile terminal (3') and position information upon starting of communication of said mobile terminal (3') as the plurality of kinds of terminal position information, that
said packet type identification means (431) is formed as a packet loss/transfer delay characteristic identification for identifying the packet type of the received packet at least between a packet type which has a characteristic that packet loss is permitted and another packet type which has another characteristic that packet transfer delay is permitted, and that
said selection means (433) is formed as a terminal position information selection which selects the current position information of said mobile terminal (3') in said position information holding section (44A-1) as the terminal position information if the packet type identified by said packet loss/transfer delay characteristic identification section is the packet type which has the characteristic that packet loss is permitted, but selects the position information upon starting of communication of said mobile terminal (3') in said position information holding section (44A-1) as the terminal position information if the packet type identified by said packet loss/transfer delay characteristic identification section is the packet type which has the characteristic that packet transfer delay is permitted.

14. A routing node as set forth in claim 13, **characterized in that** said terminal position management means (44A, 49A and 52A) further includes
a lifetime information storage section (44A-2) for storing information regarding a lifetime of the position information upon starting of communication, and
a lifetime refreshment section (491) for refreshing the information regarding the lifetime every time the received packet is received.

15. A routing node as set forth in claim 14, **characterized in that** said terminal position management means (44A, 49A and 52A) further includes a position information deletion section (492) for deleting the position information upon starting of communication when the lifetime expires.

16. A routing node as set forth in claim 13, **characterized in that** said position information holding section (44A-1) of said terminal position management means (44A, 49A and 52A) holds the position information upon starting of communication for each of a plurality of received packets at least having different transmission source addresses from each other.
